# EUROPÄISCHE PATENTSCHRIFT

(11) **EP 3 967 561 B1**
(45) Veröffentlichungstag und Bekanntmachung des Hinweises auf die Patenterteilung: **30.10.2024**
(21) Anmeldenummer: 20195774.3
(22) Anmeldetag: 11.09.2020
(51) Int. Cl.: B60T 7/20, B60T 13/26, B60T 13/66, B60T 13/68, B60T 15/60

(54) **NUTZFAHRZEUGANHÄNGER-DRUCKLUFTANLAGE**
COMMERCIAL VEHICLE TRAILER COMPRESSED AIR SYSTEM
ÉQUIPEMENT D'AIR COMPRIMÉ DE REMORQUE DE VÉHICULE UTILITAIRE

(43) Veröffentlichungstag der Anmeldung: 16.03.2022
(73) Patentinhaber: Haldex Aktiebolag, 261 24 Landskrona (SE)
(72) Erfinder: Heer, Siegfried, 69168 Wiesloch (DE)
(74) Vertreter: Müller Schupfner & Partner Patent- und Rechtsanwaltspartnerschaft mbB (Muc)

(56) Entgegenhaltungen:
- EP-A1- 2 757 010
- EP-A2- 2 567 874
- EP-B1- 2 757 010
- WO-A1-00/30912
- DE-A1- 102007 053 764

## Beschreibung

### TECHNISCHES GEBIET DER ERFINDUNG

Die Erfindung betrifft eine Nutzfahrzeuganhänger-Druckluftanlage, mittels welcher (neben weiteren Funktionen) die Gewährleistung einer Betriebsbremsfunktion sowie einer Parkbremsfunktion erfolgt. Hierbei kann die Nutzfahrzeuganhänger-Druckluftanlage für einen beliebigen Anhänger eines Nutzfahrzeugs verwendet werden, wobei dieser Anhänger und damit die Nutzfahrzeuganhänger-Druckluftanlage mit dem Zugfahrzeug über pneumatische Anschlüsse wie einen Kupplungskopf Bremse und einen Kupplungskopf Vorrat gekoppelt sein kann und möglich ist, dass eine zusätzliche elektrische Kopplung erfolgt.

### STAND DER TECHNIK

DE 10 2017 118 529 B4 beschreibt eine Anhänger-Bremssteuereinheit, die als eine Baueinheit ausgebildet ist. In diese Baueinheit ist eine elektronisch gesteuerte Modulator-Ventileinrichtung integriert, die dazu dient, einen zur Vermeidung eines Blockierens der Fahrzeugräder modulierten Betriebsbremsdruck zu erzeugen, mit dem dann die Betriebsbremsen des Anhängers beaufschlagt werden. Des Weiteren ist in die Baueinheit eine Federspeicherbrems-Ventileinrichtung integriert, welche einen Federspeicherbremsdruck erzeugt, der für eine Federspeicherbremse bestimmt ist. Hierbei ist der Federspeicherbremsdruck abhängig von dem Bremssteuerdruck, einem Vorratsleitungsdruck, einer elektronischen Ansteuerung und einem von einem Benutzer vorgegebenen pneumatischen oder elektrischen Signal. Der von der Modulator-Ventileinrichtung erzeugte modulierte Betriebsbremsdruck einerseits und der von der Federspeicherbrems-Ventileinrichtung erzeugte Federspeicherbremsdruck werden jeweils einem Eingang eines als Wechselventil ausgebildeten Anti-Compound-Ventils zugeführt, dessen Ausgang mit den Federspeicherbremszylindern des Anhängers verbunden ist. DE 10 2017 118 529 B4 schlägt vor, dass mit der Federspeicherbrems-Ventileinrichtung eine Federspeicherbremsfunktion ausgeführt werden soll. Beispielhaft werden dabei die folgenden Federspeicherbremsfunktionen genannt:
- Möglich ist, dass die Federspeicherbremsfunktion eine Parkfunktion ist, mittels welcher der Benutzer willkürlich über die Federspeicherbremsen eine Parkbremse betätigen und lösen kann. Hierbei kann der Benutzer beispielsweise die Parkfunktion über einen manuell betätigten Ventilschieber steuern, der dann unmittelbar die Parkfunktion herbeiführen oder eine Vorsteuerung herbeiführen kann. Ebenfalls möglich ist, dass der Benutzer die Parkfunktion über einen elektrischen Signalgeber wie einen elektrischen Schalter oder über ein Smartphone steuert.
- Des Weiteren kann die Federspeicherbremsfunktion eine Löse- oder Rangierfunktion sein. Hierunter wird eine Belüftung einer Federspeicherbremse infolge einer Vorgabe durch den Benutzer verstanden. Mittels der Löse- oder Rangierfunktion ist es möglich, dass der Anhänger-Bremssteuereinheit Druckluft zugeführt wird, wenn an einem Versorgungsanschluss der Anhänger-Bremssteuereinheit kein Druck anliegt, was insbesondere für abgekuppelten Anhänger der Fall ist, um ein Rangieren des Anhängers zu ermöglichen. Hierbei kann die Vorgabe durch den Benutzer durch Betätigung eines Ventilschiebers erfolgen oder durch Betätigung eines elektrischen Signalgebers wie eines elektrischen Schalters.
- Möglich ist, dass die Federspeicherbremsfunktion eine automatische Parkbrems-Lösefunktion ist. Unter einer Parkbrems-Lösefunktion wird hier eine automatisch durch eine elektronische Steuereinheit herbeigeführte Belüftung der Federspeicherbremsen verstanden, mit welcher der Anhänger für einen bevorstehenden oder bereits initiierten Fahrbetrieb mit einer sich von Null erhöhenden Fahrgeschwindigkeit vorbereitet wird. Die Parkbrems-Lösefunktion findet insbesondere dann Einsatz, wenn der Fahrer bei einem Fahrbeginn vergessen hat, manuell die Federspeicherbremsen des Anhängers zu lösen.
- Möglich ist, dass die Federspeicherbremsfunktion eine "Schubvermeidungsfunktion" ist, bei der eine automatische Betätigung der Federspeicherbremsen durch eine elektronische Steuereinheit erfolgt, wenn die elektronische Steuereinheit detektiert, dass sich der Antriebsstrang des Zugfahrzeugs in einem Schubbetrieb befindet, so dass an dem Zugfahrzeug eine Bremswirkung durch den Antriebsstrang erzeugt wird, ohne dass der Benutzer eine Betriebsbremse oder Federspeicherbremse betätigt. Mittels der Schubvermeidungsfunktion kann ein Auflaufen des Anhängers auf das Zugfahrzeug vermieden werden.
- Die Federspeicherbremsfunktion kann auch eine "Notbremsfunktion" sein. Mittels der Notbremsfunktion wird bei einem Abfall eines an einem Versorgungsanschluss der Anhänger-Bremssteuereinheit anliegenden Drucks eine Entlüftung der Federspeicherbremse herbeigeführt, so dass eine Notbremsung des Anhängers über die Federspeicherbremse erfolgt.
- Die Federspeicherbremsfunktion kann eine Override-Funktion sein, mittels welcher eine Ausführung der zuvor erläuterten Notbremsfunktion von einem weiteren Kriterium wie einer Betriebsgröße oder einem Druck abhängig gemacht wird. Mittels der OverrideFunktion wird somit trotz eines Abfalls des Drucks an einem Versorgungsanschluss der Anhänger-Bremssteuereinheit temporär eine Entlüftung der Federspeicherbremse verhindert, bis beispielsweise ein Druck in einem Behälter der Betriebsbremse einen Schwellwert unterschreitet, für den noch eine geregelte (Not-)Bremsung über die Betriebsbremse (unter Umständen auch mit einer Antiblockierfunktion) möglich ist. Die Notbremsfunktion über die Federspeicherbremse wird somit verzögert und nur in tatsächlich eine Notbremsung gebietenden Betriebssituationen durchgeführt.
- Die Federspeicherbremsfunktion kann eine "Federspeicher-Immobilisierfunktion" sein, die ein Lösen der Federspeicherbremsen nur dann ermöglicht, wenn zuvor eine Authentifizierung erfolgt ist. Die Federspeicherbremse-Immobilisierfunktion kann auch über ein Mobiltelefon, welches mit der Anhänger-Bremssteuereinheit kommuniziert, aktiviert werden, wenn der Anhänger gestohlen worden ist. Eine Authentifizierung kann über eine Eingabe eines Pins in eine Eingabeeinrichtung der Fahrerkabine oder an anderer Stelle des Nutzfahrzeugs oder des Anhängers erfolgen oder durch Durchführung einer Authentifizierungssequenz wie die Durchführung einer Betätigung einzelner Bedienelemente des Fahrzeugs wie von Pedalen oder des Zündschlüssels in einer vorbestimmten Reihenfolge oder die Authentifizierung kann über ein Mobiltelefon erfolgen.
- Die Federspeicherbremsfunktion kann eine "geregelte Federspeicherbremsfunktion" sein. Hierunter wird eine Regelung des erzeugten Drucks in der Federspeicherbremskammer verstanden, welche zu einer Reduzierung eines Schlupfs zwischen einem der Federspeicherbremse zugeordneten Fahrzeugrad und einer Fahrbahn führt, und/oder eine Verhinderung eines Blockierens des Fahrzeugrads infolge einer Betätigung der Federspeicherbremse gewährleisten soll, womit eine Antiblockierfunktion in die Federspeicherbremse integriert werden kann.
- Die Federspeicherbremsfunktion kann eine "automatische Parkventil-Betätigungsfunktion" sein. Mittels der automatischen Parkventil-Betätigungsfunktion sollen funktionelle Einbußen und Gefahrensituationen vermieden werden, die dadurch entstehen, dass der Fahrer vergisst, in einer Parksituation ein Parkventil zu betätigen. Mit der automatischen Parkventil-Betätigungsfunktion erfolgt eine automatische Überführung eines Parkventils der Feststellbrems-Ventileinrichtung in eine Parkstellung, insbesondere wenn ein Druck in einer Vorratsleitung abfällt, was insbesondere der Fall sein kann, wenn ein Abkuppeln des Anhängers von dem Zugfahrzeug erfolgt.
- Die Federspeicherbremsfunktion kann eine "benutzergesteuerte Federspeicherbremsfunktion" sein, mit der Fahrer dosiert in einer beliebigen Zahl von Stufen oder stufenlos die Federspeicherbremse betätigen kann, um unabhängig von einer Betätigung eines Bremspedals und von der Betriebsbremse eine dosierte Bremswirkung über die Federspeicherbremse herbeizuführen.
- Möglich ist, dass die Federspeicherbremsfunktion eine "Streckbremsfunktion" ist, mit der der aus dem Zugfahrzeug und dem Anhänger bestehende Nutzfahrzeugzug in einem gestreckten Zustand gehalten wird, um eine Querstellung des Anhängers und eine sogenannte unerwünschte Klappmesserbewegung zu vermeiden.

Beliebige elektrische, pneumatische oder elektropneumatische Komponenten und Teil-Baueinheiten können in die Baueinheit der Anhänger-Bremssteuereinheit integriert werden. Hierbei kann es sich um ein Rückschlagventil zur Sicherung eines Drucks an einem Behälteranschluss, ein Anti-Compound-Ventil, ein Schnellentlüftungsventil, ein Handbetätigungsventil oder Ventile handeln, die seitens der Anmelderin unter den Kennzeichnungen TEM, TrCM, TrCM+ (mit der Funktion "save parking") vertrieben werden. Ein Rangierventil und/oder ein Parkventil sollen dabei entweder nicht vorhanden sein oder als separate Ventile ausgebildet sein, die dann an anderer Stelle in dem Fahrzeug platziert werden sollen.

EP 2 121 395 B2 offenbart eine Anhängerbremsanlage, bei der ein Parkventil und ein Rangierventil in eine Baueinheit integriert sind. Der von dieser Baueinheit erzeugte Druck wird Federspeicherbremsen über ein als Wechselventil ausgebildetes Anti-Compound-Ventil zugeführt, dessen anderem Eingang der Druck zugeführt wird, der von einer EBS-Steuereinheit für die Betriebsbremsen des Anhängers ausgesteuert wird. In einer Verbindungsleitung zwischen einem Vorratsbehälter für die Betriebsbremsen und einem Vorratsbehälter für eine Luftfederung ist hier ein Überströmventil angeordnet, welches der Sicherung des Drucks in der Luftfederung dient. EP 2 121 395 B2 schlägt ergänzend vor, in die Baueinheit auch ein Parklösesicherheitsventil, ein Hebe-Senk-Ventil, das Anti-Compound-Ventil und das Überströmventil zu integrieren, womit dann bis auf die EBS-Steuereinheit und das mechanische Niveauregelventil alle Komponenten in einem Gehäuse zusammengefasst sein sollen.

DE 10 2005 019 479 B3 offenbart ein Anhängerbremsventil, welches eingangsseitig mit den beiden Kupplungsköpfen des Anhängers verbunden ist, während dieses ausgangsseitig einerseits mit Federspeicherbremsen und andererseits über eine EBS-Steuereinheit mit Betriebsbremsen des Anhängers verbunden ist. Vorgeschlagen wird, in das Anhängerbremsventil ein Parkventil zu integrieren. Behälteranschlüsse für einerseits einen Vorratsbehälter für einen Betriebsbremskreis und andererseits einen Vorratsbehälter für einen Luftfederkreis sind über ein Überströmventil miteinander verbunden. Das Anhängerbremsventil verfügt über ein Notbremsventil, dessen Ventilstellung abhängig ist von dem Druck an dem Kupplungskopf Vorrat. Für an dem Kupplungskopf Vorrat anliegenden Druck leitet das Notbremsventil den Druck an dem Kupplungskopf Bremse weiter an die EBS-Steuereinheit, die einen geeigneten Bremsdruck für die Betriebsbremsen aussteuert. Bricht hingegen, beispielsweise infolge eines Leitungsabrisses oder einer Leckage, der Druck an dem Kupplungskopf Vorrat ein, wird das Notbremsventil umgeschaltet in eine Betriebsstellung, in der der pneumatische Steueranschluss der EBS-Steuereinheit über das Notbremsventil mit dem Druck aus dem Vorratsbehälter für die Betriebsbremse beaufschlagt wird, womit eine Abbremsung des Nutzfahrzeugs unter Ausführung einer Druckmodulation erfolgen kann. DE 10 2005 019 470 B3 schlägt des Weiteren vor, in das Anhängerbremsventil auch ein Hebe-Senk-Ventil zum willkürlichen Heben und Senken des Fahrzeugaufbaus zu integrieren. Das Hebe-Senk-Ventil verfügt über eine elektro-pneumatische Reset-to-Ride-Funktion.

EP 2 757 006 B1 und EP 2 757 010 B1 offenbaren eine als Baueinheit ausgebildete Ventileinrichtung, in die ein Parkventil, ein Rangierventil, ein Notbremsventil und ein Federspeicherventil integriert sind. Das Parkventil und das Rangierventil sind manuell über jeweils einen Ventilschieber betätigbar, wobei das Rangierventil bei Anschluss des Kupplungskopfs Vorrat automatisch in die Rangierstellung überführt werden kann. Das Notbremsventil und das Federspeicherventil werden ausschließlich pneumatisch betätigt. Ein Kupplungskopf Bremse ist mit einem Versorgungsanschluss der Ventileinrichtung verbunden, während ein Parkbremsanschluss der Ventileinrichtung über ein als Wechselventil ausgebildetes Anti-Compound-Ventil und ein Schnellentlüftungsventil mit Federspeicherbremsen verbunden ist. Der Kupplungskopf Vorrat ist unter Umgehung der Ventileinrichtung (über ein Wechselventil) mit einem Steueranschluss einer EBS-Steuereinheit verbunden. Der von der EBS-Steuereinheit ausgesteuerte modulierte Bremsdruck wird einer Betriebsbremse und dem anderen Eingang des Anti-Compound-Ventils zugeführt. Auf Steuerflächen des Notbremsventils und des Federspeicherventils wirkt in einer Fahrtstellung des Rangierventils der Druck an dem Kupplungskopf Vorrat, während auf die Steuerflächen in einer Rangierstellung des Rangierventils der Behälterdruck einwirkt. Bricht während der Fahrt der Druck an dem Kupplungskopf Vorrat ein, erfolgt für das Unterschreiten eines ersten Schwellwertes eine Umschaltung des Notbremsventils, was zur Folge hat, dass das Notbremsventil eine Verbindung des Behälters mit den Betriebsbremsen herbeiführt, sodass zur Gewährleistung einer Notbremsfunktion eine geregelte Betriebsbremsung erfolgt. Unterschreitet der Druck an dem Kupplungskopf Vorrat einen zweiten Schwellwert, erfolgt eine Umschaltung des Federspeicherventils, was zur Folge hat, dass über das Federspeicherventil die Federspeicherbremsen entlüftet werden, womit eine Notbremsfunktion über die Federspeicherbremsen gewährleistet wird. Die Umschaltung des Federspeicherventils und des Notbremsventils erfolgt unabhängig voneinander, womit eine redundante Bereitstellung der Notbremsfunktion mit unterschiedlichen Auslösedrücken gewährleistet ist. Für eine andere Ausführungsform wird in der Fahrtstellung des Rangierventils die Steuerfläche des Federspeicherventils nicht mit dem Druck an dem Kupplungskopf Vorrat beauftragt, sondern mit dem Behälterdruck. Allerdings ist in diesem Fall zwischen dem Behälter und der Steuerfläche ein elektronisch gesteuertes Magnetventil in Ausgestaltung als Sperrventil angeordnet. Das Magnetventil befindet sich während der Fahrt des Anhängers in der Sperrstellung. Wird in geparktem und abgekuppeltem Zustand des Anhängers das Magnetventil in die Durchlassstellung geschaltet, kann das Federspeicherventil bei einem Druckabfall in dem Behälter mit dem Unterschreiten des zweiten Schwellwertes das Federspeicherventil automatisiert in die Entlüftungsstellung überführt werden, womit dann eine selbstständige Betätigung der Federspeicherbremse erfolgen kann, um den geparkten Anhänger an einem Wegrollen zu hindern. In die Ventileinrichtung kann auch ein Überströmventil mit begrenzter Rückführung integriert sein, über welches eine Versorgung eines Luftfederkreises erfolgt. Vorgeschlagen wird in diesen Druckschriften darüber hinaus, in die Ventileinrichtung eine Ventileinheit zu integrieren, die die Beaufschlagung von Luftfederbälgen und eines Liftbalgs auf Grundlage eines gemessenen Niveausignals elektronisch regelt.

WO 2016/135567 A1 offenbart eine als Baueinheit ausgebildete Ventileinrichtung, in der eine zweikreisige Betriebsbremssteuerung mittels zweier EBS-Teileinheiten möglich ist. Des Weiteren sind in die Ventileinrichtung Ventile zur Steuerung der Luftfederbälge und einer Liftachse integriert. Schließlich verfügt die Ventileinrichtung über ein auf die Betriebsbremsen einwirkendes Notbremsventil. Die Ansteuerung des Hebens und Senkens der Luftfederbälge einerseits und die Betätigung des Notbremsventils andererseits erfolgen hier über pneumatische Steueranschlüsse der Ventileinrichtung.

DE 10 2007 053 764 A1 offenbart eine Bremsanlage mit einem manuell und pneumatisch betätigten Rangierventil, einem eine Notbremsfunktion gewährleistenden Anhängerbremsventil und einem manuell betätigbaren Parkventil. Das Parkventil verfügt über einen pneumatischen Steueranschluss. Der Druck an dem Steueranschluss entspricht in der Fahrtstellung des Rangierventils dem Druck an dem Kupplungskopf Vorrat, während der Druck an dem Steueranschluss in der Rangierstellung des Rangierventils dem Druck in dem Behälter entspricht. Das Parkventil verfügt über einen Betätigungskolben, der mit dem Druck an dem Steueranschluss beaufschlagt ist. Für hinreichenden Druck an dem Steueranschluss befindet sich der Betätigungskolben in einer nicht aktiven Stellung, in welcher die manuell vorgebbare Ventilstellung des Parkventils nicht beeinflusst wird. Bricht aber der Druck an dem Steueranschluss ein, wird der Betätigungskolben in eine aktive Stellung bewegt. Mit der Bewegung des Betätigungskolbens wird das Parkventil automatisch von der Fahrtstellung in die Parkstellung überführt. Auf diese Weise kann vermieden werden, dass das Fahrzeug in geparktem Zustand ungewollt wegrollt, wenn der Fahrer vergisst, das Parkventil manuell in die Parkstellung zu überführen.

EP 2 567 874 A2 offenbart eine Anhängerbremsanlage mit einer Ventileinrichtung, bei der das Parkventil und das Rangierventil zu einem gemeinsamen Betätigungsmodul kombiniert sind, bei dem die Parkfunktion und die Rangierfunktion durch manuelle Betätigung eines einzigen Schiebers gewährleistet wird.

Weiterer Stand der Technik ist beispielsweise aus EP 1 188 634 B2 bekannt.

### AUFGABE DER ERFINDUNG

Der Erfindung liegt die Aufgabe zugrunde, eine Nutzfahrzeuganhänger-Druckluftanlage vorzuschlagen, welche bei kompakter Ausgestaltung einen erweiterten Funktionsumfang gewährleistet.

### LÖSUNG

Die Aufgabe der Erfindung wird erfindungsgemäß mit den Merkmalen des unabhängigen Patentanspruchs gelöst. Weitere bevorzugte erfindungsgemäße Ausgestaltungen sind den abhängigen Patentansprüchen zu entnehmen.

### BESCHREIBUNG DER ERFINDUNG

Erfindungsgemäß wird eine Nutzfahrzeuganhänger-Druckluftanlage vorgeschlagen, bei der eine multifunktonale Ventileinrichtung als eine Baueinheit ausgebildet ist. Hierbei kann die Baueinheit ein Gehäuse aufweisen, in die die Komponenten der Ventileinrichtung sämtlich integriert sind. Möglich ist aber auch, dass die Ventileinrichtung modular ausgebildet ist, wobei einzelne Teilmodule der Ventileinrichtung unmittelbar aneinander befestigt sind, beispielsweise aneinander angeflanscht sind, womit auch elektrische und/oder pneumatische Verbindungen mit den Teilmodulen bereitgestellt werden können.

In die als Baueinheit ausgebildete Ventileinrichtung sind mehrere Komponenten integriert:
Zunächst weist die Ventileinrichtung ein Parkventil auf. Das Parkventil ist manuell von einem Benutzer betätigbar. Beispielweise kann das Parkventil einen über einen Betätigungsknopf von dem Benutzer hereindrückbaren und herausziehbaren Ventilschieber aufweisen, wobei der Ventilschieber unterschiedliche Betriebsstellungen des Parkventils vorgeben kann. Möglich ist, dass der Ventilschieber zusätzlich zur Herbeiführung unterschiedlicher Ventilstellungen verdrehbar ist, womit der Ventilschieber auch eine Schaltwelle ausbildet. Möglich ist schließlich auch, dass das Parkventil lediglich eine verdrehbare Schaltwelle aufweist, so dass sich die unterschiedlichen Betriebsstellungen des Parkventils durch unterschiedliche Schwenkstellungen der Schaltwelle auszeichnen. Das Parkventil weist einen Parkbremsanschluss auf. Dieser Parkbremsanschluss ist (direkt oder unter Zwischenschaltung weiterer Ventilelemente) mit mindestens einer Federspeicherbremse verbunden. Das Parkventil weist zumindest eine Parkstellung und eine Lösestellung auf. In der Parkstellung ist der Parkbremsanschluss (und damit auch die Federspeicherbremse, zumindest in spezifischen Betriebsstellungen der vor- und nachgeordneten Ventilelemente) entlüftet. Hingegen ist in der Lösestellung des Parkventils (zumindest in spezifischen Betriebsstellungen der vor- und/oder nachgeordneten Ventilelemente) der Parkbremsanschluss belüftet. Durch Überführung des Parkventils in die Parkstellung kann die Parkfunktion, also die Betätigung der Federspeicherbremse(n), herbeigeführt werden, während die Überführung des Parkventils in die Lösestellung zum Lösen der Federspeicherbremse(n) führt.

Darüber hinaus weist die Ventileinrichtung ein Rangierventil auf, welches ebenfalls manuell betätigbar ist. Das Rangierventil verfügt über einen Versorgungsanschluss, einen Ausgangsanschluss und einen Behälteranschluss. Hierbei ist der Versorgungsanschluss vorzugsweise an einen Kupplungskopf Vorrat des Anhängers angeschlossen. Ist der Versorgungsanschluss druckbeaufschlagt, nimmt das Rangierventil automatisch eine Fahrtstellung ein. In der Fahrtstellung ist der Ausgangsanschluss mit dem Versorgungsanschluss verbunden, während der Behälteranschluss abgesperrt ist. Ist hingegen der Versorgungsanschluss drucklos, was für ein Abkoppeln des Anhängers von dem Zugfahrzeug der Fall sein kann oder auch für einen schleichenden Druckverlust infolge einer Leckage im Bereich des Kupplungskopfs Vorrat oder einer Versorgungsleitung, ist das Rangierventil manuell in eine Rangierstellung überführbar. In der Rangierstellung ist der Ausgangsanschluss des Rangierventils mit dem Behälteranschluss verbunden.

Zur Gewährleistung einer Notbremsfunktion ist in die Ventileinrichtung auch eine Notbremseinrichtung integriert. Die Notbremseinrichtung führt automatisch eine Entlüftung des Parkbremsanschlusses herbei, wenn ein Druck an dem Versorgungsanschluss abfällt oder einen Schwellwert unterschreitet. Auf diese Weise kann (insbesondere wenn sich während der Fahrt der Kupplungskopf Vorrat löst, sich im Bereich des Kupplungskopfs Vorrat eine Leckage ergibt oder eine Vorratsleitung eine Undichtigkeit aufweist) eine Notbremsfunktion des Anhängers über die Federspeicherbremsen ausgelöst werden.

Erfindungsgemäß ist in die Ventileinrichtung eine Notbremsfunktion-Overrideeinrichtung integriert. Diese Notbremsfunktion-Overrideeinrichtung wird (zumindest nicht ausschließlich) pneumatisch betätigt. Vielmehr ist die Notbremsfunktion-Overrideeinrichtung als (zumindest auch) elektrisch betätigte Notbremsfunktion-Overrideeinrichtung ausgebildet. Die Notbremsfunktion-Overrideeinrichtung dient dazu, die automatische Entlüftung des Parkbremsanschlusses durch das Notbremsventil (zumindest temporär) zu deaktivieren. Dies kann in Abhängigkeit von einer Betriebsgröße des Anhängers erfolgen, insbesondere in Abhängigkeit von dem Druck in einem Betriebsbremsbehälter. Möglich ist, dass durch die Notbremsfunktion-Override-Funktion die automatische Entlüftung des Parkbremsanschlusses durch das Notbremsventil so lange deaktiviert wird, wie ein Druck in einem Betriebsbremsbehälter noch oberhalb eines Schwellwerts ist. Dieser Ausgestaltung liegt beispielsweise die Erkenntnis zugrunde, dass es vorteilhabt ist, vor der Ausführung der Notbremsfunktion des Anhängers über die Federspeicherbremsen selbst bei einem Teilabfall des Drucks an dem Versorgungsanschluss so lange hinauszuzögern, wie eine hinreichende Abbremsung des Anhängers über die Betriebsbremsen (was durch manuelle Betätigung des Bremspedals durch den Fahrer erfolgen kann oder auch mittels einer zusätzlichen, über die Betriebsbremsen gewährleisteten zweiten Notbremsfunktion) so lange wie möglich aufrechtzuerhalten. Reicht somit der Druck in einem Vorratsbehälter für den Betriebsbremskreis für eine hinreichende Abbremsung des Anhängers über die Betriebsbremsen aus, wird die an sich eingeleitete Notbremsfunktion über die Notbremseinrichtung unterbunden oder hinausgezögert. Erst wenn der Druck in dem Vorratsbehälter für den Betriebsbremskreis soweit gesunken ist, dass der Anhänger nicht mehr zuverlässig über die Betriebsbremsen abgebremst werden kann, wird die Notbremsfunktion des Anhängers über die Federspeicherbremsen ausgelöst.

Für eine erste Variante der erfindungsgemäßen Lösung weist die Notbremsfunktion-Overrideeinrichtung ein elektrisches Notbremsfunktion-Overrideventil auf. Das Notbremsfunktion-Overrideventil verbindet in einer Overridestellung einen Steueranschluss des Parkventils mit einem Vorratsbehälter. Hierdurch wird das Parkventil in die Lösestellung überführt oder es wird gewährleistet, dass das Parkventil in der Lösestellung verbleibt, ohne dass infolge der Notbremsfunktion eine Änderung von der Lösestellung in die Parkstellung möglich ist.

Für eine zweite Variante der erfindungsgemäßen Lösung bildet ein elektromagnetischer Aktuator die Notbremsfunktion-Overrideeinrichtung bildet und die Notbremsfunktion-Overrideeinrichtung die Notbremsfunktion-Overridefunktion bereitstellt, wobei ohne Bestromung eines Steueranschlusses des Aktuators eine Notbremsfunktion durch Umschalten des Parkventils in die Parkstellung erfolgt und durch Betätigung der Notbremsfunktion-Overrideeinrichtung die Notbremsfunktion unterbunden werden kann, so dass bis auf Weiteres das Parkventil in der Lösestellung verbleibt.

Möglich ist, dass in die Ventileinrichtung zusätzlich mindestens eine der folgenden Einrichtungen integriert ist:
- Möglich ist, dass eine manuell betätigbare Hebe-Senk-Ventileinrichtung in die Ventileinrichtung integriert ist. Die Hebe-Senk-Ventileinrichtung ermöglicht dabei ein von dem Benutzer willkürlich über geeignete Betätigungselemente herbeigeführtes Heben und Senken des Fahrzeugaufbaus. Hierbei kann die Hebe-Senk-Ventileinrichtung mechanisch-pneumatisch ausgebildet sein, so dass durch eine Schaltwelle oder einen Schaltschieber, die oder der vom Benutzer betätigt wird, das manuelle Heben und manuelle Senken des Fahrzeugaufbaus herbeigeführt werden kann. Möglich ist aber auch, dass das Heben und Senken mechanisch-elektropneumatisch herbeigeführt wird, indem beispielsweise der Benutzer einen elektrischen Schalter betätigt, womit dann ein elektropneumatisches Heben und Senken des Fahrzeugaufbaus erfolgt.
- Alternativ oder kumulativ möglich ist, dass in die Ventileinrichtung eine Park-Sicherheitseinrichtung integriert ist. Die Park-Sicherheitseinrichtung gewährleistet dann, wenn der Druck an dem Versorgungsanschluss unterhalb eines Schwellwerts ist, automatisch eine Entlüftung des Parkbremsanschlusses herbeigeführt wird. Dies kann beispielsweise dadurch erfolgen, dass automatisch das Parkventil in die Parkstellung überführt wird. Die hierdurch bereitgestellte Park-Sicherheitsfunktion kann insbesondere gewährleisten, dass dann, wenn der Anhänger vom Zugfahrzeug abgekuppelt wird und der Fahrer vergisst, manuell entsprechend den Vorschriften das Parkventil in die Parkstellung zu überführen, das Fahrzeug nicht gegen ein unbeabsichtigtes Wegrollen gesichert ist.

Neben dieser als Baueinheit ausgebildeten Ventileinrichtung verfügt die Nutzfahrzeuganhänger-Druckluftanlage auch über eine ebenfalls als Baueinheit ausgebildete EBS-Steuereinheit. Die EBS-Steuereinheit dient insbesondere zur Bereitstellung eines Betriebsbremsdrucks, mit welcher die Betriebsbremskammern der Betriebsbremsen des Anhängers (zumindest eines Kreises) beaufschlagt werden. Dieser Betriebsbremsdruck ist einerseits abhängig von dem über dem Kupplungskopf Bremse übertragenen Bremssteuerdruck. Andererseits wird der Betriebsbremsdruck von der EBS-Steuereinheit dann durch gezielte Entlüftung verringert, wenn eine anhand der Überwachung der Raddrehzahl oder anhand anderer Signale indizierte Blockade mindestens eines Fahrzeugrades infolge einer übermäßigen Beaufschlagung der Betriebsbremse vermieden werden soll. Die EBS-Steuereinheit ist dabei nicht in die Ventileinrichtung integriert, sondern beabstandet von dieser angeordnet und über geeignete Leitungsverbindungen verbunden.

Während gemäß dem eingangs angeführten Stand der Technik der Kupplungskopf Bremse über ein Anhängerbremsventil mit der EBS-Steuereinheit verbunden ist, ist die EBS-Steuereinheit erfindungsgemäß unter Umgehung der Ventileinrichtung mit einem Kupplungskopf Bremse verbunden. Es kann sogar eine direkte Verbindung über eine einfache Leitungsverbindung ohne zwischengeschaltete pneumatische Ventilelemente, Drosseln, u. ä. zwischen dem Kupplungskopf Bremse und der EBS-Steuereinheit zur Übertragung des Bremssteuerdrucks genutzt werden. In jedem Fall ist durch die Umgehung der Ventileinrichtung keine Wechselwirkung der Ventileinrichtung mit dem Bremssteuerdruck gegeben. Dieser Ausgestaltung liegt die Erkenntnis zugrunde, dass für ein unmittelbares und unverfälschtes Ansprechen der Betriebsbremsen auf den mittels des Kupplungskopfs Bremse vorgegebenen Bremssteuerdruck gewünscht ist, der Bremssteuerdruck nicht die Ventileinrichtung passieren sollte. In eine Bremssteuerleitung zwischen Kupplungskopf Bremse und EBS-Steuereinheit integrierte pneumatische Elemente der Ventileinrichtung führen zu einer Verfälschung des Bremssteuerdrucks. So führt jedwede Drosselwirkung im Bereich von Engstellen, Übertrittsquerschnitten oder Ventilquerschnitten der Ventileinrichtung zu einer Verzögerung eines Aufbaus oder Abbaus des Bremssteuerdrucks an einem Steueranschluss der EBS-Steuereinheit. Derartige Verzögerungen führen zu einer unzureichenden Dynamik bei der Betätigung der Betriebsbremsen.

In der erfindungsgemäßen Nutzfahrzeuganhänger-Druckluftanlage ist die EBS-Steuereinheit des Weiteren mit dem Parkbremsanschluss der Ventileinrichtung verbunden, wobei diese Verbindung eine unmittelbare Leitungsverbindung ohne weitere Ventilelemente sein kann oder auch eine Leitungsverbindung mit weiteren darin angeordneten pneumatischen Bauelementen wie beispielsweise einem Wechselventil oder anderen beliebigen Ventilelementen.

Für die konstruktive Ausgestaltung der Park-Sicherheitseinrichtung und/oder der Notbremseinrichtung gibt es im Rahmen der Erfindung vielfältige Möglichkeiten. Für einen Vorschlag der Erfindung weist die Park-Sicherheitseinrichtung und/oder die Notbremseinrichtung eine Drucckammer auf. Die Druckkammer ist mit dem Druck an dem Versorgungsanschluss (und damit insbesondere auch mit dem Druck an dem Kupplungskopf Vorrat) beaufschlagt. Des Weiteren verfügt die Park-Sicherheitseinrichtung und/oder die Notbremseinrichtung über einen Kolben, mit dem die Druckkammer begrenzt ist. Die auf den Kolben einwirkenden Kräfte sind somit abhängig von dem Druck an dem Versorgungsanschluss. Erfindungsgemäß ist der Kolben mit einem Stößel gekoppelt. Wenn der Druck an dem Versorgungsanschluss unterhalb des Schwellwerts ist, überführt der Stößel mechanisch das Parkventil in die Parkstellung. Möglich ist beispielsweise, dass der Stößel zur Anlage an einen Ventilschieber oder eine Schaltwelle des Parkventils kommt und dann den Ventilschieber oder die Schaltwelle in die Parkstellung bewegt. Wenn hingegen der Druck an dem Versorgungsanschluss oberhalb des Schwellwerts liegt, ist der Stößel derart von dem Parkventil mechanisch entkoppelt, dass ohne Beeinflussung durch die Kraftverhältnisse an dem Kolben und dem Stößel möglich ist, dass das Parkventil die Lösestellung oder die Parkstellung einnehmen kann und in dieser verbleibt. Es ist dann für den Benutzer möglich, das Parkventil je nach Bedarf manuell in die Lösestellung oder die Parkstellung zu überführen, ohne dass diese Grundfunktion durch die Park-Sicherheitseinrichtung und/oder die Notbremseinrichtung beeinflusst ist.

Im Rahmen der Erfindung kann die Druckkammer ausschließlich mit dem Versorgungsanschluss verbunden sein oder auch zusätzlich mit weiteren Anschlüssen verbunden sein. Für eine erfindungsgemäße Nutzfahrzeuganhänger-Druckluftanlage ist die Druckkammer alternativ mit dem Versorgungsanschluss und mit einem elektrischen Notbremsfunktion-Overrideventil verbindbar. Diese alternative Verbindung kann beispielsweise über ein Wechselventil erfolgen, so dass die Druckkammer mit dem höheren Druck von dem Druck an dem Versorgungsanschluss und dem Druck des elektrischen Notbremsfunktion-Overrideventils beaufschlagt wird. Ebenfalls möglich ist aber, dass die Druckkammer mittels eines 3/2-Wegeventils, insbesondere eines 3/2-Wege-Magnetventils, einerseits mit dem Versorgungsanschluss und andererseits mit dem Notbremsfunktion-Overrideventil verbindbar ist. Auf diese Weise kann eine eindeutige und direkte Abhängigkeit der Betriebsstellung des Stößels und damit des Parkventils von dem Druck an dem Versorgungsanschluss aufgehoben werden. Würde an sich infolge des Abfalls des Drucks an dem Versorgungsanschluss die Notbremsfunktion der Notbremseinrichtung aktiviert werden, indem der Stößel das Parkventil in die Parkstellung überführt, kann eine Deaktivierung der Notbremsfunktion erfolgen, indem das Notbremsfunktion-Overrideventil die Druckkammer mit einem Vorratsbehälter verbindet. Vorzugsweise handelt es sich hierbei um den Vorratsbehälter für einen Betriebsbremskreis.

Für eine Ausgestaltung der Nutzfahrzeuganhänger-Druckluftanlage ist an die Ventileinrichtung sowohl ein Vorratsbehälter für einen Betriebsbremskreis als auch ein Vorratsbehälter für einen Luftfederkreis angeschlossen. In diesem Fall sind die beiden Anschlüsse für die genannten Vorratsbehälter über eine Versorgungs- oder Zweigleitung der Ventileinrichtung miteinander verbunden. In dieser Versorgungs- oder Zweigleitung ist für einen Vorschlag der Erfindung ein Überströmventil angeordnet, bei dem es sich um ein Überströmventil mit Rückströmung oder ohne Rückströmung handeln kann. Möglich ist auch, dass dem Überströmventil ein Rückschlagventil vorgeordnet oder nachgeordnet ist, welches den Druck sichert, so dass lediglich eine Querströmung vom Betriebsbremskreis zu dem Luftfederkreis möglich ist, während eine umgekehrte Querströmung von dem Luftfederkreis zu dem Betriebsbremskreis durch das Rückschlagventil unterbunden ist. Durch die Integration des Überströmventils (und ggf. des Rückschlagventils) in die Ventileinrichtung kann eine kompakte und einfach zu handhabende und zu montierende Einheit geschaffen werden.

Im Rahmen der Erfindung ist möglich, dass die Ventileinrichtung über eine eigene Steuereinheit verfügt, die dann mit anderen Steuereinheiten außerhalb der Ventileinrichtung kommunizieren kann und/oder der über Sensoren ermittelte Betriebsdaten zugeführt werden können. Hierbei ist eine drahtlose oder drahtgebundene Kommunikation möglich. Um lediglich einige Beispiele zu nennen, kann eine Kommunikation über Bussysteme wie CAN oder LIN erfolgen oder über einfache elektrische Steuer- oder Signalleitungen. Für eine Ausgestaltung der Erfindung ist die EBS-Steuereinheit über eine Steuerleitung mit der Ventileinrichtung verbunden. Über die EBS-Steuereinheit kann dann über die Steuerleitung mindestens ein elektrisches Ventil der Ventileinrichtung (beispielsweise ein elektrisches Immobilisierventil, ein elektrisches Notbremsfunktion-Overrideventil, ein elektrisches Niveauregelventil, eine elektrisches Ventil einer Liftachsventileinrichtung u. ä. gesteuert werden. Während grundsätzlich möglich ist, dass dennoch die Ventileinrichtung ebenfalls über eine Steuereinheit verfügt, ist vorzugsweise in der Ventileinrichtung keine elektronische Steuereinheit vorhanden, so dass die ausschließliche Steuerung über die EBS-Steuereinheit erfolgt. Hierbei umfasst eine "Steuerung" auch eine "Regelung".

Die Erfindung schlägt auch vor, dass in die Ventileinrichtung auch eine elektrische Immobilisiereinrichtung integriert ist. Diese kann das Belüften des Parkbremsanschlusses (und damit das Lösen der Parkbremse und die Ermöglichung eines Losfahrens) nur dann zulässt, wenn eine Betriebsgröße ein Kriterium erfüllt. Hierbei kann beispielsweise die elektrische Immobilisiereinrichtung die Überführung des Parkventils in die Belüftungsstellung nur dann zulassen, wenn die Betriebsgröße ein Kriterium erfüllt. Um lediglich einige Beispiele für das Kriterium zu nennen, kann das Belüften des Parkbremsanschlusses nur dann zugelassen werden, wenn sich ein berechtigter Benutzer authentifiziert hat, beispielsweise über ein Smartphone, über die Betätigungsreihenfolge von Schaltern oder Pedalen des Zugfahrzeugs u. ä. Möglich ist auch, dass ein Belüften des Parkbremsanschlusses nur dann zugelassen wird, wenn über einen beispielsweise elektrischen Kupplungskopf von dem Zugfahrzeug eine Authentifizierung übertragen wird, aufgrund welcher feststellbar ist, ob das Zugfahrzeug zum Betrieb mit dem Anhänger berechtigt ist. So kann beispielsweise eine Authentifizierung für Zugfahrzeuge eines Fuhrparks erfolgen, die berechtigt sind, mit einem Anhänger des Fuhrparks betrieben zu werden. Alternativ oder kumulativ möglich ist, dass das Kriterium für die Zulassung der Belüftung des Parkbremsanschluss ist, dass
- der Druck in einem Vorratsbehälter einen Schwellwert überschreitet,
- mittels eines Kopplungssensors erkannt worden ist, dass eine vollständige und richtige (mechanische und/oder elektrische und/oder pneumatische) Kopplung zwischen Zugfahrzeug und Anhänger herbeigeführt worden ist,
- eine bestimmungsgemäße Ladungssicherung erfolgt ist, was über eine Kamera erfasst sein kann oder über ein Eingabeelement vom Fahrer eingegeben sein kann
- die Türen oder eine Klappe des Zugfahrzeugs oder des Anhängers geschlossen sind/ist und/oder
- die Reifendrücke der Reifen des Zugfahrzeugs und/oder des Anhängers einen Schwellwert überschreiten.

Die Erfindung schlägt vor, dass die elektrische Immobilisiereinrichtung ein Immobilisierventil aufweist. Hierbei kann das Immobilisierventil dem Parkventil vor- oder nachgeordnet sein. Das Immobilisierventil weist zwei Betriebsstellungen auf, nämlich eine Immobilisier-Betriebsstellung und eine Mobilisier-Betriebsstellung. In der Immobilisier-Betriebsstellung ist eine Strömung von dem Parkventil zu der EBS-Steuereinheit nicht möglich, aber eine Strömung von der EBS-Steuereinheit zu dem Parkventil möglich. Dies bedeutet, dass eine Belüftung des zugeordneten Parkbremsanschlusses der EBS-Steuereinheit über das Parkventil nicht möglich ist. Somit kann beispielsweise ohne ordnungsgemäße Authentifizierung keine Belüftung des Parkbremsanschlusses der EBS-Steuereinheit und damit kein Lösen der Parkbremse erfolgen. Hingegen kann in der Immobilisier-Betriebsstellung durch eine Strömung von der EBS-Steuereinheit zu dem Parkventil eine Entlüftung der Parkbremse erfolgen, so dass jedwede Betätigung der Federspeicherbremsen durch deren Entlüftung nicht unterbunden ist. Nimmt hingegen das Immobilisierventil die Mobilisier-Betriebsstellung ein, sind sowohl eine Strömung von dem Parkventil zu der EBS-Steuereinheit als auch eine Strömung von der EBS-Steuereinheit zu dem Parkventil möglich. Somit beeinflusst das Immobilisierventil in der Mobilisier-Betriebsstellung die weiteren Funktionen nicht. Im einfachsten Fall wird in der Mobilisier-Betriebsstellung lediglich die Strömung zwischen dem Parkventil und der EBS-Steuereinheit in beide Richtungen durchgeleitet.

Das Mobilisierventil kann beliebige Schaltstellungen und eine beliebige Schaltlogik aufweisen, wobei auch möglich ist, dass das Immobilisierventil durch pneumatische Beaufschlagung über ein weiteres Steuerventil oder elektrische Bestromung in der Mobilisier-Betriebsstellung gehalten werden muss, damit dieses nicht von selber in die Immobilisier-Betriebsstellung zurückkehrt. Für einen Vorschlag der Erfindung nimmt das Immobilisierventil die Mobilisier-Betriebsstellung ein (oder hält diese aufrecht), wenn der Druck in der zu der EBS-Steuereinheit führenden Parkbremsleitung einen Schwellwert überschreitet. Für diese Ausführungsform muss lediglich gewährleistet werden, dass das Immobilisierventil die Mobilisier-Betriebsstellung für eine gewisse Zeitspanne einnimmt, damit der Druck in der Parkbremsleitung ansteigt. Ist dieser Anstieg soweit erfolgt, dass der Schwellwert überschritten ist, hält dieser Druck das Immobilisierventil automatisch in der Mobilisier-Betriebsstellung, so dass keine weiteren Steuerungsmaßnahmen erforderlich sind, um eine unerwünschte Rückkehr des Immobilisierventils in die Immobilisier-Betriebsstellung zu vermeiden.

Durchaus möglich ist im Rahmen der Erfindung, dass das Immobilisierventil unmittelbar elektrisch gesteuert ist und somit als Magnetventil ausgebildet ist. Für einen anderen Vorschlag ist das Immobilisierventil durch ein Vorsteuerventil elektropneumatisch vorgesteuert. Hierbei ist für einen besonderen Vorschlag das Vorsteuerventil als Notbremsfunktion-Overrideventil ausgebildet. Somit kann in diesem Fall das Notbremsfunktion-Overrideventil multifunktional genutzt werden.

Für einen Vorschlag der Erfindung wird dies gewährleistet, in dem ein pneumatischer Steueranschluss des Immobilisierventils alternativ einerseits mit dem Vorsteuerventil oder dem Notbremsventil-Overrideventil und andererseits mit der Parkbremsleitung verbindbar ist. Dies kann beispielsweise erfolgen durch Einsatz eines Wechselventils, dessen Ausgang mit dem pneumatischen Steueranschluss des Immobilisierventils verbunden ist, während ein Eingang des Wechselventils mit der Parkbremsleitung und der andere Eingang des Wechselventils mit dem Vorsteuerventil oder dem Notbremsventil-Overrideventil verbunden ist. Möglich ist aber durchaus auch, dass die alternative Verbindung gewährleistet wird durch Einsatz eines Umschaltventils, welches einen mit dem pneumatischen Steueranschluss des Immobilisierventils verbundenen Ausgangsanschluss aufweist und zwei alternative Eingangsanschlüsse, die einerseits mit dem Vorsteuerventil oder Notbremsventil-Overrideventil und andererseits mit der Parkbremsleitung verbunden sind.

Für die unterschiedlichen im Rahmen der Erfindung in die Ventileinrichtung integrierbaren Funktionen können einzelne elektrisch gesteuerte Ventile verwendet werden. Für einen besonderen Vorschlag der Erfindung ist das Notbremsfunktion-Overrideventil multifunktional ausgebildet. In diesem Fall steuert das Notbremsfunktion-Overrideventil sowohl die Notbremsventil-Override-funktion als auch eine Reset-to-Ride-Funktion einer Hebe-Senk-Ventileinrichtung. Dieser Ausgestaltung liegt die Erkenntnis zugrunde, dass eine Wechselwirkung der Notbremsventil-Override-funktion und der Reset-to-Ride-Funktion der Hebe-Senk-Ventileinrichtung nicht möglich ist, da die Reset-to-Ride-Funktion lediglich beim Losfahren des Fahrzeugs zu einer Beeinflussung führt, während die Notbremsventil-Overridefunktion lediglich bei fahrendem Fahrzeug ausgeführt wird. Somit kann unter Umständen derselbe Ausgangsdruck oder Druckimpuls des Notbremsfunktion-Overrideventils für die Auslösung und Bereitstellung sowohl der Notbremsventil-Overridefunktion als auch für die Reset-to-Ride-Funktion der Hebe-Senk-Ventileinrichtung genutzt werden.

Entsprechend einem weiteren Vorschlag der Erfindung ist es auch möglich, dass in die Ventileinrichtung eine elektronisch gesteuerte Niveauregelventileinrichtung integriert ist. Mittels der elektronisch gesteuerten Niveauregelventileinrichtung kann einerseits ein manuelles Heben und Senken des Fahrzeugaufbaus durch Betätigung von entsprechenden Schaltern durch den Fahrer erfolgen. Alternativ oder kumulativ möglich ist, dass mittels der elektronisch gesteuerten Niveauregelventileinrichtung eine dynamische automatische Niveauregelung während des Fahrbetriebs erfolgt, um eine Steuerung oder Regelung hinsichtlich eines Wankens, Nickens oder Gierens während der Fahrt zu gewährleisten. Möglich ist auch, dass über die elektrisch gesteuerte Niveauregelventileinrichtung unterschiedliche Fahrniveaus, beispielsweise je nach Geschwindigkeit, gewährleistet werden können. Alternativ oder kumulativ möglich ist, dass in die Ventileinrichtung eine elektrisch gesteuerte Liftachsventileinrichtung integriert ist.

Die Erfindung schlägt auch vor, in die Ventileinrichtung mindestens einen Drucksensor zu integrieren. Hierbei kann der Drucksensor beispielsweise einen Druck an dem Versorgungsanschluss (unmittelbar oder in einer mit dem Versorgungsanschluss verbundenen Leitung) erfassen. Ebenfalls möglich ist, dass der Drucksensor einen Druck erfasst, mit dem der Kolben der Park-Sicherheitseinrichtung oder der Notbremseinrichtung beaufschlagt wird. Hierbei kann der Drucksensor beispielsweise an einem Eingang des genannten Wechselventils oder dem Ausgang des Wechselventils den Druck erfassen oder den Druck an einem Anschluss eines in der Notbremseinrichtung oder der Park-Sicherheitseinrichtung genutzten Magnetventils erfassen.

Gemäß einem weiteren Vorschlag der Erfindung weist die Ventileinrichtung eine drahtlose Sende- und/oder Empfangseinrichtung auf, wobei es sich hierbei um eine uni-direktionale Sendeoder Empfangseinrichtung handeln kann, mittels welcher die Ventileinrichtung ausschließlich Daten empfängt oder ausschließlich Daten versendet, oder die drahtlose Sende- und Empfangseinrichtung ist bidirektional ausgebildet, womit die Ventileinrichtung über die drahtlose Sendeund Empfangseinrichtung dann sowohl Daten empfangen als auch senden kann. Bei diesen Daten handelt es sich beispielsweise um Messdaten und/oder Steuervorgaben oder Steuersignale.

Möglich ist im Rahmen der Erfindung auch, dass in die Ventileinrichtung eine Eingabe- und/oder Ausgabeeinrichtung integriert ist.

Bei der Eingabe- und/oder Ausgabeeinrichtung kann es sich um ein Display, eine akustische Signaleinrichtung, einen Touchscreen, Schalter, eine Tastatur u. ä. handeln. Die Eingabeund/oder Ausgabeeinrichtung dient bspw. der Kommunikation mit einem Benutzer in Form der Übermittlung von Betriebszuständen des Zugfahrzeugs, des Anhängers und/oder der Nutzfahrzeuganhänger-Druckluftanlage an den Benutzer und/oder zur Eingabe von Wünschen durch den Benutzer hinsichtlich einer Änderung des Betriebszustands derselben.

Eine Kommunikation einer elektronischen Steuereinheit der EBS-Steuereinheit oder der Ventileinrichtung mit einer anderen Steuereinheit und/oder Sensoren sowie der Eingabe- und/oder Ausgabeeinrichtung kann über übliche drahtgebundene oder drahtlose Verbindungen, Bussysteme, CAN, LIN oder eine Funkschnittstelle erfolgen.

Die Eingabe- und/oder Ausgabeeinrichtung ermöglicht insbesondere die folgenden Funktionen, Eingaben und/oder Ausgaben:
- Möglich ist, dass an der Ausgabeeinrichtung mindestens ein Status eines angeschlossenen Systems angezeigt wird. Beispielsweise kann ein Betriebszustand der EBS-Steuereinheit, ein Druck in mindestens einem Reifen, der mittels eines Reifendruck-Überwachungssystems übermittelt worden ist und/oder eine Ausgabe eines Telematik-Systems angezeigt werden. Ist der Anhänger mit einer Kühleinheit ausgestattet, kann über die Ausgabeeinrichtung eine Ausgabe der aktuellen Kühltemperatur der Kühleinheit erfolgen. Ausgegeben werden kann ein Betriebszustand eines CAN-Hubs und/oder eines CAN-Routers. Angezeigt werden kann der Betriebszustand einer Rückwärtsfahreinrichtung und entsprechenden Warneinrichtung und/oder ein Bild einer Rückfahrkamera. Es kann auch ein Betriebszustand der Rückfahrkamera angezeigt werden. Möglich ist, dass der Status eines Beleuchtungssystems ausgegeben wird.
- Möglich ist, dass eine Veränderung einer Betriebsgröße über die Eingabeeinrichtung möglich ist. So kann beispielsweise eine veränderte Temperatur der Kühleinheit vorgegeben werden oder eine veränderte Betriebsweise der EBS-Steuereinheit oder eines Reifendrucküberwachungssystems herbeigeführt werden.
- Möglich ist, dass über die Eingabe und/oder Ausgabeeinrichtung eine Diagnose der angeschlossenen Systeme, insbesondere der Ventileinrichtung erfolgt und/oder eine Ausgabe eines Ergebnisses der Diagnose der angeschlossenen Systeme, beispielsweise System X "vollfunktionsfähig", "eingeschränkt funktionsfähig" oder "nicht funktionsfähig", erfolgt.
- Möglich ist, dass über die Eingabe- und/oder Ausgabeeinrichtung ein Auslesen von Systemparametern ermöglicht wird, so dass die Ausgabeeinrichtung auch eine geeignete Schnittstelle für ein derartiges Auslesen aufweist.
- Möglich ist, dass die Eingabe- und/oder Ausgabeeinrichtung auch eine Schnittstelle für eine Durchführung eines Software-Updates aufweist.
- Möglich ist, dass über eine Eingabe- und/oder Ausgabeeinrichtung eine Ausgabe oder ein Wunsch nach einer Veränderung eines Werts eines angeschlossenen Systems erfolgen kann, beispielsweise ein Beladungszustand, ein Balgdruck, ein Reifendruck, eine Temperatur, eine Fahrzeugrahmenhöhe, eine Temperatur des Laderaums, eine Türverriegelung, eine Abstützung bei einem Semi-Trailer.
- Möglich ist, dass über die Eingabe- und/oder Ausgabeeinrichtung eine Eingabe einer Authentifizierung oder eines Passworts erfolgt. So kann beispielsweise über die Eingabeund/oder Ausgabeeinrichtung die für die Immobilisiereinrichtung erforderliche Authentifizierung durch den Benutzer oder Fahrer erfolgen.
- Möglich ist, dass über die Eingabe- und/oder Ausgabeeinrichtung eine Eingabe von Systemparametern der angeschlossenen Systeme erfolgt.
- Möglich ist, dass über die Eingabe- und/oder Ausgabeeinrichtung eine Vorgabe von Funktionsanforderungen (beispielsweise Sollhöhen des Fahrzeugrahmens, ein manuelles Heben und/oder Senken des Fahrzeugrahmens beispielsweise an einer Rampe, die Anforderung eines Anhebens oder Absenkens einer Liftachse und/oder einer Sattelstütze, ein Verriegeln und/oder Entriegeln des Laderaums) vorgegeben werden können.
- Möglich ist, dass über die Eingabe- und/oder Ausgabeeinrichtung eine Aktivierung und/oder Deaktivierung eines Diebstahlschutzsystems oder Diebstahlwarnsystems erfolgt.
- Möglich ist, dass über die Eingabe- und/oder Ausgabeeinrichtung eine Ausführung von Reset-Funktionen ausgelöst werden kann.
- Möglich ist, dass über die Eingabe- und/oder Ausgabeeinrichtung ein Lösen oder Betätigen der Parkbremse vorgegeben werden kann, sofern entsprechende Parameter erfüllt sind wie beispielsweise das Ankuppeln des Anhängers an das Zugfahrzeug, dass ein Vorratsdruck vorhanden ist, der größer ist als ein Schwellwert, dass das System in Ordnung ist u. ä.
- Möglich ist, dass über die Eingabe- und/oder Ausgabeeinrichtung, ggf. mit einer zugeordneten Schnittstelle oder einer drahtlosen Sende- und/oder Empfangseinrichtung, eine Kommunikation mit einem Smartphone beispielsweise des Fahrers und beispielsweise via Bluetooths, WLAN oder Mobilfunk erfolgt.
- Entsprechend kann eine Kommunikation mit Servern, beispielsweise eines Logistikunternehmens, einer Werkstatt, eines Fahrzeugherstellers oder eines Systemherstellers, erfolgen.
- Möglich ist, dass mittels der Eingabe- und/oder Ausgabeeinrichtung eine Kommunikation mit Cloudservern erfolgt, welche beispielsweise zum Datenmanagement, für eine Datenspeicherung und -dokumentation und/oder eine Datenanalyse erfolgen kann.
- Möglich ist auch, dass die Eingabe- und/oder Ausgabeeinrichtung einer Kommunikation mit eine Telematik-System, insbesondere des Zugfahrzeugs, der Umgebung oder einem satellitengesteuerten Telematik-System, dient.

Eine Integration der Eingabe- und/oder Ausgabeeinrichtung in die Ventileinrichtung nutzt aus, dass diese Ventileinrichtung infolge der Aufnahme des manuell betätigten Parkventils und des manuell betätigten Rangierventils an einer Stelle des Anhängers angeordnet werden muss, an welcher die manuellen Betätigungselemente des Parkventils und des Rangierventils gut zugänglich sind für den Benutzer. Ist dann an dieser Stelle auch die Eingabe- und/oder Ausgabeeinrichtung angeordnet, kann der Benutzer hier (neben der Betätigung des Parkventils und des Rangierventils) auch die erforderlichen Eingaben vornehmen und dem Benutzer können Ausgaben, insbesondere Informationen, zur Kenntnis gebracht werden, insbesondere angezeigt werden. Die Ventileinrichtung stellt damit eine "zentrale Stelle" für die Wechselwirkung des Benutzers mit der Ventileinrichtung und damit mit der Nutzfahrzeuganhänger-Druckluftanlage zur Verfügung. Auch wenn eine Kommunikation der Eingabe- und/oder Ausgabeeinrichtung mit der drahtlosen Sende- und/oder Empfangseinrichtung erfolgt, hat es sich als vorteilhaft erwiesen, wenn diese Sende- und/oder Empfangseinrichtung an der Stelle des Parkventils und des Rangierventils angeordnet ist, die üblicherweise im lateralen Seitenbereich des Anhängers angeordnet sind. Hier ist die drahtlose Übertragung von und zu der Sende- und/oder Empfangseinrichtung nicht durch andere Bauelemente gestört, sondern diese kann im Bereich der Außenseite des Anhängers erfolgen.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.

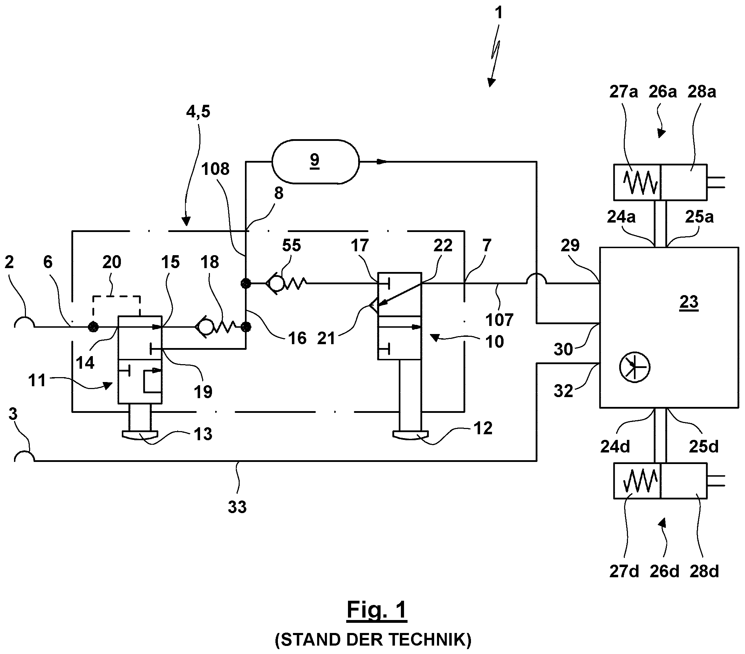

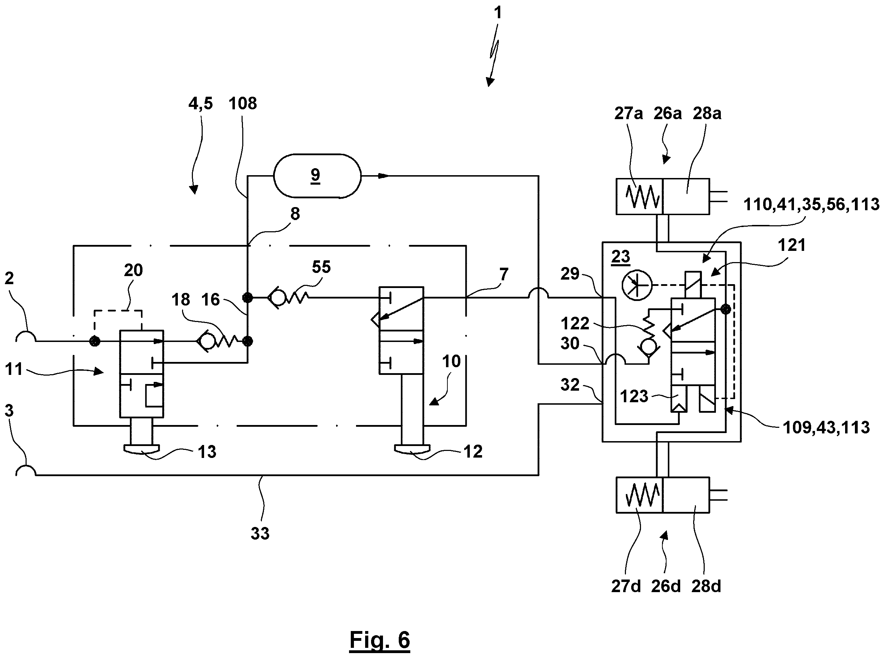

- **Fig.** 1 bis 20: zeigen schematisch unterschiedliche Ausgestaltungen von Nutzfahrzeuganhänger-Druckluftanlagen oder in einer Nutzfahrzeuganhänger-Druckluftanlage einsetzbaren Ventileinrichtungen, wobei die Ausgestaltungen gemäß den Fig. 6, 14, 17 und 18 nicht dem Wortlaut der Patentansprüche unterfallen.

### FIGURENBESCHREIBUNG

In den Figuren werden teilweise für Komponenten, die sich hinsichtlich der Gestaltung und/oder Funktionen zumindest teilweise entsprechen, dieselben Bezugszeichen verwendet. Finden in derselben Zeichnung dieselben Komponenten mehrfach Einsatz, sind diese Komponenten mit denselben Bezugszeichen und einem ergänzenden, unterscheidenden Buchstaben a, b, ... gekennzeichnet. Auf diese Komponenten wird dann mit oder ohne den ergänzenden Buchstaben a, b, ... Bezug genommen, womit dann lediglich eine Komponente, ein Teil der Komponenten in beliebiger Anzahl oder sämtliche Komponenten gemeint sein können, die mit diesem Bezugszeichen gekennzeichnet sind.

In den Figuren sind Nutzfahrzeuganhänger-Druckluftanlagen mit unterschiedlicher Komplexität, unterschiedlichen Funktionsumfängen, unterschiedlichen Verbraucherkreisen, ein- und zweikreisiger Betriebsbremsanlage, mit und ohne Luftfederkreis und/oder Liftachse und zugeordneten Lift- und Tragbälgen dargestellt. Es kann und soll im Rahmen der vorliegenden Offenbarung eine Verknüpfung der einzelnen Komponenten und Funktionalitäten, wie diese in unterschiedlichen Figuren dargestellt sind, miteinander erfolgen, wobei aber auch möglich ist, dass einzelne Komponenten und/oder Funktionalitäten entfallen können.

Fig. 1 zeigt eine Nutzfahrzeuganhänger-Druckluftanlage 1 gemäß dem Stand der Technik. Hier erfolgt eine Beaufschlagung von Kombi-Bremszylindern 26 mit Federspeicherkammer 27 und Betriebsbremskammer 28 über einen zugeordneten Parkbremsanschluss 24 und einen Betriebsbremsanschluss 25 einer EBS-Steuereinheit 23. Die Nutzfahrzeuganhänger-Druckluftanlage 1 verfügt über eine als Baueinheit 5 ausgebildete Ventileinrichtung 4, in die ein Parkventil 10 und ein Rangierventil 11 integriert sind. Gemäß dem Stand der Technik ist die Ventileinrichtung 4 passiv ausgebildet, so dass die Betriebsstellungen des Parkventils 10 und des Rangierventils 11 ausschließlich von dem Druck in einer Steuerleitung 20 und der manuellen Betätigung von Betätigungsknöpfen 12, 13 des Parkventils 10 und des Rangierventils 11 abhängen. Ein Eingangs- oder Versorgungsanschluss 14 sowie die Steuerleitung 20 sind über einen Versorgungsanschluss 6 der Ventileinrichtung 4 mit einem Kopplungskopf Vorrat 2 verbunden. Der in der Fahrstellung des Rangierventils 11 mit dem Eingangs- oder Versorgungsanschluss 14 verbundene Ausgangsanschluss 15 des Rangierventils 11 ist über eine Verbindungsleitung 16 mit einem Eingangsanschluss 17 des Parkventils 10 verbunden. In die Verbindungsleitung 16 sind Rückschlagventile 18, 55 integriert, die von dem Rangierventil 11 in Richtung des Parkventils 10 öffnen und in entgegengesetzte Richtung sperren. Zwischen den Rückschlagventilen 18, 55 zweigt eine Zweigleitung 108 ab, die über einen Behälteranschluss 8 der Ventileinrichtung 4 mit einem Vorratsbehälter 9 verbunden ist. Die Zweigleitung 108 ist auch mit einem Behälteranschluss 19 des Rangierventils 11 verbunden. In der in Fig. 1 nicht wirksamen Rangierstellung verbindet das Rangierventil 11 den Behälteranschluss 19 mit dem Ausgangsanschluss 15, während der Eingangs- oder Versorgungsanschluss 14 abgesperrt ist. In der in Fig. 1 wirksamen Parkstellung des Parkventils 10 sind ein Parkbremsanschluss 22 des Parkventils 10 und ein hiermit verbundener Parkbremsanschluss 7 der Ventileinrichtung 4 mit einem Entlüftungsanschluss 21 verbunden, während der Eingangsanschluss 17 abgesperrt ist. Hingegen ist in der in Fig. 1 nicht wirksamen Lösestellung des Parkventils 10 der Eingangsanschluss 17 mit dem Parkbremsanschluss 22 verbunden. Der Parkbremsanschluss 7 der Ventileinrichtung 4 ist über eine Parkbremsleitung 107 mit einem Parkbremsanschluss 29 der EBS-Steuereinheit 23 verbunden. Ein Behälteranschluss 30 der EBS-Steuereinheit 23 ist mit dem Vorratsbehälter 9 verbunden. Ein Bremssteueranschluss 32 der EBS-Steuereinheit 23 ist über eine Bremssteuerleitung 33 mit einem Kupplungskopf Bremse 3 verbunden.

Die Nutzfahrzeuganhänger-Druckluftanlage 1 gemäß Fig. 1 ermöglicht die folgenden Betriebszustände:
Erfolgt ein Anschluss der Kupplungsköpfe 2, 3 an entsprechende Kupplungsköpfe eines Zugfahrzeugs und erfolgt über den Kupplungskopf Vorrat 2 eine Bereitstellung eines Vorratsdrucks, führt die Druckbeaufschlagung der Steuerleitung 20 zur Umschaltung des Rangierventils 11 in die in Fig. 1 wirksame Fahrstellung. Druckluft gelangt von dem Kupplungskopf Vorrat 2 über das Rückschlagventil 18 zu dem Vorratsbehälter 9, welcher somit befüllt werden kann. Befindet sich gemäß Fig. 1 das Parkventil 10 noch in der Parkstellung, sind über das Parkventil 10 die Parkbremsanschlüsse 22, 7, 29 entlüftet, was zur Folge hat, dass die Federspeicherkammern 27 entlüftet sind und die Park- oder Federspeicherbremsen aktiviert sind. Durch manuelle Umschaltung des Parkventils 10 wird die Lösestellung des Parkventils 10 herbeigeführt. Bei hinreichendem Druck in dem Vorratsbehälter 9 erfolgt die Druckbeaufschlagung der Parkbremsanschlüsse 22, 7, 29, die zur Folge hat, dass die EBS-Steuereinheit 23 die Federspeicherkammern 27 belüftet, womit die Federspeicherbremsen gelöst werden. Das Fahrzeug ist somit fahrbereit.

Wird während des Fahrbetriebs an dem Zugfahrzeug, insbesondere über den Fahrer mittels des Bremspedals oder mittels eines autonomen Fahrsystems, ein Bremssteuerdruck erzeugt und an den Kupplungskopf Bremse 3 übertragen, gelangt dieser an den Bremssteueranschluss 32 der EBS-Steuereinheit 23, die dann eine entsprechende Druckbeaufschlagung der Betriebsbremskammern 28 herbeiführt. Hierbei kann zur Gewährleistung der Traktion eine Druckmodulation der Druckbeaufschlagung der Betriebskammern 28 durch die EBS-Steuereinheit 23 erfolgen, indem bei Erkennung eines Schlupfs an einem Fahrzeugrad der Druck in einer zugeordneten Betriebsbremskammer 28 so lange reduziert wird, bis die Traktion wiederhergestellt ist.

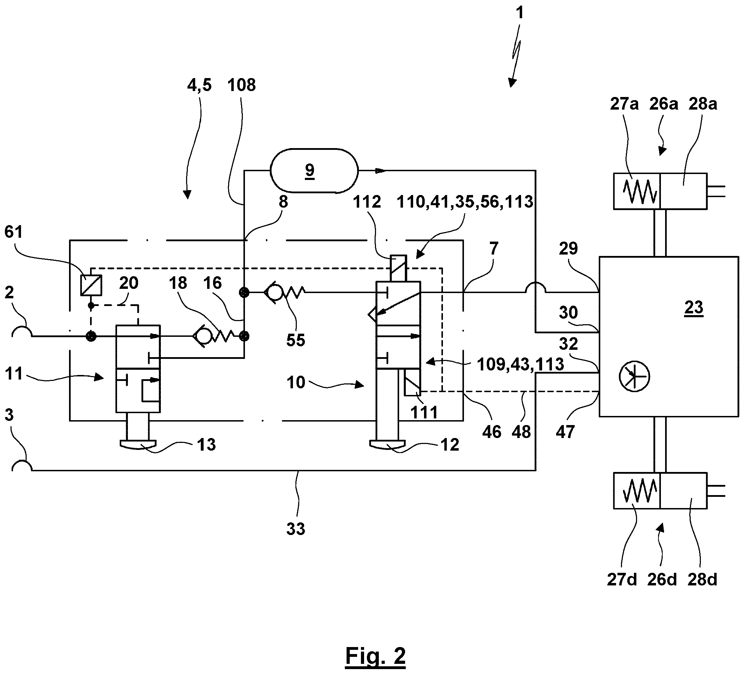

Für die im Folgenden angeführten Figuren gilt grundsätzlich das zu Fig. 1 Gesagte. Für das Ausführungsbeispiel gemäß **Fig. 2** ist aber die Ventileinrichtung 4 nicht passiv ausgebildet. Vielmehr verfügt die Ventileinrichtung 4 über einen ersten Aktuator 109, über den das Parkventil 10 elektronisch von der Lösestellung in die Parkstellung überführt werden kann, und über eine zweiten Aktuator 110, über den das Parkventil 10 elektronisch von der Parkstellung in die Lösestellung überführt werden. Für das in Fig. 2 dargestellte Ausführungsbeispiel sind die Aktuatoren 109, 110 jeweils als elektromagnetische Aktuatoren ausgebildet, welche entsprechend der elektrischen Bestromung zugeordneter Steueranschlüsse 111, 112 eine Magnetkraft erzeugen, die auf das Parkventil 10, hier ein Ventilelement des Parkventils 10 wie eine Schaltwelle oder ein Ventilschieber, so einwirken, dass die genannte Änderung der Betriebsstellung infolge der Magnetkraft herbeigeführt wird.

Während grundsätzlich (wie auch im Folgenden noch gezeigt wird) möglich ist, dass die elektronische Ansteuerung der Steueranschlüsse 111, 112 durch eine elektronische Steuereinheit erfolgt, die in die Ventileinrichtung 4 integriert ist, verfügt für das in Fig. 2 dargestellte Ausführungsbeispiel die Ventileinrichtung 4 über einen elektrischen Steueranschluss 46, über welchen mittels einer Steuerleitung 48 ein Steuersignal von einem Steueranschluss 47 der EBS-Steuereinheit 23 übertragen werden kann. Somit ist die EBS-Steuereinheit 23 für dieses Ausführungsbeispiel für die Ansteuerung des Parkventils 10 verantwortlich.

Optional kann in die Ventileinrichtung 4 ein Drucksensor 61 integriert sein, der hier den Druck in der Steuerleitung 20 und damit an dem Kupplungskopf Vorrat 2 erfasst. Das Messsignal des Drucksensors 21 kann über die Steuerleitung 48 an die EBS-Steuereinheit 23 übertragen werden, so dass es sich bei der Steuerleitung 48 auch um eine bidirektionale elektrische Leitung handeln kann, ein Datenbussystem u. ä.

Die elektronische Ansteuerung des Parkventils 10 kann alternativ oder kumulativ die folgenden Funktionen gewährleisten, wozu die zugeordnete elektronische Steuereinheit, hier die EBS-Steuereinheit 23, die entsprechende Steuerlogik aufweisen kann:
a) Möglich ist, dass mittels der Ansteuerung des Aktuators 110 eine Notbremseinrichtung 41 zwecks Gewährleistung einer Notbremsfunktion bereitgestellt ist. Wird eine Notbremssituation von der steuernden Steuereinheit erkannt, erfolgt durch Bestromung des Steueranschlusses 112 die Überführung des Parkventils 10 in die Parkstellung, womit dann auch im Fahrbetrieb des Anhängers die Federspeicherbremsen aktiviert werden können, womit eine Notbremsung herbeigeführt wird. Die Erkennung der Notbremssituation kann beispielsweise mittels einer Verkehrsüberwachung, eines Unfallvermeidungssystems oder bei Erkennung einer gesundheitsbedingten mangelnden Fahrtüchtigkeit des Fahrers erfolgen. Vorzugsweise erfolgt die Ausführung der Notbremsfunktion mittels der Bestromung des Steueranschlusses 112 ausschließlich oder auch dann, wenn erkannt wird, dass der Druck an dem Kupplungskopf Vorrat 2 abfällt. Dies kann insbesondere detektiert werden mittels des Drucksensors 61. Ein derartiger Druckabfall kann im Fahrbetrieb des Anhängers erfolgen, wenn sich im Bereich des Kupplungskopfs Vorrat 2 ein Abriss oder eine Leckage ergibt oder die Druckluftversorgung von dem Zugfahrzeug anderweitig einbricht.
b) Möglich ist, dass der Aktuator 110 eine Immobilisiereinrichtung 56 bildet. Diese Immobilisiereinrichtung 56 überführt das Parkventil 10 in die Parkstellung oder hält die Parkstellung desselben aufrecht, wenn keine hinreichende Authentifizierung dafür vorliegt, dass ein Fahrbetrieb des Anhängers zugelassen wird.
   Eine derartige Authentifizierung kann beispielsweise darin bestehen, dass die steuernde Steuereinheit erkennt, dass die Kupplungsköpfe 2, 3 und unter Umständen auch ein elektrisches oder elektronisches Interface des Anhängers an entsprechende Kupplungsköpfe und ein Interface des Zugfahrzeugs angeschlossen sind, welches mit dem Anhänger betrieben werden darf, während für die Erkennung eines anderen Zugfahrzeugs keine Authentifizierung erfolgt. So können beispielsweise in der Steuereinheit die Zugfahrzeuge abgespeichert sein, die in einem Fuhrpark vorhanden sind und berechtigt sind, den Anhänger desselben Fuhrparks zu ziehen.
   Des Weiteren möglich ist, dass die Immobilisiereinrichtung 56 in die Parkstellung überführt wird, wenn sich nicht der Fahrer des Zugfahrzeugs authentifiziert hat. Dies kann durch Eingabe eines Passworts oder anderweitigen Codes, beispielsweise in ein Smartphone oder eine Eingabeeinrichtung in der Fahrerkabine, erfolgen. Möglich ist auch, dass die Authentifizierung durch eine Abfrage einer vorgegebenen Betätigungsreihenfolge für Bedienelemente des Zugfahrzeugs wie Pedale, Schalter u. ä. erfolgt.
   Alternativ oder kumulativ möglich ist, dass die Immobilisiereinrichtung 56 in die Parkstellung umgeschaltet wird, wenn über eine dann vorhandene Funkverbindung der steuernden Steuereinheit mitgeteilt wird, dass der Anhänger gestohlen worden ist oder unberechtigt bewegt worden ist, womit dann eine Wegfahrsperre bereitgestellt ist.
c) Möglich ist, dass die Betätigung des Aktuators 110 zwecks Bereitstellung einer Park-Sicherheitseinrichtung 35 betätigbar ist. Diese Park-Sicherheitseinrichtung 35, die bei der Anmelderin auch unter der Kennzeichnung "Safe Parking" vertrieben wird, gewährleistet, dass für den Fall, dass der Anhänger von dem Fahrer abgestellt wird, und der Fahrer vergisst, das Parkventil 10 manuell in die Parkstellung zu überführen, die Kupplungsköpfe 2, 3 des Anhängers von dem Zugfahrzeug abgekuppelt werden und der Anhänger somit ohne die Betätigung der Parkbremsen wegrollen könnte, automatisch eine Überführung des Parkventils 10 in die Parkstellung erfolgt. Eine Ansteuerung des Steueranschlusses 112 für die Gewährleistung der Park-Sicherheitseinrichtung 35 kann somit erfolgen, wenn erkannt wird, dass ein Abkoppeln des Zugfahrzeugs von dem Anhänger erfolgt. Dies kann durch einen mechanischen Kopplungssensor zwischen Zugfahrzeug und Anhänger, den Drucksensor 61, der die Entlüftung des Kupplungskopfs Vorrat 2 mit dem Abkoppeln erkennt oder auch durch Detektierung einer Vergrößerung der Entfernung zwischen dem Zugfahrzeug und dem Anhänger erkannt werden. Bei derartiger Erkennung steuert die EBS-Steuereinheit 23 den Aktuator 110 so an, dass die Parkstellung des Parkventils 10 herbeigeführt wird.
d) Möglich ist auch, dass der Aktuator 109 eine Notbremsfunktion-Overrideeinrichtung 43 bildet. Die Notbremsfunktion-Overrideeinrichtung 43 stellt eine Notbremsfunktion-Overridefunktion bereit. Würde ohne Bestromung des Steueranschlusses 111 des Aktuators 109 eine Notbremsfunktion durch Umschalten des Parkventils 10 in die Parkstellung erfolgen (insbesondere durch Betätigung der Notbremseinrichtung 41), kann durch Betätigung der Notbremsfunktion-Overrideeinrichtung 43 die Notbremsfunktion unterbunden werden, so dass bis auf Weiteres das Parkventil 10 in der Lösestellung verbleibt. Erkennt beispielsweise die Steuereinheit einen Abfall des Drucks an dem Kupplungskopf Vorrat 2 infolge eines Abrisses eines Kupplungkopfs oder einer Leckage, würde die unmittelbare Ausführung der Notbremsfunktion durch die Notbremseinrichtung 41 dazu führen, dass der Anhänger über die Feststellbremsen abgebremst würde, obwohl der Druck in dem Vorratsbehälter 9 gegenüber einem Druckabfall über den Kupplungskopf Vorrat 2 gesichert wäre und der Druck in dem Vorratsbehälter 9 noch abgestufte und modulierte Betriebsbremsungen über den Bremssteuerdruck an dem Kupplungskopf Bremse 3 über die EBS-Steuereinheit 23 und entsprechende Beaufschlagung der Betriebsbremskammern 28 ermöglichen würde. In diesem Fall unterbindet die Notbremsfunktion-Overrideeinrichtung 43 so lange die Notbremsfunktion, wie noch eine zuverlässige Abbremsung über die Betriebsbremsen gewährleistet ist. Die Notbremsfunktion wird dann beispielsweise lediglich erst dann zugelassen, indem die Betätigung der Notbremsfunktion-Overrideeinrichtung 43 beendet wird, wenn der Druck in dem Vorratsbehälter 9 einen Schwellwert unterschritten hat, wobei dieser Schwellwert vorzugsweise mit dem erforderlichen Druck für eine Betätigung der Betriebsbremsen zwecks Gewährleistung einer minimalen Betriebsbremskraft oder einer vorbestimmten Anzahl einer Abbremsung des Anhängers bis zum Stillstand entspricht.
e) Möglich ist des Weiteren, dass durch ein Zusammenspiel der Aktuatoren 109, 110 eine Herbeiführung einer Abbremsung des Anhängers über die Federspeicherbremsen erfolgt, bei welchen die Federspeicherkammern 27 nicht vollständig entlüftet werden, sondern eine abgestufte oder sogar modulierte Abbremsung über die Federspeicherbremsen möglich ist. Durch Hin- und Herschalten des Parkventils 10 kann in der Parkstellung eine Druckreduktion in den Federspeicherkammern 27 erfolgen, während durch Überführung des Parkventils 10 mittels der Aktuatoren 109, 110 in die Lösestellung eine Druckerhöhung erfolgen kann, indem die Federspeicherkammern 27 mit dem Vorratsbehälter 9 verbunden werden.
   Um lediglich einige die Erfindung nicht beschränkende Beispiele zu nennen, kann auf diese Weise eine abgestufte Bremsung herbeigeführt werden, wenn erkannt wird, dass der Anhänger auf das Zugfahrzeug aufläuft. Dies kann beispielsweise anhand eines Kopplungskraftsensors zwischen dem Zugfahrzeug und dem Anhänger erkannt werden.
   Möglich ist auch, dass auf diese Weise eine abgestufte Bremskraft über die Feststellbremsen herbeigeführt wird, welche einem Schleppmoment des Zugfahrzeugs entspricht. Bei diesem Schleppmoment handelt es sich um eine Bremskraft in dem Zugfahrzeug, die entsteht, ohne dass die Betriebsbremsen des Zugfahrzeugs betätigt werden. Beispielsweise kann diese Bremskraft auf der erforderlichen Beschleunigung einer trägen Masse des Antriebsstrangs bei einem Herunterschalten, Reibung im Antriebsstrang und insbesondere in dem Getriebe oder auf dem Schleppmoment infolge der Bewegung der Kolben der Brennkraftmaschine und einer etwaigen Verdichtung in den Zylindern der Bremskraftmaschine beruhen.
   Möglich wäre auch, dass im Fall eines Defekts oder in ausgewählten Betriebssituationen eine Erfassung des Drucks an dem Kupplungskopf Bremse 3 erfolgt und anstelle der Aussteuerung eines Betriebsbremsdrucks für die Betriebsbremskammern 28 mittels der Ansteuerung der Aktuatoren 109, 110 ein abgestufter Bremsdruck für die Federspeicherkammern ausgesteuert wird, der eine Bremskraft über die Feststellbremsen erzeugt, die der Bremskraft entspricht, die sich aus dem Bremssteuerdruck an dem Kupplungskopf Vorrat 3 ergibt.
   Mit dem Zusammenspiel der Aktuatoren 109, 110 zur Erzeugung eines abgestuften, konstanten veränderlichen oder modulierten Drucks für die Federspeicherkammern ist eine Bremsstufeinrichtung 113 gebildet.

Die vorgenannten Funktionen und die Park-Sicherheitseinrichtung 35, die Notbremseinrichtung 41, die Notbremsfunktion-Overrideeinrichtung 43, die Immobilisiereinrichtung 56 und/oder die Bremsstufeinrichtung 113 können mittels der Aktuatoren 109, 110 und der steuernden Steuerlogik der elektronischen Steuereinheit, hier der EBS-Steuereinheit 23 bereitgestellt werden. Hierbei umfasst eine Steuerung auch eine Regelung.

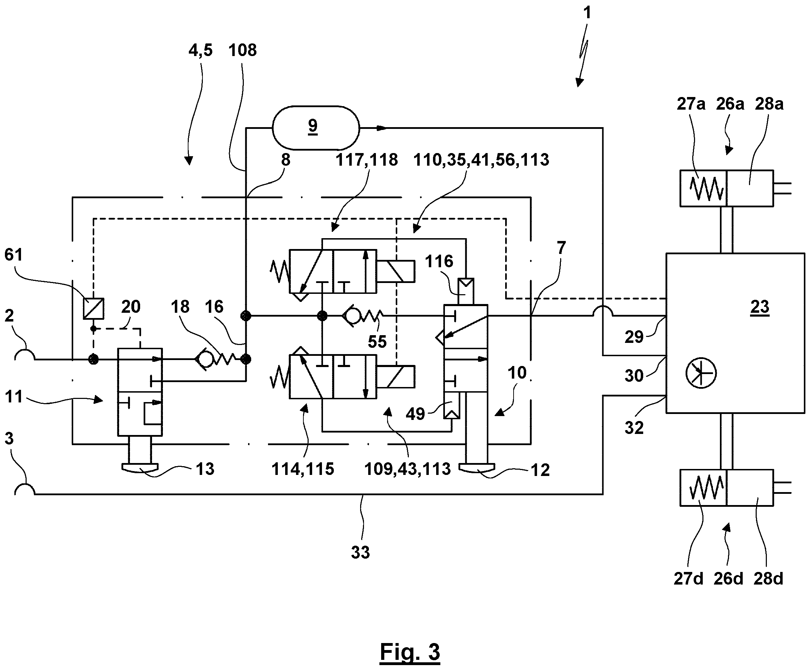

Während gemäß Fig. 2 die Aktuatoren 109, 110 direkt elektronisch gesteuert sind, zeigt **Fig. 3** eine Ausführungsform, in der Aktuatoren 109, 110 elektropneumatisch gesteuert sind. Der Aktuator 109 verfügt über ein Magnetventil 114, welches hier als 3/2-Wege-Magnetventil 115 ausgebildet ist und stromlos infolge der Beaufschlagung durch eine Feder seine Entlüftungsstellung einnimmt, während dieses mit einem elektrischen Steuersignal an dem Steueranschluss 111 in die Belüftungsstellung umgeschaltet werden kann. Über das Magnetventil 114 wird ein pneumatischer Steueranschluss 49 des Parkventils 10 angesteuert, dessen Druckbeaufschlagung zu einer Überführung des Parkventils 10 in die Lösestellung führt. In der Belüftungsstellung verbindet das Magnetventil 114 den Steueranschluss 49 mit dem Vorratsbehälter 9.

Entsprechend ist der Aktuator 110 mit einem Steueranschluss 116 des Parkventils 10, dessen Druckbeaufschlagung das Parkventil 10 in die Parkstellung überführt, und einem Magnetventil 117, hier ebenfalls in Ausgestaltung als 3/2-Wegemagnetventil 118, ausgebildet. Das Magnetventil 117 nimmt ohne Bestromung infolge der Wirkung einer Feder seine Entlüftungsstellung ein, während dieses mit Bestromung seine Belüftungsstellung einnimmt, in der dieses den Vorratsbehälter 9 mit dem Steueranschluss 116 verbindet.

Die mit der Ventileinrichtung 4 gewährleisteten Funktionen entsprechen den Funktionen, die mit der Ventileinrichtung 2 gewährleistet werden können.

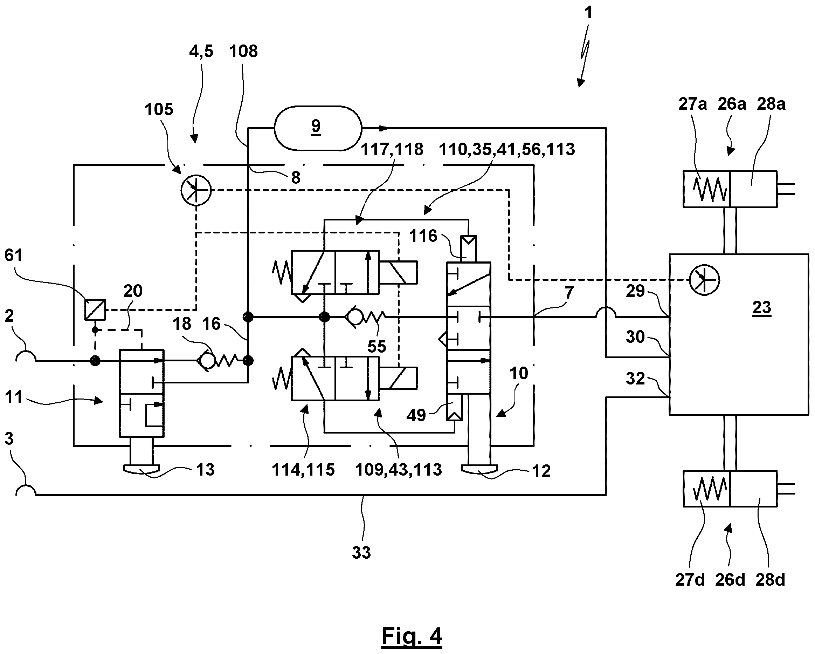

Das in **Fig. 4** dargestellte Ausführungsbeispiel entspricht bis auf Weiteres dem Ausführungsbeispiel gemäß Fig. 3. Allerdings erfolgt hier die Ansteuerung der Magnetventile 114, 117 durch eine elektronische Steuereinheit 105, die in die Ventileinrichtung 4 integriert ist. Die elektronische Steuereinheit 105 kann dabei mit der EBS-Steuereinheit 23 kommunizieren, wobei auch möglich ist, dass die Ansteuerung der Magnetventile 114, 117 redundant durch eine der Steuereinheiten 105, 23 erfolgen kann und/oder die Steuereinheiten 23, 105 jeweils unterschiedliche Teilsteuerfunktionen übernehmen.

Für das Ausführungsbeispiel gemäß Fig. 4 verfügt das Parkventil nicht lediglich über eine Parkstellung und eine Lösestellung. Vielmehr weist das Parkventil 10 in diesem Fall auch eine mittige Sperrstellung auf, in der sämtliche Anschlüsse 17, 21, 22 des Parkventils 10 abgesperrt sind und ein Druck in der Parkbremsleitung 107 aufrechterhalten werden kann. Dies ist insbesondere für die Nutzung der Aktuatoren 109, 110 als Bremsstufeinrichtung 113 wie beschrieben vorteilhaft, da in der mittigen Betriebsstellung des Parkventils 10 ein abgestufter Parkbremsdruck aufrechterhalten werden kann.

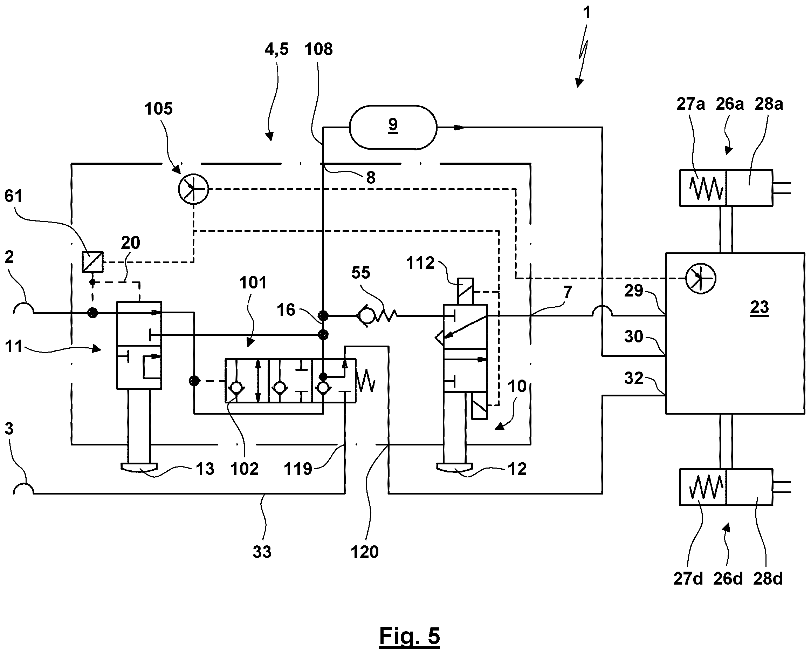

Das in **Fig. 5** dargestellte Ausführungsbeispiel entspricht im Wesentlichen dem Ausführungsbeispiel gemäß Fig. 2, wobei hier entsprechend Fig. 4 auch eine elektronische Steuereinheit 105 in die Ventileinrichtung 4 integriert ist. Allerdings ist hier nicht der Kupplungskopf Bremse 3 unmittelbar mit dem Bremssteueranschluss 32 der EBS-Steuereinheit 23 verbunden. Vielmehr ist hier der Kupplungskopf Bremse 3 über einen Bremssteuereingang 119 der Ventileinrichtung 4 mit dieser verbunden. Ein Bremssteuerausgang 120 der Ventileinrichtung 4 ist mit dem Bremssteuereingang 32 der EBS-Steuereinheit 23 verbunden. In der Ventileinrichtung 4 ist der Bremssteuereingang 119 über ein Anhängerbremsventil 101 mit dem Bremssteuerausgang 120 verbunden. Das Anhängerbremsventil 101 wird von dem Ausgangsdruck des Rangierventils 11 (also je nach Stellung des Rangierventils 11 von dem Druck an dem Kupplungskopf Vorrat 2 oder von dem Druck in dem Behälter 9) angesteuert. Das Anhängerbremsventil 101 ist hier als 4/3-WegeVentil ausgebildet. Ein erster Eingang ist mit dem Ausgang des Rangierventils 11 verbunden. Ein zweiter Eingang ist mit dem Kupplungskopf Bremse 3 verbunden. Ein erster Ausgang ist über das Rückschlagventil 55 mit dem Eingangsanschluss 17 des Parkventils 10 verbunden. Ein zweiter Ausgang ist mit dem Vorratsbehälter 9 verbunden.

In einer ersten Betriebsstellung des Anhängerbremsventils 101, die durch eine Feder und ohne pneumatische Ansteuerung eingenommen wird, verbindet das Anhängerbremsventil 101 den mit dem Rangierventil 11 verbundenen Eingangsanschluss über ein Rückschlagventil 102 sowohl mit dem Vorratsbehälter 9 als auch über das Rückschlagventil 55 mit dem Eingangsanschluss 17 des Parkventils 10, während der mit dem Kupplungskopf Bremse 3 verbundene Eingangsanschluss abgesperrt ist. Der erstgenannte Ausgangsanschluss ist auch mit dem Vorratsbehälter 9 verbunden. In dieser Betriebsstellung wird über das Anhängerbremsventil 101 dem Bremssteueranschluss 32 der EBS-Steuereinheit 23 der Druck des Vorratsbehälters 9 zugeführt, so dass bei hinreichendem Druck in dem Vorratsbehälter 9 eine Bremsung des Anhängers über die Betriebsbremsen erfolgen kann. Nimmt das Parkventil die Lösestellung ein, wirkt auf die Federspeicherbremsen des Anhängers ebenfalls der Druck in dem Vorratsbehälter 9 ein. Verringert sich der Druck in dem Vorratsbehälter 9, erfolgt eine zunehmen Erzeugung der Bremswirkung über die Federspeicherbremsen, während die von den Betriebsbremsen erzeugte Bremswirkung entsprechend kleiner wird.

Ist der Kupplungskopf Vorrat 2 an das Zugfahrzeug angekuppelt und liegt eine ordnungsgemäße Druckluftversorgung vor, wird das Anhängerbremsventil 101 in die dritte Ventilstellung überführt. In dieser Ventilstellung ist das Rangierventil 11 über das Rückschlagventil 102 mit dem Ausgang des Anhängerbremsventils 101 verbunden, der sowohl mit dem Vorratsbehälter 9 als auch über das Rückschlagventil 55 mit dem Parkventil 10 verbunden ist. Befindet sich das Parkventil 10 in der Lösestellung, hat dies das Lösen der Federspeicherbremsen zur Folge, so dass der Anhänger fahrbereit ist. In dieser Ventilstellung verbindet das Anhängerbremsventil 101 den Kupplungskopf Bremse 3 mit dem Ausgang des Anhängerbremsventils 101, der über die Bremssteuerleitung 33 mit dem Bremssteueranschluss 32 der EBS-Steuereinheit verbunden ist. Somit kann in dieser Ventilstellung, die der Fahrtstellung entspricht, entsprechend der Vorgabe des Bremssteuerdrucks an dem Kupplungskopf Bremse 3 mittels der EBS-Steuereinheit 23 ein geeigneter Bremssteuerdruck für die Betriebsbremsen ausgesteuert werden.

Sinkt der Druck an dem Steueranschluss des Anhängerbremsventils 101, beispielsweise infolge einer Leckage im Bereich des Kupplungskopfs Vorrat 2, wird das Anhängerbremsventil 101 in eine mittige Ventilstellung (temporär, lediglich zwecks Vermeidung einer Zwitterstellung) umgeschaltet. In dieser mittigen Ventilstellung bleibt die Verbindung des Rangierventils über das Rückschlagventil 102 des Anhängerbremsventils 101 mit dem Vorratsbehälter 9 und über das Rückschlagventil 55 mit dem Eingangsanschluss 17 des Parkventils 10 bestehen. Das Rückschlagventil 102 sichert trotz des Abfalls des Drucks an dem Kupplungskopf Vorrat 2 den Lösedruck in den Federspeicherbremsen, die in der Fahrtstellung des Parkventils 10 weiterhin von dem Druck in dem Vorratsbehälter 9 beaufschlagt werden. In dieser mittigen Betriebsstellung ist die Verbindung des Kupplungskopfs Bremse 3 mit dem Bremssteueranschluss 32 der EBS-Steuereinheit 23 unterbrochen. Der weitere Druckabfall an dem Kupplungskopf Vorrat 2 führt dann aber zu der erstgenannten Betriebsstellung mit der Herbeiführung einer Notbremsung. In diesem Fall kann durch Betätigung der Notbremsfunktion-Overrideeinrichtung 43 lediglich die Entlüftung der Federspeicherkammern über das Anhängerbremsventil 101 temporär außer Kraft gesetzt werden, während in der Notbremssituation auch bei Betätigung der Notbremsfunktion-Overrideeinrichtung 43 der Druck des Vorratsbehälters 9 dem Bremssteueranschluss 32 zugeführt wird, womit dann hier eine modulierte gesicherte Abbremsung über die Betriebsbremse erfolgen kann. Erst mit einem hinreichenden Druckabfall in dem Vorratsbehälter 9 kann dann die Notbremsfunktion-Overrideeinrichtung 43 deaktiviert werden, womit die Federspeicherbremse einen Beitrag zur Notbremskraft liefert, wobei dann unter Umständen keine Druckmodulation dieses Beitrags durch die EBS-Steuereinheit 23 erfolgt.

**Fig.** 6 zeigt eine nicht vom Wortlaut der Patentansprüche umfasste Ausführungsform, bei welcher die Nutzfahrzeuganhänger-Druckluftanlage 1 grundsätzlich entsprechend Fig. 1 ausgebildet ist. Allerdings ist hier neben dem nur manuell betätigten Parkventil 10 ein über die Aktuatoren 109, 110 ansteuerbares zweites Parkventil 121 vorhanden. Dieses zweite Parkventil 121 kann in die Ventileinrichtung 4 integriert sein. Für das Ausführungsbeispiel gemäß Fig. 6 ist allerdings das zweite Parkventil 121 in die EBS-Steuereinheit 23 integriert.

Das zweite Parkventil 121 ist als 3/2-Wegeventil ausgebildet mit einer in Fig. 6 wirksamen Parkstellung, in der das zweite Parkventil 121 die Federspeicherkammern 28 entlüftet, und einer Lösestellung, in der das zweite Parkventil 121 die Federspeicherkammern 28 über ein Rückschlagventil 122 mit dem Behälteranschluss 30 der EBS-Steuereinheit 23 und somit dem Vorratsbehälter 9 verbindet. Der von dem Parkventil 10 ausgesteuerte Parkbremsdruck an dem Parkbremsanschluss 29 der EBS-Steuereinheit beaufschlagt einen pneumatischen Steueranschluss 123 des zweiten Parkventils 121. Über die pneumatische Beaufschlagung des Steueranschlusses 123 kann das zweite Parkventil 121 von der Parkstellung in die Lösestellung überführt werden. Die mit den Aktuatoren 109, 110 des zweiten Parkventils 121 herbeigeführten Funktionalitäten entsprechen den zuvor erläuterten Funktionalitäten.

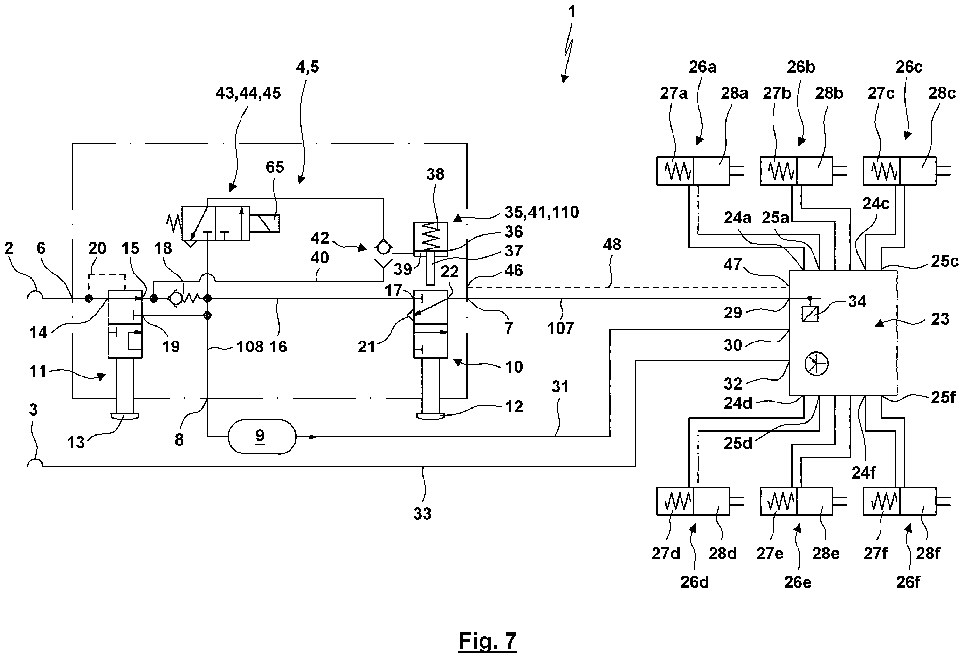

**Fig. 7** zeigt eine Nutzfahrzeuganhänger-Druckluftanlage 1, die über einen Kupplungskopf Vorrat 2 mit einem versorgenden Kupplungskopf des Zugfahrzeugs sowie über einen Kupplungskopf Bremse 3 mit einem einen Bremssteuerdruck vorgebenden Kupplungskopf des Zugfahrzeugs verbunden ist. Hierbei kann der über den Kupplungskopf Bremse 3 übertragene Bremssteuerdruck von dem Fahrer über das Bremspedal vorgegeben werden und/oder von einem autonomen Fahrsystem mit einem automatisch erzeugten Bremssteuersignal vorgegeben werden.

Die Nutzfahrzeuganhänger-Druckluftanlage 1 verfügt über eine Ventileinrichtung 4, die als Baueinheit 5 ausgebildet ist. Die Ventileinrichtung 4 verfügt über einen eingangsseitigen Versorgungsanschluss 6. Der Versorgungsanschluss 6 ist (hier unmittelbar) mit dem Kupplungskopf Vorrat 2 verbunden. Des Weiteren verfügt die Ventileinrichtung 4 ausgangsseitig über einen Parkbremsanschluss 7. Die Ventileinrichtung 4 weist auch einen Behälteranschluss 8 auf. An dem Behälteranschluss 8 ist ein Vorratsbehälter 9 angeschlossen. Für das in Fig. 7 dargestellte Ausführungsbeispiel weist die Ventileinrichtung 4 ausschließlich die pneumatischen Anschlüsse 6, 7, 8 auf, wobei dies nicht zwingend der Fall ist, wie dies auch für andere Fig. noch dargestellt wird.

Die Ventileinrichtung 4 weist ein Parkventil 10 und ein Rangierventil 11 auf. Das Parkventil 10 und das Rangierventil 11 sind jeweils über manuelle Betätigungsknöpfe 12, 13 manuell betätigbar. Das Rangierventil 11 weist einen Eingangs- oder Versorgungsanschluss 14 auf. Der Versorgungsanschluss 14 ist (hier unmittelbar) über den Versorgungsanschluss 6 mit dem Kupplungskopf Vorrat 2 verbunden. Des Weiteren weist das Rangierventil 11 einen Ausgangsanschluss 15 auf, der über eine Verbindungsleitung 16 mit einem Eingangsanschluss 17 des Parkventils 10 verbunden ist. In der Verbindungsleitung 16 ist ein in Richtung des Parkventils 10 öffnendes Rückschlagventil 18 angeordnet. Das Rangierventil 11 weist des Weiteren einen Behälteranschluss 19 auf. Der Behälteranschluss 19 des Rangierventils 11 ist über den Behälteranschluss 8 der Ventileinrichtung 4 mit dem Vorratsbehälter 9 verbunden. Das Rangierventil 11 ist als 3/2-Wegeventil ausgebildet. In der in Fig. 7 wirksamen Schaltstellung, (welche eine Fahrstellung für ordnungsgemäß angekuppelten Kupplungskopf Vorrat 2 ist) verbindet das Rangierventil den Versorgungsanschluss 14 mit dem Ausgangsanschluss 15, während der Behälteranschluss 19 abgesperrt ist. Hingegen verbindet in der in Fig. 7 nicht wirksamen, anderen Schaltstellung (die eine Rangierstellung für abgekuppelten Anhänger ist) das Rangierventil 11 den Behälteranschluss 19 mit dem Ausgangsanschluss 15, während in dieser Betriebsstellung der Versorgungsanschluss 14 abgesperrt ist. Über eine Steuerleitung 20 wird ein Steuerkolben des Rangierventils 11 so mit dem Druck an dem Versorgungsanschluss 14 beaufschlagt, dass bei vorliegendem Druck an dem Versorgungsanschluss 14 das Rangierventil 11 die in Fig. 7 wirksame Stellung einnimmt.

Das Parkventil 10 ist ebenfalls als manuell betätigtes 3/2-Wegeventil ausgebildet und verfügt neben dem Eingangsanschluss 17 über einen Entlüftungsanschluss 21 und einen Parkbremsanschluss 22, der hier unmittelbar mit dem Parkbremsanschluss 7 der Ventileinrichtung 4 verbunden ist. In der in Fig. 7 wirksamen Parkstellung verbindet das Parkventil 10 den Parkbremsanschluss 22 mit dem Entlüftungsanschluss 21, während der Eingangsanschluss 17 abgesperrt ist. Hingegen verbindet das Parkventil 10 in einer Lösestellung den Eingangsanschluss 17 mit dem Parkbremsanschluss 22, während der Entlüftungsanschluss 21 abgesperrt ist.

Die mittels des Parkventils 10 und des Rangierventils 11 gewährleiste Grundfunktion ist wie folgt: Wird an dem Kupplungskopf Vorrat 2 der Kupplungskopf des Zugfahrzeugs angeschlossen, führt die Druckbeaufschlagung des Versorgungsanschlusses 14 des Rangierventils 11 dazu, dass dieses in die erste Betriebsstellung gemäß Fig. 7 überführt wird. Die Druckluft von dem Zugfahrzeug strömt über den Kupplungskopf Vorrat 2, den Versorgungsanschluss 14, das Rangierventil 11 und den Ausgangsanschluss 15 unter Öffnung des Rückschlagventils 18 durch die Verbindungsleitung 16 zu dem Eingangsanschluss 17 des Parkventils 10. Von der Verbindungsleitung 16 zweigt eine Zweigleitung 108 ab, die zu dem Behälteranschluss 8 und damit zu dem Vorratsbehälter 9 führt. Bei angeschlossenem Kupplungskopf Vorrat 2 kann der Vorratsbehälter 9 somit mittels von dem Zugfahrzeug bereitgestellter Druckluft gefüllt werden. Befindet sich in der beschriebenen Betriebssituation das Parkventil 10 in der Parkstellung, ist der Parkbremsanschluss 22 des Parkventils 10 und damit der Parkbremsanschluss 7 der Ventileinrichtung 4 über den Entlüftungsanschluss 21 entlüftet, was (wie im Folgenden noch beschrieben wird) zur Entlüftung der Federspeicherbremsen und damit Betätigung der Parkbremsen des Anhängers führt. Wird hingegen manuell das Parkventil 10 in die Lösestellung überführt, führt die erläuterte Druckbeaufschlagung der Verbindungsleitung 16 dazu, dass an dem Parkbremsanschluss 22 des Parkventils 10 und damit an dem Parkbremsanschluss 7 der Ventileinrichtung 4 Druckluft ansteht, die (bei hinreichender Höhe des Drucks) dazu führt, dass (wie im Späteren noch im Detail beschrieben wird) die Federspeicherbremsen gelöst werden.

Wird (beispielsweise nach einem Fahrbetrieb) der Kupplungskopf Vorrat 2 abgekuppelt und befindet sich das Parkventil 10 in der Lösestellung, kann der Druck in den Federspeicherbremsen durch die Sicherung mittels des Rückschlagventils 18 aufrechterhalten werden. Eine Betätigung der Federspeicherbremsen setzt somit grundsätzlich voraus, dass eine Überführung des Parkventils 10 in die Parkstellung erfolgt. Soll nach Aktivierung der Parkstellung und somit Betätigung der Federspeicherbremsen, aber bei weiterhin abgekoppeltem Zugfahrzeug ein Rangieren des Anhängers ermöglicht werden, erfordert das Lösen der Federspeicherbremsen (neben der Überführung des Parkventils in die Lösestellung), dass Druckluft in der Verbindungsleitung 16 bereitgestellt wird. Dieses Druckluft wird für abgekuppelten Anhänger bereitgestellt, indem das Rangierventil 11 manuell umgeschaltet wird in die Rangierstellung, in der Druckluft von dem Vorratsbehälter 9 über den Behälteranschluss 8 und die Zweigleitung 108 zu dem Behälteranschluss 19 des Rangierventils 11 strömen kann und von dem Behälteranschluss 19 zu dem Ausgangsanschluss 15 und dem in diese Richtung öffnenden Rückschlagventil 18 in die Verbindungsleitung 16 strömen kann, womit dann letzten Endes zum Rangieren die Federspeicherbremsen belüftet werden können. Wird dann der Kupplungskopf Vorrat 2 wieder mit dem Zugfahrzeug verbunden, führt der Druck an dem Kupplungskopf Vorrat 2 und in der Steuerleitung 20 dazu, dass das Rangierventil 11 automatisch von der Rangierstellung in die in Fig. 7 wirksame andere Ventilstellung überführt wird.

Die Nutzfahrzeuganhänger-Druckluftanlage 1 verfügt des Weiteren über eine elektronische EBS-Steuereinheit 23. Die EBS-Steuereinheit 23 verfügt über ausgangsseitige Parkbremsanschlüsse 24a bis 24f sowie Betriebsbremsanschlüsse 25a bis 25f. Kombi-Bremszylinder 26a bis 26f verfügen jeweils über eine Federspeicherkammer 27a bis 27f und eine Betriebsbremskammer 28a bis 28f. Die Federspeicherkammern 27 sind mit den Parkbremsanschlüssen 24 verbunden, während die Betriebsbremskammern 28 mit den Betriebsbremsanschlüssen 25 verbunden sind.

Die EBS-Steuereinheit 23 weist eingangsseitig einen Parkbremsanschluss 29 auf, der über eine Parkbremsleitung 107 mit dem Parkbremsanschluss 7 der Ventileinrichtung 4 verbunden ist. Des Weiteren verfügt die EBS-Steuereinheit 23 über einen Behälteranschluss 30, der über eine Behälterleitung 31 mit dem Vorratsbehälter 9 verbunden ist. Die EBS-Steuereinheit 23 weist auch einen Bremssteueranschluss 32 auf, der über eine Bremssteuerleitung 33 mit dem Kupplungskopf Bremse 3 verbunden ist.

In die EBS-Steuereinheit 23 kann ein Drucksensor 34 integriert sein, der für das dargestellte Ausführungsbeispiel den Druck an dem Parkbremsanschluss 29 erfasst.

Die Funktion der EBS-Steuereinheit 23 kann beispielsweise wie folgt sein:
Sind die Kupplungsköpfe 2, 3 ordnungsgemäß an die entsprechenden Kupplungsköpfe des Zugfahrzeugs angekoppelt, befindet sich das Rangierventil 11 in der in Fig. 7 dargestellten Betriebsstellung und befindet sich das Parkventil 10 in der Lösestellung, ist der Fahrzeugzug fahrbereit. Erzeugt der Fahrer über ein Bremspedal einen Bremssteuerdruck an dem Kupplungskopf 3, wird diese pneumatische Bremsvorgabe über die Bremssteuerleitung 33 an den Bremssteueranschluss 32 der EBS-Steuereinheit 23 übertragen. Erfolgt kein Blockieren der Fahrzeugräder, erzeugt die EBS-Steuereinheit 23 an den Betriebsbremsanschlüssen 25 geeignete Bremssteuerdrücke für die Betriebsbremskammern 28 der Kombi-Bremszylinder 26, wobei diese Drücke dann entsprechend einer vorgegebenen Abhängigkeit von dem an dem Bremssteueranschluss 32 anliegenden Druck abhängen. Wird hingegen ein Verlust der Traktion und ein Blockieren der Fahrzeugräder festgestellt, nimmt die EBS-Steuereinheit 23 in bekannter Weise eine Reduktion des Drucks vor, mit dem die Betriebsbremskammern 28 beaufschlagt werden, um die Blockade zu vermeiden oder aufzuheben. Hieran anschließend kann der Druck in der Betriebsbremskammer 28 wieder erhöht werden, womit eine Modulation des Drucks für die Betriebsbremskammern 28 erfolgt. Dies kann gemeinsam oder spezifisch für die einzelnen Betriebsbremskammern 28 erfolgen. Für die Erzeugung des Drucks in den Betriebsbremskammern 28 nutzt die EBS-Steuereinheit die Druckluft, die von dem Vorratsbehälter 9 an dem Behälteranschluss 30 bereitgestellt wird.

Darüber hinaus steuert die EBS-Steuereinheit 23 die Druckbeaufschlagung der Federspeicherkammern 27 über die Parkbremsanschlüsse 24 in Abhängigkeit des an dem Parkbremsanschluss 29 anliegenden, von der Ventileinrichtung 4 ausgesteuerten Drucks. Hierbei kann auch ein Anti-Compound-Ventil Einsatz finden, mit dem eine Verknüpfung des Drucks an dem Parkbremsanschluss 29 und dem Bremssteueranschluss 32 erfolgt, um eine übermäßige Beanspruchung der Kombi-Bremszylinder 26 zu vermeiden.

Gemäß Fig. 7 kann die Ventilstellung des Parkventils 10 zusätzlich beeinflusst werden durch einen Aktuator 110, der hier eine Park-Sicherheitseinrichtung 35 und/oder eine Notbremseinrichtung ist. Der Aktuator 11 verfügt über einen Kolben 36 und einen mit dem Kolben 36 gekoppelten, hier starr verbundenen Stößel 37. Auf der dem Stößel 37 abgewandten Seite des Kolbens 36 wirkt auf diesen eine Feder 38 ein.

Hingegen wirkt auf der dem Stößel und dem Parkventil 10 zugewandten Seite auf den Kolben 36 der Druck in einer Druckkammer 39 ein. Ist die Druckkammer 39 nicht (hinreichend) druckbeaufschlagt, beaufschlagt die Feder 38 den Kolben und den Stößel 37 in die in Fig. 7 wirksame Betriebsstellung, in der der Stößel 37 maximal ausgefahren ist. Befindet sich das Parkventil 10 in der Lösestellung, führt das Ausfahren des Stößels 37 durch die Feder 38 dazu, dass das Parkventil 10 in die Parkstellung überführt wird. Hierzu kommt eine Stirnseite des Stößels 37 zur Anlage an ein Ventilelement wie einen Ventilschieber des Parkventils 10 und übt eine Betätigungskraft aus, die zum Wechsel der Betriebsstellung des Parkventils 10 führt. Hingegen kann durch Druckbeaufschlagung der Druckkammer 39 mit einem Druck, der ausreichend ist, um die Feder 38 zu komprimieren, der Stößel 37 eingefahren werden oder in dem eingefahrenen Zustand bleibt. Befindet sich das Parkventil 10 in der Parkstellung, führt das erläuterte Einfahren des Stößels 37 dazu, dass die Stirnseite des Stößels 37 ein Spiel zu dem Ventilelement des Parkventils 10 ausbildet, welches so groß ist, dass das Parkventil 10 ohne Wechselwirkung mit dem Stößel 37 von dem Benutzer manuell in die Parkstellung und die Lösestellung gebracht werden kann. Die Druckkammer 39 ist mit einer Zweigleitung 40 verbunden. Die Zweileitung zweigt zwischen dem Rückschlagventil 18 und dem Rangierventil 11 von der Verbindungsleitung 16 ab. Befindet sich das Rangierventil 11 für angeschlossenen Kupplungskopf Vorrat 2 in der in Fig. 7 wirksamen Lösestellung, gelangt Druckluft von dem Kupplungskopf Vorrat 2 über die Zweigleitung 40 zu der Druckkammer, womit der Stößel 37 keine Einwirkung auf die Betriebsstellung des Parkventils 10 hat. Wird das Parkventil 10 in die Lösestellung überführt, kann der Fahrbetrieb aufgenommen werden. Bricht aber beispielsweise infolge einer Leckage am Kupplungskopf 2 oder einer zugeordneten Versorgungsleitung oder wegen eines Abkuppelns des Kupplungskopfs 2 der Druck ein, führt dies zu einer Reduzierung des Drucks in der Druckkammer 29, womit die Kraft der Feder 38 überwiegt und der Stößel 37 ausgefahren wird. Dies hat die automatische Überführung des Parkventils 10 in die Parkstellung zur Folge, womit eine Betätigung der Feststellbremsen erfolgt. Für das Abkuppeln des Kupplungskopfs 2 führt dies somit dazu, dass die von dem Aktuator 110 gebildete Park-Sicherheitseinrichtung 35 zuverlässig gewährleisten kann, dass mit dem Abkuppeln des Kupplungskopfs Vorrat 2 in jedem Fall das Parkventil 10 die Parkstellung einnimmt. Soll dann aber ein Rangieren des Anhängers erfolgen, ohne dass der Kupplungskopf Vorrat 2 angeschlossen ist, ist erforderlich, dass der Benutzer das Rangierventil 11 in die Rangierstellung überführt und gleichzeitig durch hinreichende Betätigungskräfte zur Überwindung der Feder 38 das Parkventil 10 in die Lösestellung überführt wird und in dieser gehalten wird.

Alternativ oder kumulativ möglich ist, dass mit dem Aktuator 110, hier dem Stößel 37, dem Kolben 36 und der Feder 38, eine Notbremseinrichtung 41 gebildet ist, da auch im Fahrbetrieb ein Abfall des Drucks an dem Kupplungskopf Vorrat 2, beispielsweise wegen einer Leckage oder einem Abriss des Kupplungskopfes eine Druckminderung in der Druckkammer 39 erfolgt, die die Umschaltung des Parkventils 10 in die Parkstellung zur Folge hat, womit eine Notbremsung über die Federspeicherbremsen herbeigeführt wird.

Ohne dass dies zwingend der Fall ist, ist für das in Fig. 7 dargestellte Ausführungsbeispiel die Zweigleitung 40 nicht unmittelbar und permanent mit der Druckkammer 39 verbunden. Vielmehr ist die Zweigleitung 40 an einen ersten Eingang eines Wechselventils 42 angeschlossen, dessen Ausgang mit der Druckkammer 39 verbunden ist. Der andere Eingang des Wechselventils 42 ist mit einer Notbremsfunktion-Overrideeinrichtung 43 verbunden, die dann ebenfalls Bestandteil des Aktuators 110 ist. Für das dargestellte Ausführungsbeispiel verfügt die Notbremsfunktion-Overrideeinrichtung 43 über ein Notbremsfunktion-Overrideventil 44. Wird über das Notbremsfunktion-Overrideventil 44 der zweite Eingang des Wechselventils 42 druckbeaufschlagt, kann der Kolben 36 in der Betriebsstellung mit maximaler Komprimierung der Feder 38 gehalten werden unabhängig davon, welcher Druck in der Zweigleitung 40 herrscht. Somit kann durch Druckbeaufschlagung des zweiten Eingangs des Wechselventils die Notbremsfunktion infolge eines Druckabfalls in der Zweigleitung 40 (temporär) deaktiviert werden.

Für das in Fig. 7 dargestellte Ausführungsbeispiel ist das Notbremsfunktion-Overrideventil 44 ein 3/2-Wege-Magnetventil 45. Dieses nimmt infolge der Beaufschlagung durch eine Feder ohne Bestromung seine Entlüftungsstellung ein, während das 3/2-Wege-Magnetventil 45 mit Bestromung desselben eine Entlüftungsstellung einnimmt, in der das 3/2-Wege-Magnetventil 45 den zweiten Eingang des Wechselventils 42 mit dem Vorratsbehälter 9 verbindet.

Vorzugsweise verfügt die Ventileinrichtung 4 über keine elektronische Steuereinheit. Vielmehr sind gemäß Fig. 7 die EBS-Steuereinheit 23 und die Ventileinrichtung 4 jeweils mit elektrischen Steueranschlüssen 46, 47 ausgestattet, die über eine elektrische Steuerleitung 48 miteinander verbunden sind. Über die Steuerleitung 48 ist ermöglicht, dass die Steuerung des Notbremsfunktion-Overrideventils 44 über ein von der EBS-Steuereinheit 23 erzeugtes elektrisches Steuersignal erfolgt.

Wird bei einem Abriss des Kupplungskopfs Vorrats 2 oder einer Leckage von dem Drucksensor 34 ein Druckabfall erkannt, kann zunächst das Notbremsfunktion-Overrideventil 44 in der Belüftungsstellung verbleiben oder in diese überführt werden, womit trotz des Druckabfalls das Parkventil 10 in der Lösestellung verbleibt und die Federspeicherbremsen nicht einfallen. Vielmehr ist weiterhin die Betriebsbremsung, u. U. auch mit einer Modulation, über die Vorgabe des Bremssteuerdrucks an dem Kupplungskopf Bremse 3 möglich. Mit weiterem Druckabfall, der von dem Drucksensor 34 gemessen wird, kann die EBS-Steuereinheit 23 mit dem Unterschreiten eines Schwellwerts ein Steuersignal in der Steuerleitung 48 erzeugen, mit dem dann die Umschaltung des Notbremsfunktion-Overrideventils 44 in die Entlüftungsstellung erfolgt, womit dann die Notbremsfunktion herbeigeführt wird, indem der Stößel 37 das Parkventil 10 in die Parkstellung überführt.

Die Ausführungsbeispiele der folgenden Figuren können zumindest teilweise mindestens einer Ausführungsform einer vorangegangenen Figur entsprechen, so dass auf die wiederholte Beschreibung hinsichtlich dieser Teile verzichtet wird.

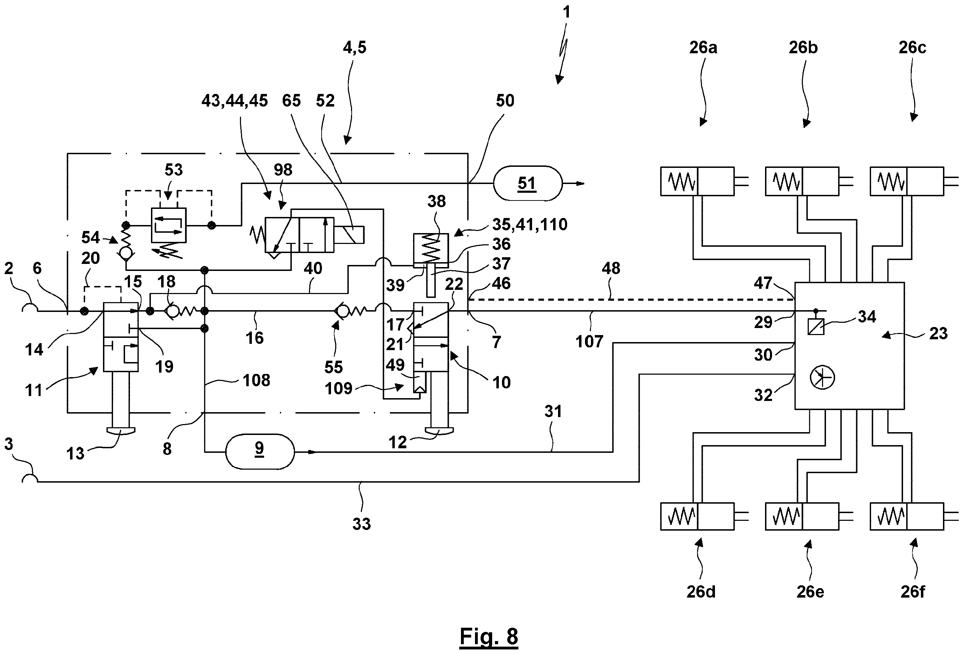

Abweichend zu Fig. 7 ist gemäß **Fig. 8** die Zweigleitung 40 ohne Einsatz des Wechselventils 42 unmittelbar an die Druckkammer 39 angeschlossen. Somit würde ein Druckabfall an dem Kupplungskopf Vorrat 2 unterhalb eines durch die Feder 38 vorgegebenen Schwellwerts zu einer Ausführung der Notbremsfunktion führen. In diesem Fall ist die von dem Aktuator 109 gebildete Notbremsfunktion-Overrideeinrichtung 43, hier ein Notbremsfunktion-Overrideventil 44 in Ausbildung als 3/2-Wege-Magnetventil 45, mit einem Steueranschluss 49 des Parkventils 10 verbunden. Die Beaufschlagung des Steueranschlusses 49 führt dazu, dass ein Ventilelement wie ein Ventilschieber des Parkventils 10 von dem an dem Steueranschluss 49 anliegenden Druck in eine Richtung beaufschlagt wird, die entgegengesetzt ist zur Beaufschlagungsrichtung infolge des Ausfahrens des Stößels 37. Wird somit das Notbremsfunktion-Overrideventil 44 in die Belüftungsstellung geschaltet, kann das Parkventil 10 in der Lösestellung gehalten werden, auch wenn infolge des Druckabfalls an dem Kupplungskopf Vorrat 2 und in der Zweigleitung 40 sowie in der Druckkammer 39 an sich die Notbremsfunktion ausgeführt würde, indem der Stößel 37 ausgefahren wird und Parkventil 10 in die Parkstellung überführt wird. Hierbei erfolgt die Dimensionierung der Kolbenfläche des Parkventils 10, auf die der Druck an dem Steueranschluss 49 wirkt, und der Feder 38 derart, dass bei an dem Steueranschluss 49 anliegendem Steuerdruck die Kraft, die dieser Steuerdruck erzeugt, in jedem Fall größer ist als eine entgegengesetzt wirkende Kraft der Feder 38. Ansonsten entspricht die Funktion der Park-Sicherheitseinrichtung 35 und der Notbremseinrichtung 41 sowie der Notbremsfunktion-Overrideeinrichtung 43 der für das Ausführungsbeispiel in Fig. 7 beschriebenen Funktion.

Für das in Fig. 8 dargestellte Ausführungsbeispiel verfügt die Ventileinrichtung 4 über einen weiteren Behälteranschluss 50 für einen Luftfederkreis, der hier einen Vorratsbehälter 51 aufweist. Der Behälteranschluss 50 ist über eine Zweigleitung 52 mit der Verbindungsleitung 16 (stromabwärts des Rückschlagventils 18) verbunden. In der Zweigleitung 52 ist ein Überströmventil 53, hier mit begrenzter Rückströmung, angeordnet. Optional kann, wie ebenfalls in Fig. 8 zu erkennen ist, zwischen dem Überströmventil 53 und der Verbindungsleitung 16 in der Zweigleitung 52 ein in Richtung des Behälteranschlusses 50 öffnendes Rückschlagventil 54 angeordnet sein. Für das in Fig. 8 dargestellte Ausführungsbeispiel ist optional des Weiteren dem Eingangsanschluss 17 des Parkventils 10 ein weiteres, in Richtung des Parkventils 10 öffnendes Rückschlagventil 55 vorgeordnet.

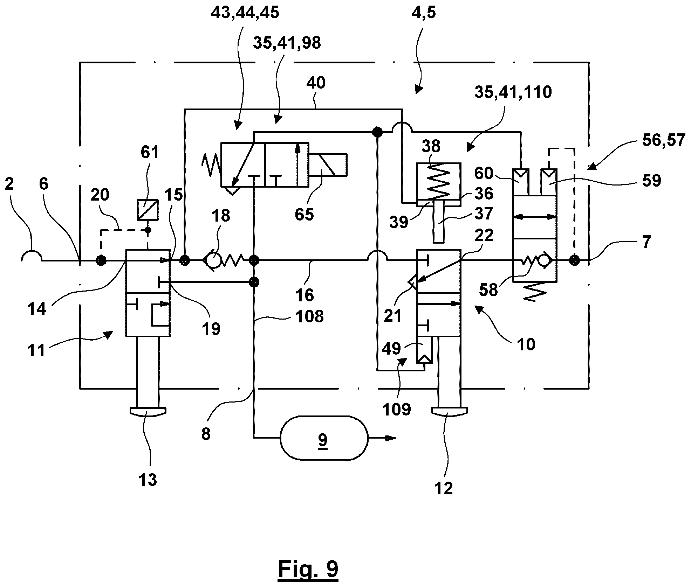

In **Fig. 9** ist lediglich die Ventileinrichtung 4 dargestellt, die entsprechend den anderen Ausführungsbeispielen in die Nutzfahrzeuganhänger-Druckluftanlage 1 integriert sein kann. Hierbei ist die Ventileinrichtung 4 grundsätzlich entsprechend der Ventileinrichtung 4 in Fig. 8 ausgebildet. Allerdings ist hier zwischen dem Parkbremsanschluss 4 der Ventileinrichtung 4 und dem Parkbremsanschluss 22 des Parkventils 10 eine Immobilisiereinrichtung 56 angeordnet, die ein Immobilisierventil 57 aufweist. Das Immobilisierventil 57 ist dabei als 2/2-Wegeventil ausgebildet. Infolge der Beaufschlagung durch eine Feder nimmt das Immobilisierventil 57 die in Fig. 9 wirksame Immobilisierstellung ein. In dieser Immobilisierstellung ist der Eingangsanschluss des Immobilisierventils 57 mit dem Ausgangsanschluss desselben über ein in Richtung des Parkbremsanschlusses 7 der Ventileinrichtung 4 sperrendes Rückschlagventil 58 miteinander verbunden. In dieser Immobilisierstellung des Immobilisierventils 57 kann über das in diese Richtung öffnende Rückschlagventil 58 eine Entlüftung der Federspeicherbremsen erfolgen, wenn das Parkventil 10 seine Parkstellung einnimmt. Auch wenn aber das Parkventil seine Lösestellung einnimmt, kann infolge der Sperrung durch das Rückschlagventil 58 kein Lösen der Federspeicherbremsen erfolgen. Dies ist hingegen erst möglich, wenn das Immobilisierventil 57 umgeschaltet wird in die Mobilisierstellung, in welcher die beiden Anschlüsse des Immobilisierventils 57 ohne Rückschlagventil miteinander verbunden sind, so dass eine Belüftung und eine Entlüftung der Federspeicherbremsen möglich ist.

Zur Umschaltung des Immobilisierventils 57 in die Mobilisierstellung ist einerseits der Parkbremsanschluss 7 der Ventileinrichtung 4 mit einem Steueranschluss 59 verbunden, dessen hinreichende Druckbeaufschlagung eine Überführung des Immobilisierventils 57 von der Immobilisierstellung in die Mobilisierstellung herbeiführt. Ist somit ein hinreichender Druck an dem Parkbremsanschluss 7 der Ventileinrichtung vorhanden und sind somit die Federspeichebremsen mit einem hinreichenden Druck belüftet, wird das Immobilisierventil 57 automatisch durch den die Druckbeaufschlagung des Steueranschlusses 59 in der Mobilisierstellung gehalten.

Sind hingegen durch Betätigung des Parkventils 10 die Federspeicherbremsen entlüftet, können diese nicht ohne Weiteres und insbesondere nicht durch Überführung des Parkventils 10 in die Lösestellung wieder belüftet werden, da in der Immobilisierstellung das Rückschlagventil 58 die Belüftung sperrt. Vielmehr muss für eine Belüftung der Federspeicherbremsen eine Belüftung eines Steueranschlusses 60 des Immobilisierventils 57 erfolgen. Die Druckbeaufschlagung des Steueranschlusses 60 kann dabei gesteuert werden über das Notbremsfunktion-Overrideventil 44, dessen Ausgangsanschluss für dieses Ausführungsbeispiel nicht lediglich mit dem Steueranschluss 49 des Parkventils 10 verbunden ist, sondern auch mit dem Steueranschluss 60 des Immobilisierventils 57.

Die Funktion der Ventileinrichtung 4 gemäß Fig. 9 ist wie folgt:
Ist der Anhänger geparkt, indem die Federspeicherbremsen durch die Überführung des Parkventils 10 entlüftet sind, kann eine Bewegung des Anhängers nicht einfach dadurch ermöglicht werden, dass das Parkventil 10 in die Lösestellung überführt wird, da sich ohne Bestromung des Notbremsfunktion-Overrideventils 44 das Immobilisierventil 57 in der Immobilisierstellung befindet. Vielmehr erfordert die Herstellung der Fahrbereitschaft des Anhängers durch Belüftung der Federspeicherbremsen die elektronische Umschaltung des Notbremsfunktion-Overrideventils 44. Ist eine entsprechende Authentifizierung vorhanden, kann die Umschaltung des Notbremsfunktion-Overrideventils 44 erfolgen, womit das Immobilisierventil 57 in seine Mobilisierstellung gesteuert wird und eine Belüftung der Federspeicherbremsen ermöglicht ist. Die Umschaltung des Notbremsfunktion-Overrideventils 44 in die Belüftungsstellung führt gleichzeitig dazu, dass das Parkventil 10 in die Lösestellung überführt wird. Die Federspeicherbremsen werden somit belüftet und es kann die Fahrt angetreten werden.

Ein Druckimpuls des Notbremsfunktion-Overrideventils 44 kann dabei ausreichen, um einen hinreichenden Druck an dem Parkbremsanschluss 7 der Ventileinrichtung 4 zu erzeugen, der dann auch an dem Steueranschluss 59 wirkt und das Immobilisierventil 57 in der Mobilisierstellung hält.

Kommt es dann zu einer Notbremssituation mit einem Abfall des Drucks an dem Kupplungskopf Vorrat, können die Park-Sicherheitseinrichtung 35 und die Notbremseinrichtung 41 sowie das Notbremsfunktion-Overrideventil 44 so wirksam werden, wie dies zuvor beschrieben worden ist, ohne dass eine Beeinträchtigung der Funktion durch die Immobilisiereinrichtung 56 erfolgt.

Für das in Fig. 9 dargestellte Ausführungsbeispiel erfasst ein Drucksensor 61 den Druck in der Steuerleitung 20, der dem Druck an dem Versorgungsanschluss 14 bzw. dem Kupplungskopf Vorrat 2 entspricht. Dies kann alternativ oder kumulativ zu der Erfassung des Drucks durch den Drucksensor 34 in der EBS-Steuereinheit 23 erfolgen.

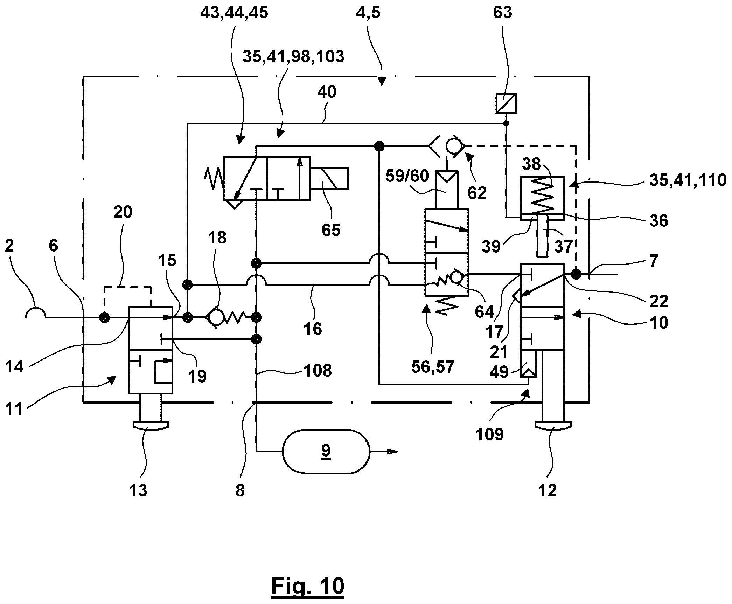

Für das in **Fig. 10** dargestellte Ausführungsbeispiel sind abweichend zu Fig. 9 nicht zwei Steueranschlüsse 59, 60 vorhanden. Vielmehr wird hier ein einziger Steueranschluss 59/60 des Immobilisierventils 57 über einen Ausgang eines Wechselventils 62 beaufschlagt. Ein erster Eingang des Wechselventils 62 ist in diesem Fall verbunden mit dem Notbremsfunktion-Overrideventil 44, während ein zweiter Eingang des Wechselventils 62 verbunden ist mit dem Parkbremsanschluss 7 der Ventileinrichtung 4 über die in Fig. 10 gestrichelt dargestellte Steuerleitung.

Für dieses Ausführungsbeispiel wird der Druck in der Druckkammer 39 über einen Drucksensor 63 erfasst.

Das Immobilisierventil 57 ist abweichend zu Fig. 9 in der Verbindungsleitung 16 zwischen dem Parkventil 10 und dem Rangierventil 11 angeordnet. In diesem Fall ist das Rückschlagventil 18 nicht in diese Verbindungsleitung 16 integriert, sondern in die Leitung, die über eine Verzweigung sowohl zu dem Vorratsbehälter 9 als auch zu dem Notbremsfunktion-Overrideventil 44 führt.

Für das Ausführungsbeispiel gemäß Fig. 10 ist das Immobilisierventil 57 als 3/2-Wegeventil ausgebildet. Infolge der Beaufschlagung durch eine Feder nimmt dies eine Immobilierstellung ein, in der das Immobilisierventil 57 die Verbindungsleitung 16 mit dem Parkventil 10 über ein Rückschlagventil 64 verbindet, wobei das Rückschlagventil 64 in Richtung des Rangierventils 11 für eine Entlüftung der Federspeicherbremsen öffnet, aber für eine Strömung in Richtung des Parkventils 10 zum Belüften der Federspeicherbremsen sperrt. Hingegen kann das Immobilisierventil 57 durch Druckbeaufschlagung des Steueranschlusses 59/60 umgeschaltet werden in die Mobilisierstellung. In der Mobilisierstellung ist die Verbindungsleitung 16 abgesperrt, während in der Mobilisierstellung das Immobilisierventil 57 den Eingangsanschluss 17 des Parkventils 10 mit dem Behälter 9 verbindet, womit zur Belüftung der Federspeicherbremsen eine Belüftung des Eingangsanschlusses 17 des Parkventils 10 erfolgt.

Die sich für die Ausführungsform gemäß Fig. 10 ergebende Funktion entspricht der zuvor erläuterten Ausführungsform: Für die Umschaltung des Immobilisierventils 57 von der Immobilisierstellung gemäß Fig. 10, in der keine Belüftung der Federspeicherbremsen möglich ist, in die Mobilisierstellung ist eine Umschaltung des Notbremsfunktion-Overrideventils 44 in die Belüftungsstellung erforderlich, was nach geeigneter Authentifizierung des Benutzers oder Fahrzeugs erfolgen kann. Für einmal gelöste Federspeicherbremsen und hinreichenden Druck an dem Parkbremsanschluss 7 liegt in der gestrichelt dargestellten Steuerleitung und damit an dem Steueranschluss 59/60 ein hinreichender Druck vor, um die Mobilisierstellung des Immobilisierventils 57 aufrechtzuerhalten. Das Immobilisierventil 57 beeinträchtigt die weiteren Funktionen der Ventileinrichtung (insbesondere die Notbremsfunktion und die Notbremsfunktion-Override-funktion sowie die Park-Sicherheitseinrichtung 35) nicht.

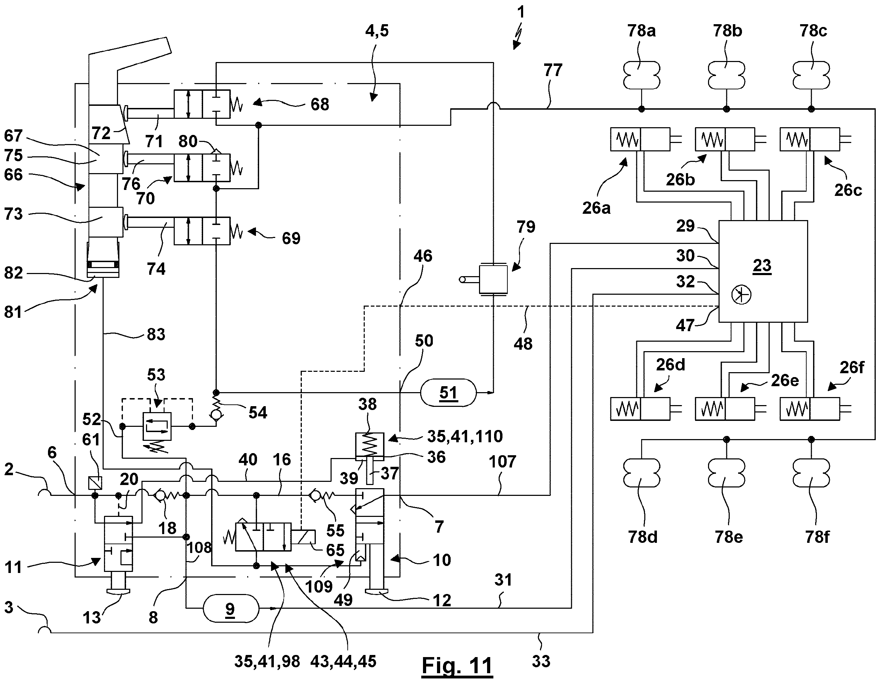

In **Fig. 11** entspricht die Ausgestaltung der Ventileinrichtung 4 mit dem Parkventil 10, dem Rangierventil 11, dem Notbremsfunktion-Overrideventil 44, der Park-Sicherheitseinrichtung 35, der Notbremseinrichtung 41 und dem Überströmventil 53 und dem Rückschlagventil 54 bei geringfügig veränderter Leitungsführung, aber entsprechender Funktion grundsätzlich der Ausführungsform gemäß Fig. 8. Allerdings ist hier das Rückschlagventil 54 abweichend zu Fig. 8 zwischen dem Überströmventil 53 und dem Vorratsbehälter 51 in die Ventileinrichtung 4 integriert.

Des Weiteren ist für das Ausführungsbeispiel gemäß Fig. 11 in die Ventileinrichtung 4 eine manuell betätigte Hebe-Senk-Ventileinrichtung 66 integriert. Hinsichtlich der Ausgestaltung einer derartigen manuell betätigten Hebe-Senk-Ventileinrichtung 66 wird insbesondere Bezug genommen auf eine Darstellung und Erläuterung einer derartigen Hebe-Senk-Ventileinrichtung in der Druckschrift DE 41 20 824 C1. Die Hebe-Senk-Ventileinrichtung 66 verfügt über ein Ventilelement 67 (insbesondere eine Schaltwelle oder ein Schaltschieber), welches vorzugsweise in Stellungen Heben, Senken, Stopp und Fahrt überführbar ist. Während es sich hierbei grundsätzlich jeweils um Schwenkstellungen handeln kann, findet für das in Fig. 11 dargestellte Ausführungsbeispiel eine Hebe-Senk-Ventileinrichtung 66 Einsatz, bei der das Ventilelement 67 von einer mittigen Schwenkstellung Stopp in zwei Richtungen Heben und Senken verschwenkbar ist und aus der mittigen Schwenkstellung Stopp durch axiale Verschiebung in eine Stellung Fahrt translatorisch verschiebbar ist.

Die unterschiedlichen Betriebsstellungen haben wie folgt die Betätigung eines Fahrt-Ventils 68, eines Hebe-Ventils 69 und eines Senken-Ventils 70 zur Folge:
Wird das Ventilelement 67 zur Herbeiführung der Stellung Fahrt manuell oder durch eine im Folgenden noch näher beschriebene Reset-to-Ride-Funktion aus der Ventileinrichtung 4 herausbewegt, gleitet ein Ventilstößel 71 des Fahrt-Ventils 68 entlang einer Rampe 72 des Ventilelements 67, womit das Fahrt-Ventil 68 von einer Sperrstellung in eine Durchlassstellung überführt wird. In der Stellung Fahrt befinden sich das Heben-Ventil 69 und das Senken-Ventil 70 in ihren Sperrstellungen.

Ist das Ventilelement 67 in die Ventileinrichtung 4 hineingeschoben (vgl. Fig. 11), befinden sich das Heben-Ventil 69 und Senken-Ventil 70 in der mittigen Stellung Stopp jeweils in ihrer Sperrstellung, wie dies in Fig. 11 zu erkennen ist.

Erfolgt eine Verschwenkung des Ventilelements 67 aus dieser Stellung Stopp in Richtung der Stellung Heben, betätigt ein Nocken 73 des Ventilelements 67 einen Ventilstößel 74 des Heben-Ventils 69 während das Senken-Ventil 70 in seiner Sperrstellung verbleibt.

Hingegen führt die Verschwenkung des Ventilelements 67 in die Stellung Senken dazu, dass ein Nocken 75 einen Ventilstößel 76 des Senken-Ventils 70 betätigt, womit das Senken-Ventil 70 in seine Entlüftungsstellung überführt wird, während das Heben-Ventil 69 in seiner Sperrstellung verbleibt.

Gemäß Fig. 11 ist der Luftfederkreis einkreisig ausgebildet mit an eine gemeinsame Luftfederleitung 77 angeschlossenen Luftfederbälgen 78.

In der Stellung Fahrt sind die Luftfederbälge 78 über die Luftfederleitung 77 und das Fahrt-Ventil 68 in seiner Durchlassstellung über ein mechanisches Niveauregelventil 79 mit dem Vorratsbehälter 51 verbunden. Das mechanische Niveauregelventil 79 nimmt in an sich bekannter Weise eine Druckbeaufschlagung der Luftfederbälge 78 entsprechend der Einfederung der Achsen vor, um ein konstantes Fahrniveau zu gewährleisten.

Will der Fahrer beispielsweise an einer Rampe das Fahrzeug entladen und die Höhe des Fahrzeugaufbaus an die Höhe der Rampe anpassen, betätigt der Fahrer zunächst das Ventilelement 67 manuell von der Stellung Fahrt in die Stellung Stopp. Zum Anheben des Fahrzeugaufbaus überführt der Fahrer dann das Ventilelement 67 in die Stellung Heben, in der das Heben-Ventil 69 den Vorratsbehälter 51 mit der Luftfederleitung 77 und damit mit den Luftfederbälgen 78 verbindet.

Verschwenkt hingegen der Benutzer das Ventilelement 67 in die Stellung Senken, stellt das Senken-Ventil 70 eine Verbindung der Luftfederleitung 77 mit einer Entlüftung 80 des Senken-Ventils 70 her.

Als Besonderheit verfügt die Hebe-Senk-Ventileinrichtung 66 über eine Reset-to-Ride-Einrichtung 81. Für die in Fig. 11 dargestellte Ausführungsform verfügt die Reset-to-Ride-Einrichtung 81 über eine Druckkammer 82, die in der Art eines Kolbens von einer Stirnseite des Ventilelements 67 beaufschlagt ist. Mittels einer Druckbeaufschlagung der Druckkammer 82 kann das Ventilelement 67 von der Stellung Stopp in die Stellung Fahrt überführt werden. Zur Druckbeaufschlagung der Druckkammer 82 ist dieser über eine Reset-to-Ride-Leitung 83 mit dem Ausgangsanschluss des Notbremsfunktion-Overrideventils 44 verbunden, der auch mit dem Steueranschluss 49 des Parkventils 10 verbunden ist. Somit kann mittels der Umschaltung des Notbremsfunktion-Overrideventils 44 in die Belüftungsstellung die Reset-to-Ride-Funktion ausgeführt werden.

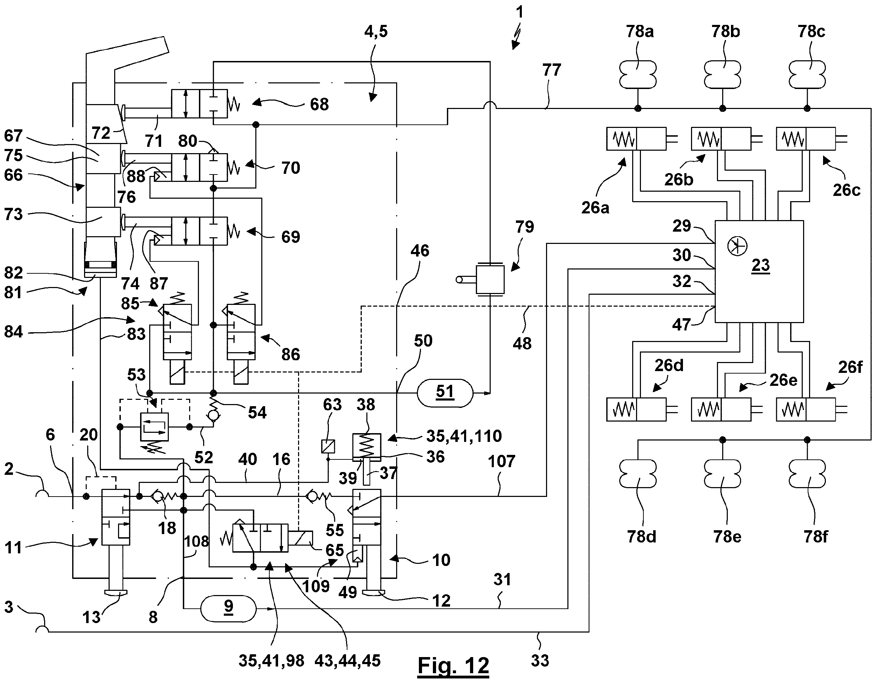

Das in **Fig. 12** dargestellte Ausführungsbeispiel entspricht im Wesentlichen dem in Fig. 11 dargestellten Ausführungsbeispiel. Allerdings ist hier zusätzlich eine elektronische Niveauregeleinrichtung in die Ventileinrichtung 4 integriert. Somit kann hierbei nicht nur das Niveau der Luftfederbälge 78 manuell über die Hebe-Senk-Ventileinrichtung 66 beeinflusst werden, sondern auch mittels der elektronischen Niveauregeleinrichtung 84. Hierzu verarbeitet die Niveauregeleinrichtung 84 und eine zugeordnete Steuereinheit, hier die EBS-Steuereinheit 23, ein Niveausignal der Luftfederbälge 78 mit dem Regelungsziel, ein vorbestimmtes Niveau zu halten. Für das in Fig. 12 dargestellte Ausführungsbeispiel basiert die elektronische Niveauregeleinrichtung 84 auf einer elektropneumatischen Vorsteuerung des Heben-Ventils 69 und des Senken-Ventils 70 zusätzlich zu deren mechanischer Betätigung über das Ventilelement 67. Die Niveauregeleinrichtung 84 verfügt zu dem Zweck der Vorsteuerung über Magnetventile 85, 86, die hier als 3/2-Wege-Magnetventile ausgebildet sind. Das Heben-Ventil 69 und das Senken-Ventil 70 verfügen jeweils über einen Steueranschluss 87, 88. Das Magnetventil 85 verfügt über eine Belüftungsstellung, in der der Steueranschluss 87 des Heben-Ventils 69 mit dem Vorratsbehälter 51 verbunden wird, was zur Umschaltung des Heben-Ventils 69 aus der Sperrstellung in die Belüftungsstellung führt, sowie eine Entlüftungsstellung, in der das Heben-Ventil 69 infolge der Wirkung der Feder (ohne Betätigung des Ventilstößels 74) seine Sperrstellung einnimmt. Entsprechend weist das Magnetventil 86 eine Belüftungsstellung auf, in der dieses den Vorratsbehälter 51 mit dem Steueranschluss 88 des Senken-Ventils 70 verbindet, womit dieses umgeschaltet wird in die Durchlassstellung, sowie eine Entlüftungsstellung auf, welche zur Folge hat, dass das Senken-Ventil 70 (ohne mechanische Betätigung des Ventilstößels 71) seine Sperrstellung einnimmt. Vorzugsweise nehmen die Magnetventile 85, 86 ohne Bestromung die Entlüftungsstellung ein. Die Magnetventile 85, 86 werden hier von der EBS-Steuereinheit 23 elektronisch gesteuert. Diese elektronische Niveauregelung kann auch manuell gesteuert werden, indem die EBS-Steuereinheit 23 ein elektrisches Signal des Benutzers zum Heben oder Senken, welches dieser über einen Schalter oder ein anderes elektrisch Vorgabeelement vorgibt, verarbeitet, und/oder es erfolgt eines automatische elektronische Regelung des Niveaus zur Gewährleistung einer Soll-Fahrhöhe durch die EBS-Steuereinheit 23.

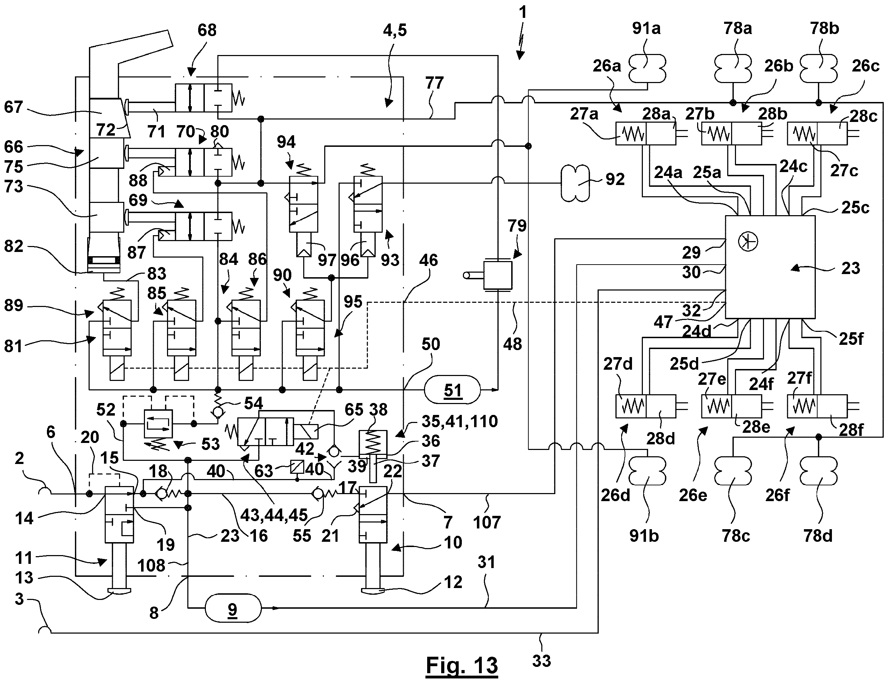

Für das in **Fig. 13** dargestellte Ausführungsbeispiel entspricht zunächst die Integration des Parkventils 10, des Rangierventils 11, des Notbremsfunktion-Overrideventils 44 und der Park-Sicherheitseinrichtung 35 und der Notbremseinrichtung 41 sowie des Wechselventils 42 in die Ventileinrichtung 4 dem Ausführungsbeispiel gemäß Fig. 7. Zusätzlich ist in die Ventileinrichtung 4 die Hebe-Senk-Ventileinrichtung 66 mit dem Ventilelement 67, dem Fahr-Ventil 68, dem Heben-Ventil 69 und dem Senken-Ventil 70 sowie die elektronische Niveauregeleinrichtung 84 mit den Magnetventilen 85, 86 zur Vorsteuerung integriert. In diesem Fall ist die Reset-to-Ride-Einrichtung 81 mit einem Reset-to-Ride-Magnetventil 89 ausgebildet, welches hier als be- und entlüftendes 3/2-Wege-Magnetventils ausgebildet ist, mit dem Vorratsbehälter 51 verbunden ist und ausschließlich der Druckbeaufschlagung der Druckkammer 82 der Hebe-Senk-Ventileinrichtung 66 dient.

Zusätzlich ist hier in die Ventileinrichtung 4 eine Liftachsventileinrichtung 90 integriert. Die Liftachsventileinrichtung 90 ermöglicht beladungs- und achslastabhängig eine gegenläufige Be- und Entlüftung einerseits von Tragbälgen 91 einer Liftachse sowie andererseits eines Liftbalgs 92 der Liftachse.

Für das in Fig. 13 dargestellte Ausführungsbeispiel verfügt die Liftachsventileinrichtung 90 über ein den Liftbalg 92 be- und entlüftendes Liftbalgventil 93 sowie ein die Tragbälge 91 ent- und belüftendes Tragbalgventil 94. Das Liftbalgventil 93 und das Tragbalgventil 94 verfügen über umgekehrte Ventilstellungen, so dass infolge der Beaufschlagung durch eine Feder das Liftbalgventil 93 ohne Ansteuerung seine Entlüftungsstellung einnimmt, während infolge der Beaufschlagung durch eine Feder das Tragbalgventil 94 ohne Ansteuerung seine Belüftungsstellung einnimmt. Dies hat den Vorteil, dass das Liftbalgventil 93 und das Tragbalgventil 94 mit demselben Steuersignal beaufschlagt werden können.

Für das Ausführungsbeispiel gemäß Fig. 13 sind das Liftbalgventil 93 und das Tragbalgventil 94 elektropneumatisch vorgesteuert durch ein Vorsteuerventil 95. Das Vorsteuerventil 95 ist mit den Steueranschlüssen 96, 97 des Liftbalgventils 93 und des Tragbalgventils 94 verbunden. Das Vorsteuerventil 95 ist als be- und entlüftendes 3/2-Wege-Magnetventil ausgebildet und verbindet in der Belüftungsstellung die Steueranschlüsse 96, 97 mit dem Vorratsbehälter 51.

In der Belüftungsstellung verbindet das Tragbalgventil 94 die Tragbälge 91 einerseits mit dem Ausgang des Fahrt-Ventils 68 und damit auch mit dem Niveauregelventil 79 in der Durchlassstellung des Fahrt-Ventils 68, so dass für aktivierte Liftachse auch eine mechanische Niveauregelung der Tragbälge 91 durch das Niveauregelventil 79 erfolgen kann. Andererseits ist der Eingang des Tragbalgventils 94 auch mit dem Heben-Ventil 69 und Senken-Ventil 70 verbunden, so dass bei aktivierter Liftachse auch eine manuelle Verstellung des Niveaus der Tragbälge 91 möglich ist.

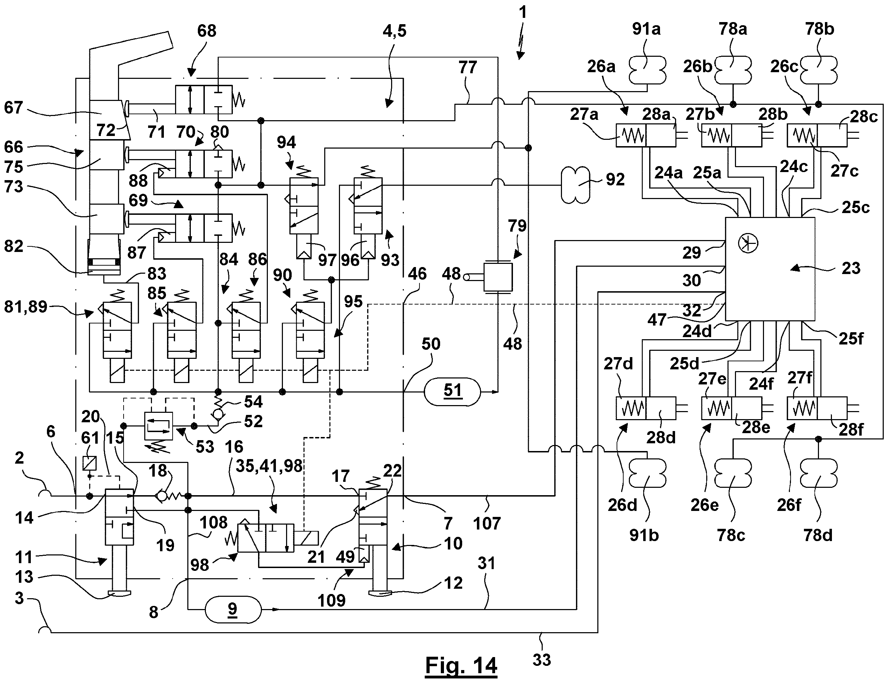

Grundsätzlich entspricht die Nutzfahrzeuganhänger-Druckluftanlage 1 gemäß **Fig. 14****,** die nicht dem Wortlaut der Patentansprüche unterfällt, der Nutzfahrzeuganhänger-Druckluftanlage 1 gemäß Fig. 13. Allerdings ist hier die Park-Sicherheitseinrichtung 35 und/oder die Notbremseinrichtung 41 anders ausgebildet und es ist keine Notbremsfunktion-Overrideeinrichtung 43 vorhanden. Hier ist die Park-Sicherheitseinrichtung 35 und die Notbremseinrichtung 41 mit einem mit dem Vorratsbehälter 9 verbundenen und be- und entlüftenden Magnetventil 98 ausgebildet, welches den Steueranschluss 49 des Parkventils 10 be- und entlüftet. Das Magnetventil 98 ist hier als 3/2-Wege-Magnetventil ausgebildet. In bestromten Zustand nimmt dieses seine Belüftungsstellung ein, die zur Folge hat, dass das Parkventil 10 aus der Parkstellung in die Lösestellung überführt wird. Dies hat zur Folge, dass für den Fahrbetrieb das Magnetventil 98 permanent zu bestromen ist, während dieses für die Ausführung der Notbremsfunktion oder die Gewährleistung der Park-Sicherheitsfunktion nicht bestromt werden muss.

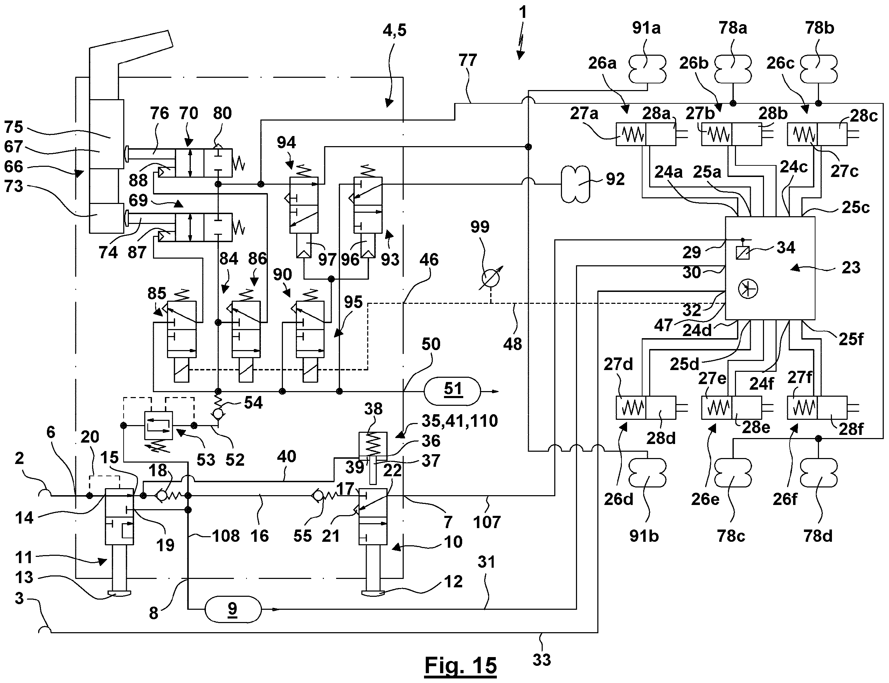

Gemäß **Fig. 15** sind zunächst die Ventilelemente in die Ventileinrichtung 4 integriert, wie dies grundsätzlich in Fig. 8 dargestellt ist. Allerdings ist hier keine Notbremsfunktion-Overrideeinrichtung 43 in die Ventileinrichtung 4 integriert, so dass das Parkventil 10 auch keinen Steueranschluss 49 aufweist. Die Integration der der Luftfederung einschließlich der Liftachse zugeordneten Ventilelemente in die Ventileinrichtung 4 entspricht grundsätzlich dem in Fig. 13 dargestellten Ausführungsbeispiel. Allerdings verfügt hier die Hebe-Senk-Ventileinrichtung 66 ausschließlich über das Heben-Ventil 69 und das Senken-Ventil 70, ohne dass ein Fahrt-Ventil 68 vorhanden ist und auch keine Reset-to-Ride-Einrichtung vorhanden ist, so dass keine Drucckammer 82 vorhanden ist und kein Reset-to-Ride-Magnetventil 89 vorhanden ist.

In Fig. 15 ist auch ein Wegsensor 99 dargestellt, auf Grundlage welcher die automatische elektronische Niveauregelung durch die elektronische Niveauregeleinrichtung 84 erfolgt.

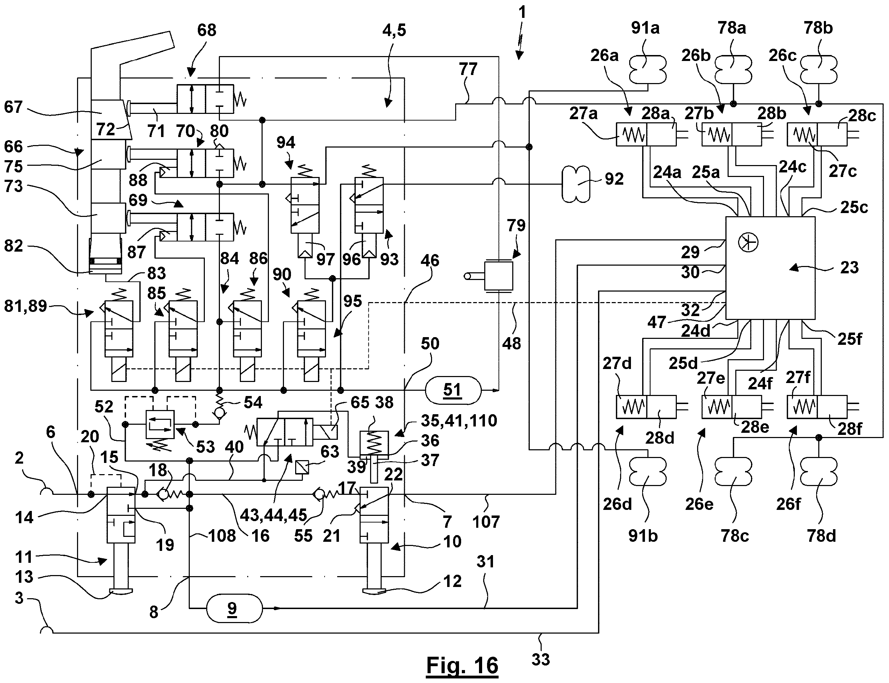

Das in **Fig. 16** dargestellte Ausführungsbeispiel entspricht hinsichtlich der Integration der der Luftfederung einschließlich der Liftachse zugeordneten pneumatischen Bauelemente in die Ventileinrichtung 4 grundsätzlich dem in Fig. 13 dargestellten Ausführungsbeispiel. Abweichend zu Fig. 13 wirkt hier aber das Notbremsfunktion-Overrideventil 44 nicht über das Wechselventil 42 auf die Druckkammer 39 der Park-Sicherheitseinrichtung 35 und/oder der Notbremseinrichtung 41 ein. Vielmehr ist der Ausgang des Notbremsfunktion-Overrideventils 44 unmittelbar mit der Druckkammer 39 verbunden, während ein Eingang des Notbremsfunktion-Overrideventils 44 mit dem Vorratsbehälter 9 verbunden ist und ein anderer Eingang des Notbremsfunktion-Overrideventils 44 mit der Verbindungsleitung 16 verbunden ist, hier zwischen dem Rangierventil 11 und dem Rückschlagventil 18, womit dieselbe Funktionalität gewährleistet werden kann.

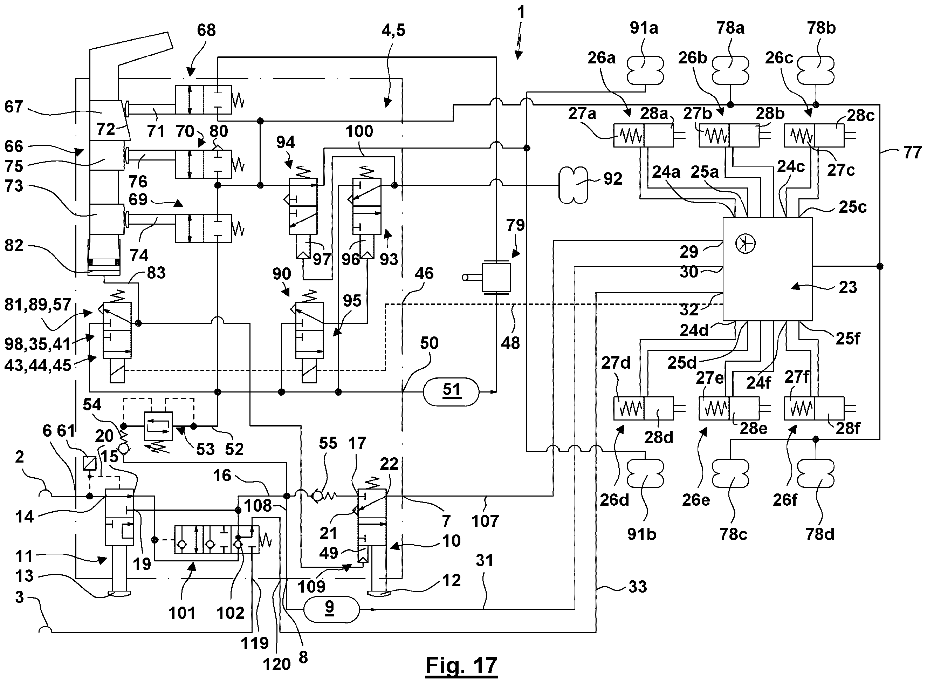

Für das in **Fig. 17** dargestellte Ausführungsbeispiel (nicht vom Wortlaut der Patentansprüche umfasst) ist ein Reset-to-Ride-Magnetventil 89 multifunktional ausgebildet, indem dieses nicht nur zur Steuerung der Reset-to-Ride-Funktion mit der Druckkammer 82 verbunden ist, sondern über eine Zweigleitung auch mit dem Steueranschluss 49 des Parkventils 10 verbunden ist. Somit bildet das Reset-to-Ride-Magnetventil 89 auch ein Immobilisierventil 57.

Des Weiteren ist in Fig. 17 die Liftachsventileinrichtung 90 anders ausgebildet: Das Vorsteuerventil 95 wirkt hier lediglich auf den Steueranschluss 96 des Liftbalgventils 93 ein. In diesem Fall zweigt von der Verbindungsleitung des Liftbalgs 92 mit dem Liftbalgventil 93 eine Zweigleitung 100 ab, die mit dem Steueranschluss 97 des Tragbalgventils 94 verbunden ist, womit dieselbe Funktionalität gewährleistet werden kann.

Wie in Fig. 17 zu erkennen ist, ist auch möglich, dass in die Ventileinrichtung 4 ein Anhängerbremsventil 101 integriert ist. Das Anhängerbremsventil 101 wird von dem Ausgangsdruck des Rangierventils 11 (also je nach Stellung des Rangierventils 11 von dem Druck an dem Kupplungskopf Vorrat 2 oder von dem Druck in dem Behälter 9) angesteuert. Das Anhängerbremsventil 101 ist hier als 4/3-Wege-Ventil ausgebildet. Ein erster Eingang ist mit dem Ausgang des Rangierventils 11 verbunden. Ein zweiter Eingang ist mit dem Kupplungskopf Bremse 3 verbunden. Ein erster Ausgang ist über ein Rückschlagventil 55 mit dem Eingangsanschluss 17 des Parkventils 10 verbunden. Ein zweiter Ausgang ist mit dem Vorratsbehälter 9 verbunden. In einer ersten Betriebsstellung des Anhängerbremsventils 101, die durch eine Feder und ohne pneumatische Ansteuerung eingenommen wird, verbindet das Anhängerbremsventil 101 den mit dem Rangierventil 11 verbundenen Eingangsanschluss über ein Rückschlagventil 102 sowohl mit dem Vorratsbehälter 9 als auch über das Rückschlagventil 55 mit dem Eingangsanschluss 17 des Parkventils 10, während der mit dem Kupplungskopf Bremse 3 verbundene Eingangsanschluss abgesperrt ist. Der erstgenannte Ausgangsanschluss ist auch mit dem Vorratsbehälter 9 verbunden. In dieser Betriebsstellung wird über das Anhängerbremsventil 101 dem Bremssteueranschluss 32 der EBS-Steuereinheit 23 der Druck des Vorratsbehälters 9 zugeführt, so dass bei hinreichendem Druck in dem Vorratsbehälter 9 eine Bremsung des Anhängers über die Betriebsbremsen erfolgt. Nimmt das Parkventil die Lösestellung ein, wirkt auf die Federspeicherbremsen des Anhängers ebenfalls der Druck in dem Vorratsbehälter 9 ein. Verringert sich der Druck in dem Vorratsbehälter, erfolgt eine zunehmende Erzeugung der Bremswirkung über die Federspeicherbremsen, während die von den Betriebsbremsen erzeugte Bremswirkung entsprechend kleiner wird.

Ist der Kupplungskopf Vorrat 2 an das Zugfahrzeug angekuppelt und liegt eine ordnungsgemäße Druckluftversorgung vor, wird das Anhängerbremsventil 101 in die dritte Ventilstellung überführt. In dieser Ventilstellung ist das Rangierventil 11 über das Rückschlagventil 102 mit dem Ausgang des Anhängerbremsventils 101 verbunden, der sowohl mit dem Vorratsbehälter 9 als auch über das Rückschlagventil 55 mit dem Parkventil 10 verbunden ist. Befindet sich das Parkventil 10 in der Lösestellung, hat dies das Lösen der Federspeicherbremsen zur Folge, so dass der Anhänger fahrbereit ist. In der Ventilstellung verbindet das Anhängerbremsventil 101 den Kupplungskopf Bremse 3 mit dem Ausgang des Anhängerbremsventils 101, der über die Bremssteuerleitung 33 mit dem Bremssteueranschluss 32 der EBS-Steuereinheit verbunden ist. Somit kann in dieser Ventilstellung, die der Fahrtstellung entspricht, entsprechend der Vorgabe des Bremssteuerdrucks an dem Kupplungskopf Bremse 3 mittels der EBS-Steuereinheit 23 ein geeigneter Bremssteuerdruck für die Betriebsbremsen ausgesteuert werden.

Sinkt der Druck an dem Steueranschluss des Anhängerbremsventils 101, beispielsweise infolge einer Leckage im Bereich des Kupplungskopfs Vorrat 2, wird das Anhängerbremsventil 101 in eine mittige Ventilstellung umgeschaltet. In dieser mittigen Ventilstellung bleibt die Verbindung des Rangierventils über das Rückschlagventil 102 des Anhängerbremsventils 101 mit dem Vorratsbehälter 9 und über das Rückschlagventil 55 mit dem Eingangsanschluss 17 des Parkventils 10 bestehen. Diese mittlere Ventilstellung wird lediglich in einem kleinen Druckbereich für den vom Versorgungsanschluss 2 bereitgestellten Druck an dem pneumatischen Steueranschluss des Anhängerbremsventils 101 eingenommen. Das Rückschlagventil 102 sichert trotz des Abfalls des Drucks an dem Kupplungskopf Vorrat 2 den Lösedruck in den Federspeicherbremsen, die in der Lösestellung des Parkventils 10 weiterhin von dem Druck in dem Vorratsbehälter 9 beaufschlagt bleiben. In dieser mittigen Betriebsstellung ist die Verbindung des Kupplungskopfs Bremse 3 mit dem Bremssteueranschluss 32 der EBS-Steuereinheit unterbrochen.

Da in Fig. 17 der Kupplungskopf Bremse 3 über die Ventileinrichtung 4 mit dem Bremssteueranschluss 32 der EBS-Steuereinheit 23 verbunden ist, ist diese Ausführungsform auch hinsichtlich dieses Aspekts nicht vom Wortlaut des Patentanspruchs 1 umfasst.

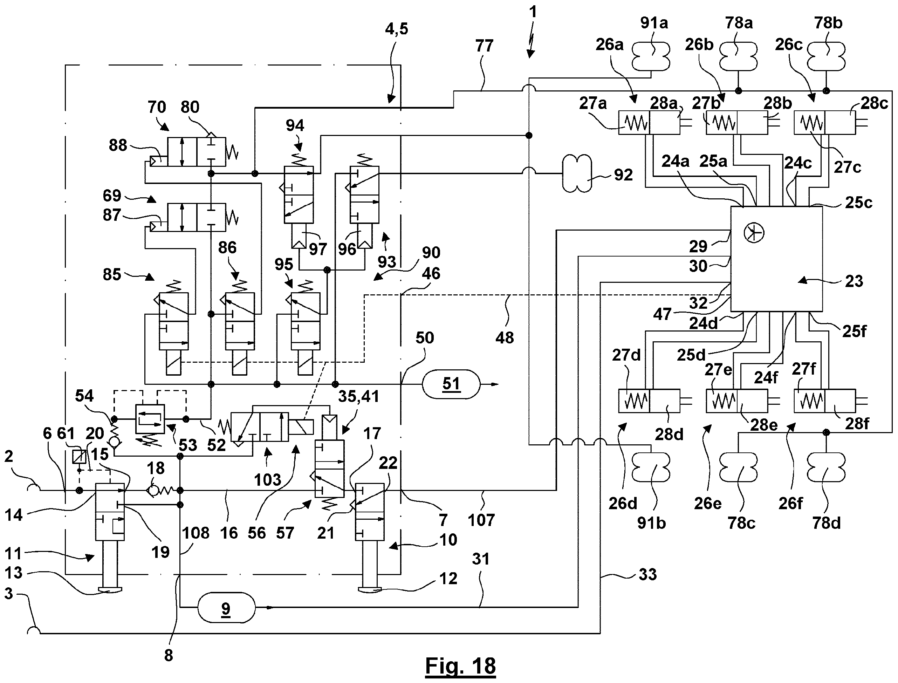

In dem in **Fig. 18** dargestellten Ausführungsbeispiel (nicht vom Wortlaut der Patentansprüche umfasst) ist die manuelle Hebe-Senk-Ventileinrichtung 66 entfallen. Hier ist ausschließlich eine elektronische Niveauregeleinrichtung 84 vorhanden, bei der grundsätzlich entsprechend Fig. 12 das nicht über Ventilstößel mechanisch betätigte Heben-Ventil 69 und Senken-Ventil 70 über Magnetventile 85, 86 vorgesteuert werden. Des Weiteren ist in die Ventileinrichtung 4 eine Liftachsventileinrichtung 90 integriert, bei der grundsätzlich entsprechend Fig. 13 ein Vorsteuerventil 95 ein Liftbalgventil 93 und Tragbalgventil 94 gemeinsam ansteuert.

Gemäß Fig. 18 ist eine Immobilisiereinrichtung 56 gebildet mit einem Immobilisierventil 57, welches in die Verbindungsleitung 16 integriert ist und eine bei Ansteuerung eingenommene Durchlassstellung sowie eine ohne Ansteuerung infolge der Wirkung einer Feder eingenommene Entlüftungsstellung aufweist. Ohne dass dies zwingend der Fall ist, ist gemäß Fig. 18 das Immobilisierventil 57 elektropneumatisch vorgesteuert durch ein Vorsteuerventil 103. Dieses nimmt ohne elektrische Ansteuerung federbeaufschlagt seine Entlüftungsstellung ein, während das Vorsteuerventil 103 mit elektrischer Ansteuerung, hier ebenfalls durch die EBS-Steuereinheit 23, seine Belüftungsstellung einnimmt, in welcher der Steueranschluss des Immobilisierventils 57 mit dem Vorratsbehälter 9 verbunden wird.

Erfolgt keine elektrische Freigabe, indem durch elektrische Bestromung das Vorsteuerventil 103 in die Belüftungsstellung geschaltet wird, wird über das Immobilisierventil 57 die Federspeicherbremse entlüftet, auch wenn sich das Parkventil 10 in der Lösestellung befindet. Damit kann ohne Autorisierung keine Bewegung des Anhängers erfolgen.

Während eines Fahrbetriebs muss eine permanente Bestromung des Vorsteuerventils 103 erfolgen. Denkbar ist auch, dass für die Herbeiführung einer Notbremsung über die Federspeicherbremsen die Bestromung des Vorsteuerventils beseitigt wird, womit die Immobilisiereinrichtung 56 auch die Funktion einer Notbremseinrichtung 41 erfüllen kann.

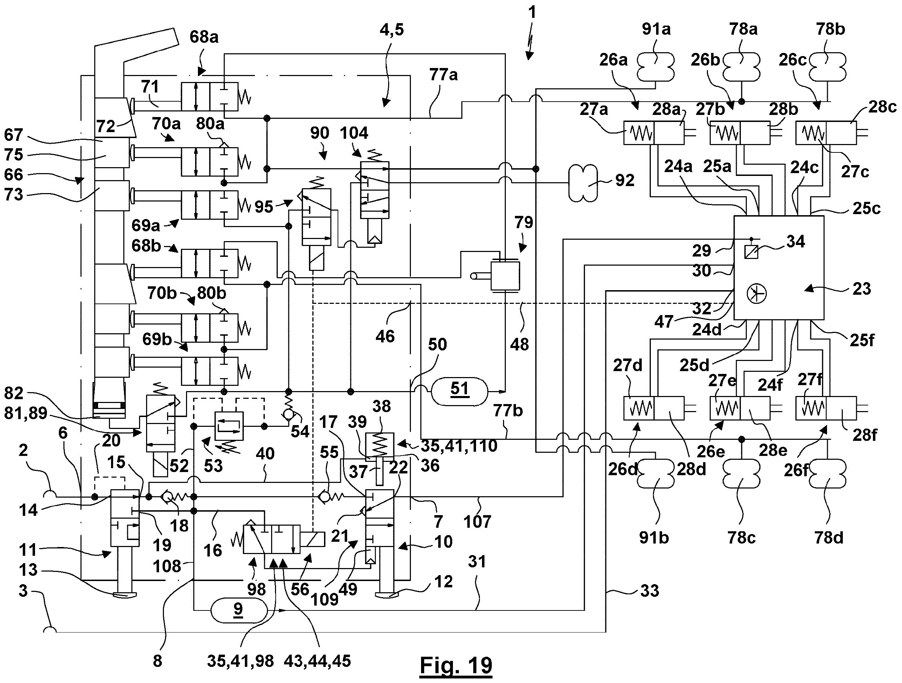

Gemäß **Fig. 19** ist die Luftfederungsanlage zweikreisig ausgebildet, was zur Folge hat, dass in der Hebe-Senk-Ventileinrichtung 66 jeweils zwei Fahrt-Ventile 68a, 68b, zwei Heben-Ventile 69a, 69b und zwei Senken-Ventile 70a, 70b vorgesehen sind, über welche jeweils die Druckbeaufschlagung in den beiden Kreisen gesteuert werden kann.

In der Liftachsventileinrichtung 90 sind das Liftbalgventil 93 und das Tragbalgventil 94 zusammengefasst zu einem Kombiventil 104, welches als 5/2-Wegeventil ausgebildet ist und in einer Betriebsstellung die Tragbälge 91 belüftet und den Liftbalg 92 entlüftet und den in der anderen Betriebsstellung die Tragbälge entlüftet und den Liftbalg 92 belüftet. Das Kombiventil 104 ist elektropneumatisch vorgesteuert durch ein Vorsteuerventil 95.

Die nicht die Luftfederung betreffenden Ventilelemente, die in die Ventileinrichtung 4 integriert sind, entsprechen in Fig. 19 im Wesentlichen dem in Fig. 8 dargestellten Ausführungsform mit den entsprechenden gewährleisteten Funktionen.

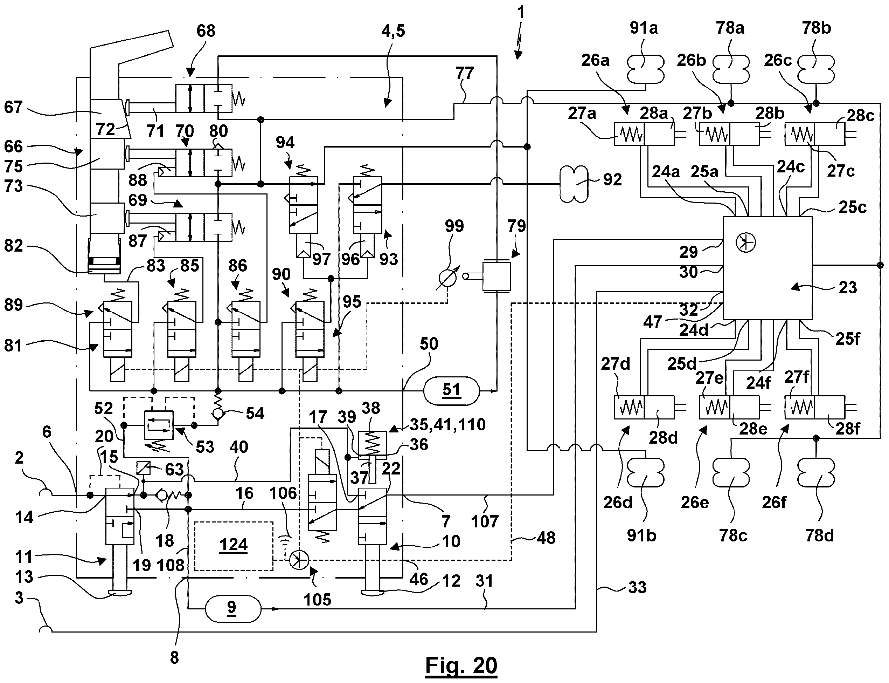

Für das in **Fig. 20** dargestellte Ausführungsbeispiel wird der EBS-Steuereinheit 23 der die Luftfederbälge 78 beaufschlagende Druck zugeführt, so dass der Druck in den Luftfederbälgen 78 für die Regelung der elektronischen Niveauregeleinrichtung 84 berücksichtigt werden kann.

Die die Luftfederung betreffenden, in die Ventileinrichtung 4 integrierten pneumatischen Bauelemente entsprechen grundsätzlich der Ausführungsform gemäß Fig. 13. Für das in Fig. 20 dargestellte Ausführungsbeispiel verfügt die Ventileinrichtung 4 über eine eigene elektronische Steuereinheit 105. Die elektronische Steuereinheit 105 kommuniziert einerseits über die Steuerleitung 48 mit der EBS-Steuereinheit 23. Andererseits verfügt die elektronische Steuereinheit 105 über eine drahtlose Sende- und/oder Empfangseinrichtung 106, mit der die elektronische Steuereinheit 105 mit Sensoren, der EBS-Steuereinheit 23 und/oder anderen Steuereinheiten drahtlos Daten austauschen kann. Der elektronischen Steuereinheit 105 wird vorzugsweise auch ein Messsignal eines Wegsensor für die Erfassung eines Niveaus zugeführt. Die elektronische Steuereinheit 105 steuert elektrisch die Magnetventile der Ventileinrichtung 4, hier das Reset-to-Ride-Magnetventil 89, die Magnetventile 85, 86 und das Vorsteuerventil 95.

Für das in Fig. 20 dargestellte Ausführungsbeispiel ist in der Verbindungsleitung 16 entsprechend Fig. 18 ein Immobilisierventil 57 dem Parkventil 10 vorgeordnet. Abweichend zu Fig. 18 ist das Immobilisierventil 57 aber nicht elektropneumatisch vorgesteuert. Vielmehr wird dieses (unter Gewährleistung der zu Fig. 18 beschriebenen Funktionen) direkt durch die elektronische Steuereinheit 105 elektrisch gesteuert.

Gemäß Fig. 20 verfügt die Ventileinrichtung 4 über eine Eingabe- und/oder Ausgabeeinrichtung 124, bei der es sich um ein Display, eine akustische Signaleinrichtung, einen Touchscreen, Schalter, eine Tastatur u. ä. handeln kann. Eine derartige Eingabe- und/oder Ausgabeeinrichtung 124 kann auch bei den anderen dargestellten und beschriebenen Ausführungsbeispielen vorhanden sein. Die Eingabe- und/oder Ausgabeeinrichtung 124 dient der Kommunikation mit einem Benutzer in Form der Übermittlung von Betriebszuständen des Zugfahrzeugs, des Anhängers und/oder der Nutzfahrzeuganhänger-Druckluftanlage 1 an den Benutzer und zur Eingabe von Wünschen durch den Benutzer hinsichtlich einer Änderung des Betriebszustands derselben.

Eine Kommunikation einer elektronischen Steuereinheit 23 und/oder 105 mit einer anderen Steuereinheit und/oder Sensoren sowie der Eingabe- und/oder Ausgabeeinrichtung 124 kann über übliche drahtgebundene oder drahtlose Verbindungen, Bussysteme, CAN, LIN oder eine Funkschnittstelle erfolgen.

Für eine Ausgestaltung der Erfindung ist in die das Parkventil 10 und das Rangierventil 11 aufweisende Ventileinrichtung 4 ein elektronisch gesteuertes Ventil integriert. Hierbei erfolgt vorzugsweise die elektronische Steuerung dieses mindestens einen elektronisch gesteuerten Ventils durch die EBS-Steuereinheit 23.

Für die dargestellten Ausführungsbeispiele werden der EBS-Steuereinheit 23 zwei unterschiedliche Bremsdrücke zugeführt, nämlich einerseits der Druck des Parkbremsanschlusses 7 der Ventileinrichtung 4 und andererseits der Bremssteuerdruck an dem Kupplungskopf Bremse 3, was durch unmittelbare Verbindung des Kupplungskopfs Bremse 3 mit dem Bremssteueranschluss 32 der EBS-Steuereinheit 23 erfolgen kann oder über die Ventileinrichtung, insbesondere unter Zwischenschaltung eines in die Ventileinrichtung 4 integrierten Bremssteuerventils 101, erfolgen kann. Möglich ist, dass der EBS-Steuereinheit 23 ausschließlich diese beiden Drücke zugeführt werden. Es ist aber auch möglich, dass der EBS-Steuereinheit 23 ein weiterer Druck zugeführt wird. Hierbei kann es sich um den Druck einer Luftfederanlage handeln, wobei dann dieser Druck in der EBS-Steuereinheit (oder ein entsprechendes Drucksignal) verarbeitet wird, um einen geeigneten Betriebsbremsdruck für die Betriebsbremskammern 28 auszusteuern, der beispielsweise abhängig sein kann von einer Achslast, die mit dem Druck in der Luftfederanlage bzw. einem Luftfederbalg der jeweiligen Achse korreliert.

Für Ausführungsformen der Erfindung kann ein Vorratsbehälter 9 sowohl mit dem Behälteranschluss 8 der Ventileinrichtung 4 als auch mit dem Behälteranschluss 30 der EBS-Steuereinheit 23 verbunden sein.

Zuvor wurde erläutert, dass die Override-Funktion der Override-Ventileinrichtung 43 dann deaktiviert wird, wenn der Druck in dem Vorratsbehälter 9 einen Schwellwert unterschreitet, welcher für die Durchführung ordnungsgemäßer Betriebsbremsungen erforderlich ist. Möglich ist, dass für die Ausführung der Override-Funktion durch die Notbremsfunktion-Overrideeinrichtung 43 alternativ oder kumulativ geprüft wird, ob die elektrischen, elektropneumatischen oder mechanischen Komponenten der Ventileinrichtung 4 noch funktionsfähig sind, was beispielsweise aus den Signalen für die Bestromung der Magnetventile und/oder einem erfassten Druck in der Ventileinrichtung ermittelt werden kann.

Möglich ist auch, dass neben der Übertragung des Bremssteuerdrucks über den Kupplungskopf Bremse 3 auch ein elektrisches Signal über ein geeignetes Interface zwischen Zugfahrzeug und Anhänger übertragen wird. In diesem Fall kann sogar dann, wenn an dem Kupplungskopf Bremse 3 kein ordnungsgemäßes Bremssteuersignal vorliegt, mittels der EBS-Steuereinheit 23 auf Grundlage des elektrisch übertragenen Bremssignals eine Abbremsung des Anhängers über die Betriebsbremsen je nach Vorgabe durch das Zugfahrzeug erfolgen kann.

### BEZUGSZEICHENLISTE

- 1: Nutzfahrzeuganhänger-Druckluftanlage
- 2: Kupplungskopf Vorrat
- 3: Kupplungskopf Bremse
- 4: Ventileinrichtung
- 5: Baueinheit
- 6: Versorgungsanschluss
- 7: Parkbremsanschluss
- 8: Behälteranschluss
- 9: Vorratsbehälter
- 10: Parkventil
- 11: Rangierventil
- 12: Betätigungsknopf
- 13: Betätigungsknopf
- 14: Eingangs- oder Versorgungsanschluss
- 15: Ausgangsanschluss
- 16: Verbindungsleitung
- 17: Eingangsanschluss
- 18: Rückschlagventil
- 19: Behälteranschluss
- 20: Steuerleitung
- 21: Entlüftungsanschluss
- 22: Parkbremsanschluss
- 23: EBS-Steuereinheit
- 24: Parkbremsanschluss
- 25: Betriebsbremsanschluss
- 26: Kombi-Bremszylinder
- 27: Federspeicherkammer
- 28: Betriebsbremskammer
- 29: Parkbremsanschluss
- 30: Behälteranschluss
- 31: Behälterleitung
- 32: Bremssteueranschluss
- 33: Bremssteuerleitung
- 34: Drucksensor
- 35: Park-Sicherheitseinrichtung
- 36: Kolben
- 37: Stößel
- 38: Feder
- 39: Druckkammer
- 40: Zweigleitung
- 41: Notbremseinrichtung
- 42: Wechselventil
- 43: Notbremsfunktion-Overrideeinrichtung
- 44: Notbremsfunktion-Overrideventil
- 45: 3/2-Wege-Magnetventil
- 46: Steueranschluss
- 47: Steueranschluss
- 48: Steuerleitung
- 49: Steueranschluss
- 50: Behälteranschluss
- 51: Vorratsbehälter
- 52: Zweigleitung
- 53: Überströmventil
- 54: Rückschlagventil
- 55: Rückschlagventil
- 56: Immobilisiereinrichtung
- 57: Immobilisierventil
- 58: Rückschlagventil
- 59: Steueranschluss
- 60: Steueranschluss
- 61: Drucksensor
- 62: Wechselventil
- 63: Drucksensor
- 64: Rückschlagventil
- 65: Steueranschluss
- 66: Hebe-Senk-Ventileinrichtung
- 67: Ventilelement
- 68: Fahrt-Ventil
- 69: Heben-Ventil
- 70: Senken-Ventil
- 71: Ventilstößel
- 72: Rampe
- 73: Nocken
- 74: Ventilstößel
- 75: Nocken
- 76: Ventilstößel
- 77: Luftfederleitung
- 78: Luftfederbalg
- 79: Mechanisches Niveauregelventil
- 80: Entlüftung
- 81: Reset-to-Ride-Einrichtung
- 82: Druckkammer
- 83: Reset-to-Ride-Leitung
- 84: Niveauregeleinrichtung
- 85: Magnetventil
- 86: Magnetventil
- 87: Steueranschluss
- 88: Steueranschluss
- 89: Reset-to-Ride-Magnetventil
- 90: Liftachsventileinrichtung
- 91: Tragbalg
- 92: Liftbalg
- 93: Liftbalgventil
- 94: Tragbalgventil
- 95: Vorsteuerventil
- 96: Steueranschluss
- 97: Steueranschluss
- 98: Magnetventil
- 99: Wegsensor
- 100: Zweigleitung
- 101: Anhängerbremsventil
- 102: Rückschlagventil
- 103: Vorsteuerventil
- 104: Kombiventil
- 105: elektronische Steuereinheit
- 106: Sende- und/oder Empfangseinrichtung
- 107: Parkbremsleitung
- 108: Zweigleitung
- 109: Aktuator
- 110: Aktuator
- 111: Steueranschluss
- 112: Steueranschluss
- 113: Bremsstufeinrichtung
- 114: Magnetventil
- 115: 3/2-Wege-Magnetventil
- 116: Steueranschluss
- 117: Magnetventil
- 118: 3/2-Wege-Magnetventil
- 119: Bremssteuereingang
- 120: Bremssteuerausgang
- 121: zweites Parkventil
- 122: Rückschlagventil
- 123: Steueranschluss
- 124: Eingabe- und/oder Ausgabeeinrichtung

## Patentansprüche

1. Nutzfahrzeuganhänger-Druckluftanlage (1) mit
a) einer als Baueinheit (5) ausgebildeten Ventileinrichtung (4) mit
aa) einem manuell betätigbaren Parkventil (10), welches
- einen Parkbremsanschluss (22) aufweist,
- eine Parkstellung aufweist, in der Parkbremsanschluss (22) entlüftet ist, und
- eine Lösestellung aufweist, in der der Parkbremsanschluss (22) belüftet ist,
ab) einem manuell betätigbaren Rangierventil (11), welches
- einen Versorgungsanschluss (14), einen Ausgangsanschluss (15) und einen Behälteranschluss (19) aufweist,
- bei einem druckbeaufschlagten Versorgungsanschluss (14) des manuell betätigbaren Rangierventils (11) automatisch eine Fahrtstellung einnimmt, in der der Ausgangsanschluss (15) mit dem Versorgungsanschluss (14) des manuell betätigbaren Rangierventils (11) verbunden ist und der Behälteranschluss (19) abgesperrt ist, und
- bei drucklosem Versorgungsanschluss (14) des manuell betätigbaren Rangierventils (11) manuell in eine Rangierstellung überführbar ist, in der der Ausgangsanschluss (15) des Rangierventils (11) mit dem Behälteranschluss (19) verbunden ist,
b) einer als Baueinheit ausgebildeten EBS-Steuereinheit (23), die beabstandet von der Ventileinrichtung (4) angeordnet ist und einen modulierten Betriebsbremsdruck erzeugt,
c) wobei die EBS-Steuereinheit (23) unter Umgehung der Ventileinrichtung (4) mit einem Kopplungskopf Bremse (3) verbunden ist,
d) die als Baueinheit (5) ausgebildete Ventileinrichtung (4) eine Notbremseinrichtung (41) aufweist, welche automatisch eine Entlüftung eines Parkbremsanschlusses (7) der Ventileinrichtung (4) herbeiführt, wenn ein Druck an dem Versorgungsanschluss (14) des manuell betätigbaren Rangierventils (11) abfällt oder einen Schwellwert unterschreitet, womit eine Notbremsfunktion des Anhängers über Federspeicherbremsen ausgelöst wird, und
e) die EBS-Steuereinheit (23) mit dem Parkbremsanschluss (7) der Ventileinrichtung (4) verbunden ist,
**dadurch gekennzeichnet, dass**
f) in die Ventileinrichtung (4) eine elektrische Notbremsfunktion-Overrideeinrichtung (43) integriert ist, welche die automatische Entlüftung des Parkbremsanschlusses (7) durch die Notbremseinrichtung (41) deaktiviert,
g) wobei
ga) ein elektrisches Notbremsfunktion-Overrideventil (44) in einer Overridestellung einen Steueranschluss (49) des Parkventils (10) mit einem Vorratsbehälter (9) verbindet, wodurch das Parkventil (10) in die Lösestellung überführt wird oder das Parkventil (10) in der Lösestellung verbleibt, ohne dass das Parkventil (10) durch die Notbremsfunktion in die Parkstellung überführt werden kann, oder
gb) ein elektromagnetischer Aktuator (109) die Notbremsfunktion-Overrideeinrichtung (43) bildet und die Notbremsfunktion-Overrideeinrichtung (43) die Notbremsfunktion-Overridefunktion bereitstellt, wobei ohne Bestromung eines Steueranschlusses (111) des Aktuators (109) eine Notbremsfunktion durch Umschalten des Parkventils (10) in die Parkstellung erfolgt und durch Betätigung der Notbremsfunktion-Overrideeinrichtung (43) die Notbremsfunktion unterbunden werden kann, so dass bis auf Weiteres das Parkventil (10) in der Lösestellung verbleibt.

2. Nutzfahrzeuganhänger-Druckluftanlage (1) nach Anspruch 1, **wobei** in die Ventileinrichtung (4)
a) eine manuell betätigbare Hebe-Senk-Ventileinrichtung (66) für ein willkürliches Heben und Senken des Fahrzeugaufbaus integriert ist und/oder
b) eine Park-Sicherheitseinrichtung (35) integriert ist, welche für einen Druck an einem Versorgungsanschluss (6) der Ventileinrichtung (4), der unterhalb eines Schwellwertes ist, automatisch eine Entlüftung des Parkbremsanschlusses (7) der Ventileinrichtung (4) herbeiführt, und/oder
c) ein Drucksensor (34, 61) zur Erfassung des Drucks an einem Versorgungsanschluss (6) der Ventileinrichtung (4) integriert ist.

3. Nutzfahrzeuganhänger-Druckluftanlage (1) nach einem der vorhergehenden Ansprüche, **wobei**
a) die Notbremseinrichtung (41) und/oder im Fall der Rückbeziehung des Anspruchs 3 auf den Anspruch 2 in der Variante b) die Park-Sicherheitseinrichtung (35) eine Druckkammer (39), die mit dem Druck an dem Versorgungsanschluss (6) der Ventileinrichtung (4) beaufschlagt ist, und einen die Druckkammer (39) begrenzenden Kolben (36) aufweist,
b) wobei der Kolben (36) mit einem Stößel (37) gekoppelt ist, der
ba) bei einem Druck an dem Versorgungsanschluss (6) der Ventileinrichtung (4) unterhalb des Schwellwertes mechanisch das Parkventil (10) in die Parkstellung überführt und
bb) bei einem Druck an dem Versorgungsanschluss (6) der Ventileinrichtung (4) oberhalb des Schwellwertes von dem Parkventil (10) mechanisch entkoppelt ist, so dass das Parkventil (10) je nach manueller Betätigung des Parkventils (10) die Lösestellung oder die Parkstellung einnehmen kann und/oder eine eingenommene Parkstellung oder Lösestellung beibehält.

4. Nutzfahrzeuganhänger-Druckluftanlage (1) nach Anspruch 3, **wobei**
a) die Druckkammer (39) alternativ mit dem Versorgungsanschluss (6) der Ventileinrichtung (4) und mit dem elektrischen Notbremsfunktion-Overrideventil (44) verbindbar ist und
b) bei einem Abfall des Druckes an dem Versorgungsanschluss (6) der Ventileinrichtung (4) die Notbremsfunktion der Notbremseinrichtung (41) deaktiviert wird, indem das Notbremsfunktion-Overrideventil (44) die Druckkammer (39) mit einem Vorratsbehälter (9) verbindet.

5. Nutzfahrzeuganhänger-Druckluftanlage (1) nach einem der Ansprüche 1 bis 3, **wobei** in einer Versorgungs- oder Zweigleitung (52) der Ventileinrichtung (4), die einen Vorratsbehälter (9) für einen Betriebsbremskreis und einen Vorratsbehälter (51) für einen Luftfederkreis miteinander verbindet, ein Überströmventil (53) angeordnet ist.

6. Nutzfahrzeuganhänger-Druckluftanlage (1) nach einem der vorhergehenden Ansprüche, **wobei** die EBS-Steuereinheit (23) über eine Steuerleitung (48) mit der Ventileinrichtung (4) verbunden ist und die EBS-Steuereinheit (23) über die Steuerleitung (48) mindestens ein elektrisches Ventil der Ventileinrichtung (4) steuert.

7. Nutzfahrzeuganhänger-Druckluftanlage (1) nach Anspruch 1 oder 2, **wobei** in die als Baueinheit (5) ausgebildete Ventileinrichtung (4) auch eine elektrische Immobilisiereinrichtung (56) integriert ist, welche das Belüften des Parkbremsanschlusses (7) nur dann zulässt, wenn eine Betriebsgröße ein Kriterium erfüllt.

8. Nutzfahrzeuganhänger-Druckluftanlage (1) nach Anspruch 7, **wobei** die elektrische Immobilisiereinrichtung (56) ein Immobilisierventil (57) aufweist, welches
a) dem Parkventil (10) vorgeordnet oder nachgeordnet ist und
b) eine Immobilisier-Betriebsstellung aufweist, in der eine Strömung von dem Parkventil (10) zu der EBS-Steuereinheit (23) nicht möglich ist, aber eine Strömung von der EBS-Steuereinheit (23) zu dem Parkventil (10) möglich ist, und
c) eine Mobilisier-Betriebsstellung aufweist, in der sowohl eine Strömung von dem Parkventil (10) zu der EBS-Steuereinheit (23) als auch eine Strömung von der EBS-Steuereinheit (23) zu dem Parkventil (10) möglich ist.

9. Nutzfahrzeuganhänger-Druckluftanlage (1) nach Anspruch 8, **wobei** das Immobilisierventil (57) die Mobilisier-Betriebsstellung einnimmt, wenn der Druck in der zu der EBS-Steuereinheit (23) führenden Parkbremsleitung (107) einen Schwellwert überschreitet.

10. Nutzfahrzeuganhänger-Druckluftanlage (1) nach Anspruch 8 oder 9, **wobei** das Immobilisierventil (57) durch ein Vorsteuerventil (103) elektropneumatisch vorgesteuert ist, wobei das Vorsteuerventil (103) vorzugsweise als Notbremsfunktion-Overrideventil (44) ausgebildet ist.

11. Nutzfahrzeuganhänger-Druckluftanlage (1) nach Anspruch 10, **wobei** ein pneumatischer Steueranschluss (59/60) des Immobilisierventils (57) alternativ
a) mit dem Vorsteuerventil (103) oder Notbremsventil-Overrideventil (44) und
b) einer Parkbremsleitung (107)
verbindbar ist.

12. Nutzfahrzeuganhänger-Druckluftanlage (1) nach einem der vorhergehenden Ansprüche, **wobei** das Notbremsfunktion-Overrideventil (44) multifunktional ausgebildet ist, indem dieses sowohl die Notbremsventil-Overridefunktion als auch eine Reset-to-Ride-Funktion einer Hebe-Senk-Ventileinrichtung (66) steuert.

13. Nutzfahrzeuganhänger-Druckluftanlage (1) nach einem der vorhergehenden Ansprüche, **wobei**
a) in die Ventileinrichtung (4) eine elektrisch gesteuerte Niveauregelventileinrichtung (84) integriert ist und/oder
b) in die Ventileinrichtung (4) eine elektrisch gesteuerte Liftachsventileinrichtung (90) integriert ist.

14. Nutzfahrzeuganhänger-Druckluftanlage (1) nach Anspruch 3 oder einem der Ansprüche 4 bis 13 bei Rückbeziehung auf Anspruch 3, **wobei** in die Ventileinrichtung (4) mindestens ein Drucksensor (61; 63) integriert ist, der einen Druck erfasst, mit dem der Kolben (36) der Park-Sicherheitseinrichtung (35) und/oder der Notbremseinrichtung (41) beaufschlagt wird.

15. Nutzfahrzeuganhänger-Druckluftanlage (1) nach einem der vorhergehenden Ansprüche, **wobei** die Ventileinrichtung (4)
a) eine drahtlose Sende- und/oder Empfangseinrichtung (106) und/oder
b) eine Eingabe- und/oder Ausgabeeinrichtung
aufweist.

## Claims

1. Commercial vehicle trailer compressed air system (1) with
a) a valve device (4) designed as a structural unit (5) with
aa) a manually operated parking valve (10), which
- has a parking brake connection (22),
- has a parking position in which the parking brake connection (22) is vented,
and
- has a release position in which the parking brake connection (22) is aired,
ab) a manually operated shunt valve (11), which
- has a supply connection (14), an output connection (15) and a container connection (19),
- with a pressurized supply connection (14) of the manually actuated shunt valve (11), automatically assumes a travel position in which the outlet connection (15) is connected to the supply connection (14) of the manually actuated shunt valve (11) and the container connection (19) is shut off, and
- when the supply connection (14) of the manually actuated shunt valve (11) is depressurized, it can be manually transferred to a marshalling position in which the outlet connection (15) of the shunt valve (11) is connected to the container connection (19),
b) an EBS control unit (23) in the form of a structural unit, which is arranged at a distance from the valve device (4) and generates a modulated service brake pressure,
c) wherein the EBS control unit (23) is connected to a coupling head brake (3), bypassing the valve device (4),
d) the valve device (4), designed as a structural unit (5), has an emergency braking device (41) which automatically causes a parking brake connection (7) of the valve device (4) to be vented when a pressure at the supply connection (14) of the manually actuatable shunt valve (11) drops or falls below a threshold, thereby triggering an emergency braking function of the trailer via spring-loaded brakes, and
e) the EBS control unit (23) is connected to the parking brake connection (7) of the valve device (4),
**characterized in that**
f) an electrical emergency brake function override device (43) is integrated into the valve device (4), which deactivates the automatic venting of the parking brake connection (7) by the emergency brake device (41),
g) wherein
ga) an electric emergency brake function override valve (44) in an override position connects a control connection (49) of the parking valve (10) to a reservoir (9), whereby the parking valve (10) is transferred to the release position or the parking valve (10) remains in the release position without the parking valve (10) being able to be transferred to the parking position by the emergency brake function, or
gb) an electromagnetic actuator (109) forms the emergency braking function override device (43) and the emergency braking function override device (43) provides the emergency braking function override function, wherein, without electrically energizing a control connection (111) of the actuator (109), an emergency braking function is performed by switching the parking valve (10) to the parking position and the emergency braking function can be prevented by actuating the emergency braking function override device (43), so that the parking valve (10) remains in the release position until further notice.

2. Commercial vehicle trailer compressed air system (1) according to claim 1, wherein in the valve device (4)
a) a manually operated lifting and lowering valve device (66) is integrated for arbitrary raising and lowering of the vehicle body and/or
b) a parking safety device (35) is integrated, which automatically causes a venting of the parking brake connection (7) of the valve device (4) for a pressure at a supply connection (6) of the valve device (4) which is below a threshold, and/or
c) a pressure sensor (34, 61) for detecting the pressure is integrated at a supply connection (6) of the valve device (4).

3. Commercial vehicle trailer compressed air system (1) according to one of the preceding claims,
**wherein**
a) the emergency braking device (41) and/or, in the case of the relation of claim 3 back to claim 2 in variant b), the parking safety device (35) has a pressure chamber (39), which is impacted by the pressure at the supply connection (6) of the valve device (4), and a piston (36) delimiting the pressure chamber (39),
b) wherein the piston (36) is coupled to a plunger (37) which
ba) when the pressure at the supply connection (6) of the valve device (4) is below the threshold, the parking valve (10) is mechanically moved to the parking position and
bb) is mechanically decoupled from the parking valve (10) when the pressure at the supply connection (6) of the valve device (4) is above the threshold, so that the parking valve (10) can assume the release position or the park position depending on the manual actuation of the parking valve (10) and/or maintains a park position or release position that has been assumed.

4. Commercial vehicle trailer compressed air system (1) according to claim 3, **wherein**
a) the pressure chamber (39) can alternatively be connected to the supply connection (6) of the valve device (4) and to the electrical emergency brake function override valve (44) and
b) in the event of a drop in pressure at the supply connection (6) of the valve device (4), the emergency braking function of the emergency braking device (41) is deactivated by the emergency braking function override valve (44) connecting the pressure chamber (39) to a reservoir (9).

5. Commercial vehicle trailer compressed air system (1) according to one of claims 1 to 3, wherein an overflow valve (53) is arranged in a supply or branch line (52) of the valve device (4), which connects a reservoir (9) for a service brake circuit and a reservoir (51) for an air suspension circuit.

6. Commercial vehicle trailer compressed air system (1) according to one of the preceding claims, wherein the EBS control unit (23) is connected to the valve device (4) via a control line (48) and the EBS control unit (23) controls at least one electric valve of the valve device (4) via the control line (48).

7. Commercial vehicle trailer compressed air system (1) according to claim 1 or 2, wherein an electrical immobilizing device (56) is also integrated into the valve device (4) designed as a structural unit (5), which immobilizing device only allows the parking brake connection (7) to be ventilated when an operating variable fulfils a criterion.

8. Commercial vehicle trailer compressed air system (1) according to claim 7, wherein the electrical immobilization device (56) has an immobilization valve (57) which
a) is arranged upstream or downstream of the parking valve (10) and
b) has an immobilizing operating position in which a flow from the parking valve (10) to the EBS control unit (23) is not possible, but a flow from the EBS control unit (23) to the parking valve (10) is possible, and
c) has a mobilizing operating position in which both a flow from the parking valve (10) to the EBS control unit (23) and a flow from the EBS control unit (23) to the parking valve (10) are possible.

9. Commercial vehicle trailer compressed air system (1) according to claim 8, wherein the immobilizing valve (57) assumes the mobilizing operating position when the pressure in the parking brake line (107) leading to the EBS control unit (23) exceeds a threshold.

10. Commercial vehicle trailer compressed air system (1) according to claim 8 or 9, wherein the immobilizing valve (57) is electropneumatically pilot-controlled by a pilot valve (103), wherein the pilot valve (103) is preferably designed as an emergency brake function override valve (44).

11. Commercial vehicle trailer compressed air system (1) according to claim 10, wherein a pneumatic control connection (59/60) of the air mobilizing valve (57) alternatively
a) with the pilot valve (103) or emergency brake valve override valve (44) and
b) can be connected to a parking brake line (107).

12. Commercial vehicle trailer compressed air system (1) according to one of the preceding claims, wherein the emergency brake function override valve (44) is multifunctional in that it controls both the emergency brake valve override function and a reset-to-ride function of a lifting/lowering valve device (66).

13. Commercial vehicle trailer compressed air system (1) according to one of the preceding claims,
**wherein**
a) an electrically controlled level control valve device (84) is integrated into the valve device (4) and/or
b) an electrically controlled lift axle valve device (90) is integrated into the valve device (4).

14. Commercial vehicle trailer compressed air system (1) according to claim 3 or one of claims 4 to 13 with reference back to claim 3, wherein at least one pressure sensor (61; 63) is integrated into the valve device (4), which pressure sensor detects a pressure with which the piston (36) of the parking safety device (35) and/or the emergency braking device (41) is impacted.

15. Commercial vehicle trailer compressed air system (1) according to one of the preceding claims, **wherein** the valve device (4)
a) a wireless transmitting and/or receiving device (106) and/or
b) has an input and/or output device.

## Revendications

1. Système d'air comprimé (1) pour remorque de véhicule utilitaire, comprenant
a) un dispositif de valve (4) conçu comme une unité structurelle (5), comprenant
aa) une soupape de stationnement (10) à commande manuelle, qui présente
- un raccord de frein de stationnement (22),
- une position de stationnement dans laquelle le raccord de frein de stationnement (22) est purgé, et
- une position de desserrage dans laquelle le raccord de frein de stationnement (22) est ventilé,
ab) une soupape de manoeuvre (11) à commande manuelle, qui
- présente un raccord d'alimentation (14), un raccord de sortie (15) et un raccord de réservoir (19),
- prend automatiquement une position de déplacement lorsque le raccord d'alimentation (14) de la soupape de manoeuvre (11) à commande manuelle est sous pression, position dans laquelle le raccord de sortie (15) est relié au raccord d'alimentation (14) de la soupape de manoeuvre (11) à commande manuelle et le raccord de réservoir (19) est obturé, et
- peut être transférée manuellement vers une position de manoeuvre lorsque le raccord d'alimentation (14) de la soupape de manoeuvre (11) à commande manuelle est sans pression, position dans laquelle le raccord de sortie (15) de la soupape de manoeuvre (11) est relié au raccord de réservoir (19),
b) une unité de commande EBS (23) conçue comme une unité structurelle, qui est disposée à distance du dispositif de valve (4) et qui génère une pression de frein de service modulée,
c) l'unité de commande EBS (23) étant reliée à une tête d'accouplement de frein (3) en contournant le dispositif de valve (4),
d) le dispositif de valve (4) conçu comme une unité structurelle (5) comprenant un dispositif de freinage d'urgence (41) qui provoque automatiquement une purge d'un raccord de frein de stationnement (7) du dispositif de valve (4) lorsqu'une pression au niveau du raccord d'alimentation (14) de la soupape de manoeuvre (11) à commande manuelle chute ou passe en dessous d'une valeur seuil, ce qui déclenche une fonction de freinage d'urgence de la remorque par le biais de freins à ressort, et
e) l'unité de commande EBS (23) étant reliée au raccord de frein de stationnement (7) du dispositif de valve (4),
**caractérisé en ce que**
f) un dispositif électrique de désactivation de la fonction de freinage d'urgence (43) est intégré dans le dispositif de valve (4), lequel désactive la purge automatique du raccord de frein de stationnement (7) par le dispositif de freinage d'urgence (41),
g) dans lequel
ga) une soupape électrique de désactivation de la fonction de freinage d'urgence (44) relie, dans une position de désactivation, un raccord de commande (49) de la soupape de stationnement (10) à un réservoir (9), ce qui fait que la soupape de stationnement (10) est transférée dans la position de desserrage ou que la soupape de stationnement (10) reste dans la position de desserrage sans que la soupape de stationnement (10) puisse être transférée vers la position de stationnement par la fonction de freinage d'urgence, ou bien
gb) un actionneur électromagnétique (109) forme le dispositif de désactivation de la fonction de freinage d'urgence (43), et le dispositif de désactivation de la fonction de freinage d'urgence (43) assure la fonction de désactivation de la fonction de freinage d'urgence, sachant que, sans alimentation électrique d'un raccord de commande (111) de l'actionneur (109), une fonction de freinage d'urgence s'effectue par commutation de la soupape de stationnement (10) vers la position de stationnement et, par actionnement du dispositif de désactivation de la fonction de freinage d'urgence (43), la fonction de freinage d'urgence peut être interrompue de sorte que, jusqu'à nouvel ordre, la soupape de stationnement (10) reste dans la position de desserrage.

2. Système d'air comprimé (1) pour remorque de véhicule utilitaire selon la revendication 1,
dans lequel le dispositif de valve (4) intègre
a) un dispositif de soupape de levage et d'abaissement (66) à commande manuelle pour un levage et un abaissement arbitraires de la carrosserie du véhicule, et/ou
b) un dispositif de sécurité de stationnement (35), lequel provoque automatiquement une purge du raccord de frein de stationnement (7) du dispositif de valve (4) pour une pression au niveau d'un raccord d'alimentation (6) du dispositif de valve (4) qui est inférieure à une valeur seuil, et/ou
c) un capteur de pression (34, 61) pour détecter la pression au niveau d'un raccord d'alimentation (6) du dispositif de valve (4).

3. Système d'air comprimé (1) pour remorque de véhicule utilitaire selon l'une des revendications précédentes, dans lequel
a) le dispositif de freinage d'urgence (41) et/ou, dans le cas de la revendication 3 prise en dépendance de la revendication 2 dans la variante b), le dispositif de sécurité de stationnement (35) comporte une chambre de pression (39) alimentée en pression au niveau du raccord d'alimentation (6) du dispositif de valve (4), et un piston (36) délimitant la chambre de pression (39),
b) le piston (36) étant couplé à un poussoir (37) qui
ba) pour une pression au niveau du raccord d'alimentation (6) du dispositif de valve (4) inférieure à la valeur seuil, fait passer mécaniquement la soupape de stationnement (10) vers la position de stationnement et
bb) pour une pression au niveau du raccord d'alimentation (6) du dispositif de valve (4) supérieure à la valeur seuil, est découplé mécaniquement de la soupape de stationnement (10), de sorte que la soupape de stationnement (10) peut prendre la position de desserrage ou la position de stationnement et/ou conserver une position de stationnement ou une position de desserrage prise, selon l'actionnement manuel de la soupape de stationnement (10).

4. Système d'air comprimé (1) pour remorque de véhicule utilitaire selon la revendication 3, dans lequel
a) la chambre de pression (39) peut être reliée alternativement au raccord d'alimentation (6) du dispositif de valve (4) et à la soupape électrique de désactivation de la fonction de freinage d'urgence (44), et
b) en cas de chute de la pression au niveau du raccord d'alimentation (6) du dispositif de valve (4), la fonction de freinage d'urgence du dispositif de freinage d'urgence (41) est désactivée par le fait que la soupape de désactivation de la fonction de freinage d'urgence (44) relie la chambre de pression (39) à un réservoir (9).

5. Système d'air comprimé (1) pour remorque de véhicule utilitaire selon l'une des revendications 1 à 3,
dans lequel une soupape de décharge (53) est disposée dans une conduite d'alimentation ou de bifurcation (52) du dispositif de valve (4), qui relie entre eux un réservoir (9) pour un circuit de frein de service et un réservoir (51 ) pour un circuit de ressort pneumatique.

6. Système d'air comprimé (1) pour remorque de véhicule utilitaire selon l'une des revendications précédentes,
dans lequel l'unité de commande EBS (23) est reliée au dispositif de valve (4) par une ligne de commande (48), et l'unité de commande EBS (23) commande au moins une soupape électrique du dispositif de valve (4) par la ligne de commande (48).

7. Système d'air comprimé (1) pour remorque de véhicule utilitaire selon la revendication 1 ou 2,
dans lequel un dispositif électrique d'immobilisation (56) est également intégré dans le dispositif de valve (4) conçu comme une unité structurelle (5), lequel n'autorise la ventilation du raccord de frein de stationnement (7) que lorsqu'une grandeur de fonctionnement remplit un certain critère.

8. Système d'air comprimé (1) pour remorque de véhicule utilitaire selon la revendication 7,
dans lequel le dispositif électrique d'immobilisation (56) comprend une soupape d'immobilisation (57) qui
a) est placée en amont ou en aval de la soupape de stationnement (10) et
b) présente une position de fonctionnement d'immobilisation dans laquelle un écoulement de la soupape de stationnement (10) vers l'unité de commande EBS (23) n'est pas possible, mais un écoulement de l'unité de commande EBS (23) vers la soupape de stationnement (10) est possible, et
c) présente une position de fonctionnement de mobilisation dans laquelle un écoulement de la soupape de stationnement (10) vers l'unité de commande EBS (23) ainsi qu'un écoulement de l'unité de commande EBS (23) vers la soupape de stationnement (10) sont possibles.

9. Système d'air comprimé (1) pour remorque de véhicule utilitaire selon la revendication 8,
dans lequel la soupape d'immobilisation (57) prend la position de fonctionnement de mobilisation lorsque la pression dans la conduite de frein de stationnement (107) menant à l'unité de commande EBS (23) dépasse une valeur seuil.

10. Système d'air comprimé (1) pour remorque de véhicule utilitaire selon la revendication 8 ou 9,
dans lequel la soupape d'immobilisation (57) est pilotée par voie électropneumatique par une soupape pilote (103), la soupape pilote (103) étant de préférence conçue comme une soupape de désactivation de la fonction de freinage d'urgence (44).

11. Système d'air comprimé (1) pour remorque de véhicule utilitaire selon la revendication 10,
dans lequel un raccord de commande pneumatique (59/60) de la soupape d'immobilisation (57) peut être relié alternativement
a) à la soupape pilote (103) ou à la soupape de désactivation de la fonction de freinage d'urgence (44) et
b) à une conduite de frein de stationnement (107).

12. Système d'air comprimé (1) pour remorque de véhicule utilitaire selon l'une des revendications précédentes,
dans lequel la soupape de désactivation de la fonction de freinage d'urgence (44) est multifonctionnelle, en ce sens qu'elle commande à la fois la fonction de désactivation de la soupape de freinage d'urgence et une fonction de remise à zéro d'un dispositif de soupape de levage et d'abaissement (66).

13. Système d'air comprimé (1) pour remorque de véhicule utilitaire selon l'une des revendications précédentes, dans lequel
a) un dispositif de soupape de régulation de niveau (84) à commande électrique est intégré dans le dispositif de valve (4), et/ou
b) un dispositif de soupape d'essieu relevable (90) à commande électrique est intégré dans le dispositif de valve (4).

14. Système d'air comprimé (1) pour remorque de véhicule utilitaire selon la revendication 3 ou selon l'une des revendications 4 à 13 prises en dépendance de la revendication 3,
dans lequel au moins un capteur de pression (61 ; 63) est intégré dans le dispositif de valve (4), qui détecte une pression à laquelle est soumis le piston (36) du dispositif de sécurité de stationnement (35) et/ou du dispositif de freinage d'urgence (41).

15. Système d'air comprimé (1) pour remorque de véhicule utilitaire selon l'une des revendications précédentes,
dans lequel le dispositif de valve (4) comprend
a) un dispositif d'émission et/ou de réception sans fil (106) et/ou
b) un dispositif d'entrée et/ou de sortie.
